(19) Europäisches Patentamt
European Patent Office
Office européen des brevets

(11) EP 4 239 019 A1

(12) **EUROPEAN PATENT APPLICATION**

(43) Date of publication:
**06.09.2023 Bulletin 2023/36**

(21) Application number: **23185522.2**

(22) Date of filing: **11.03.2020**

(51) International Patent Classification (IPC):
***C08J 11/06*** *(2006.01)* ***B29B 17/00*** *(2006.01)*

(52) Cooperative Patent Classification (CPC):
**C08J 11/06; B29B 17/0026;** B29B 17/04; B29B 2017/042; B29B 2017/0468; B29B 2017/0476; B29K 2995/002; Y02W 30/52; Y02W 30/62

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.03.2019 US 201962824487 P**
**17.10.2019 US 201962916282 P**

(62) Document number(s) of the earlier application(s) in accordance with Art. 76 EPC:
**20718017.5 / 3 924 409**

(71) Applicant: **NIKE Innovate C.V.**
**Beaverton, OR 97005 (US)**

(72) Inventors:
- **GANTZ, Jeremy**
  **Beaverton, 97005 (US)**
- **WANG, Yuanmin**
  **Beaverton, 97005 (US)**

(74) Representative: **Abel & Imray LLP**
**Westpoint Building**
**James Street West**
**Bath BA1 2DA (GB)**

Remarks:
This application was filed on 14-07-2023 as a divisional application to the application mentioned under INID code 62.

# (54) RECYCLABLE STRUCTURALLY-COLORED STRUCTURES AND ARTICLES, AND METHODS OF RECYCLING STRUCTURES AND ARTICLES

(57) Provided is a recycled thermoplastic composition, comprising: a plurality of optical elements or fragments of optical elements dispersed in a first thermoplastic material, wherein the optical elements or fragments of optical elements do not impart an optical effect to the recycled thermoplastic composition. Also provided is a composition, comprising the recycled thermoplastic composition and a second thermoplastic material. Also provided is an article or a component thereof, comprising the recycled thermoplastic composition of any one of the preceding claims. Also provided are related products and methods.

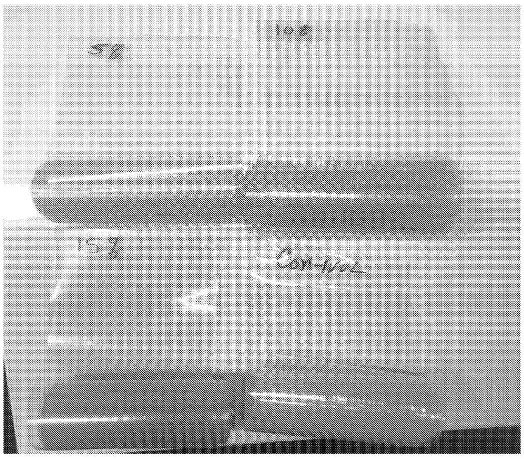


FIG. 3

EP 4 239 019 A1

## Description

### CROSS-REFERENCE TO RELATED APPLICATIONS

This application claims the benefit of and priority to U.S. Provisional Application Serial No. 62/824,487, having the title "RECYCLABLE STRUCTURALLY-COLORED STRUCTURES AND ARTICLES, AND METHODS OF RECYCLING STRUCTURES AND ARTICLES", filed on March 27, 2019, and to U.S. Provisional Application Serial No. 62/916,282, having the title "RECYCLABLE STRUCTURALLY-COLORED STRUCTURES AND ARTICLES, AND METHODS OF RECYCLING STRUCTURES AND ARTICLES", filed on October 17, 2019, which applications are hereby incorporated by reference in their respective entirety.

### BACKGROUND

Structural color is caused by the physical interaction of light with the micro- or nano-features of a surface and the bulk of the material as compared to color derived from the presence of dyes or pigments that absorb or reflect specific wavelengths of light based on the chemical properties of the dyes or pigments. Color from dyes and pigments can be problematic in a number of ways. For example, dyes and pigments and their associated chemistries for fabrication and incorporation into textiles may not be environmentally friendly.

### BRIEF DESCRIPTION OF THE FIGURES

In order that the disclosure may be well understood, there will now be described various forms thereof, given by way of example, reference being made to the accompanying drawings, in which:

> **Figures 1A-1M** illustrate footwear, apparel, athletic equipment, containers, electronic equipment, and vision wear that include the optical element of the present disclosure, while **Figures 1N-1P** illustrate additional details regarding different types of footwear.

> **Figures 2A-2B** illustrate side views of exemplary optical elements of the present disclosure.

> **Figure 3** shows images of exemplary film structures that include recycled thermoplastic compositions of the present disclosure, compared to a control film structure.

The drawings described herein are for illustration purposes only and are not intended to limit the scope of the present disclosure in any way.

### DETAILED DESCRIPTION

The present disclosure generally provides recyclable structurally-colored articles and components that that exhibit structural colors through the use of optical elements disposed on a thermoplastic material, where structural colors are visible colors produced, at least in part, through optical effects imparted by the optical element. The structural color imparts an aesthetically appealing color to the article, and when the structurally-colored article or component is recycled, it results in a recycled thermoplastic composition having an optical element or fragments thereof that impart essentially no optical effect, or a significantly reduced optical effect. In particular embodiments, the recycled thermoplastic composition can be characterized by one or more of a visible light reflectance or transmittance or color measurement that is within about 10 percent of visible light reflectance or transmittance or color measurement, respectively, of a similar composition without the optical element or fragments.

Recycling of colored articles that are colored with one or more colorants (e.g., pigments and dyes) in the thermoplastic material, or in a coating on the thermoplastic material, results in recycled materials that retain the colorants unless extra steps are taken to remove the colorant from the recycled material. Reuse of the recycled material can require finding appropriate uses of the colored recycled material, for example applications in which accumulation of the colorant is tolerable, or alternatively removing or modifying the colorant in the recycled material to form a recycled material with less color. In some instances, the colorants are not environmentally-friendly, so that removing colorant provides additional handling and disposal concerns.

In comparison, the present compositions, components and methods eliminate the need for reduction or removal of colorants before reusing the recycled materials. Through recycling, the optical element that imparts structural color to an article can be transformed to a recycled optical element or fragment of the optical element that is deteriorated and does not retain the ability to produce the same optical effects as the initial optical elements. As a result, the recycled

thermoplastic composition can be combined with another thermoplastic material with little or no impact to the reflectance, transmittance or color of the thermoplastic material.

The present disclosure is directed to a composition comprising a first thermoplastic material and a plurality of optical elements or fragments thereof dispersed in the first thermoplastic material. The first thermoplastic material has a first minimum visible light transmittance, or a first minimum visible light reflectance, or both as measured over the range of visible light having wavelengths from 400 nanometers to 700 nanometers, that is within about 10 percent or about 5 percent of a second minimum visible light transmittance, or a second minimum visible light reflectance, or both, respectively, of the composition. Optionally, the optical elements and fragments are deteriorated and do not impart an optical effect to the composition. Optionally, the optical elements and fragments do not impart an optical effect to the composition visible to a viewer having 20/20 visual acuity and normal color vision from a distance of about 1 meter from the composition.

Also, the present disclosure is directed to a component comprising a first structure comprising a recycled thermoplastic material and optionally at least about 1 percent by weight, or at least about 10 percent or 20 percent or 25 percent or 50 percent or 75 percent by weight of a second thermoplastic material. The recycled thermoplastic composition includes a first thermoplastic material, and a plurality of optical elements or fragments thereof dispersed in the first thermoplastic material. The first structure has a first minimum visible light transmittance, or a first minimum visible light reflectance, or both, as measured over the range of visible light having wavelengths from 400 nanometers to 700 nanometers, that is within about 10 percent or about 5 percent of a second minimum visible light transmittance, or a second minimum visible light reflectance, or both, respectively, of a second structure that comprises the first thermoplastic material but is substantially free of optical elements or fragments. Optionally, the optical elements and fragments are deteriorated and do not impart an optical effect to the component. Optionally, the optical elements and fragments do not impart an optical effect to the component visible to a viewer having 20/20 visual acuity and normal color vision from a distance of about 1 meter from the component.

Further embodiments of the present disclosure are directed to a colored or structurally-colored component comprising a first structure comprising a first thermoplastic material and having an optical element disposed on a first side of the first structure. The optical element imparts a structural color to the first structure. The first structure has a Recycle Optical Property Differential of greater than about 40 percent, or greater than about 50 percent, or greater than about 60 percent, or greater than about 70 percent. The Recycle Optical Property Differential, which is described further herein, is a measure of an optical property (e.g., visible light transmittance, or visible light reflectance, or color measurement) measured before and after recycling. The Recycle Optical Property Differential can be calculated using the following formula:

$$\frac{|(First\ Optical\ Property\ Value\ -\ Second\ Optical\ Property\ Value)|}{First\ Optical\ Property\ Value} \times 100\%$$

Further embodiments of the present disclosure are directed to a method of recycling which includes transforming a structurally-colored first article into a recycled thermoplastic composition, where the structurally-colored first article comprises a first thermoplastic material and a first side of the structurally-colored article has an optical element disposed thereon that imparts a structural color to the first side. The recycled thermoplastic composition comprises the first thermoplastic material and a plurality of optical elements or fragments thereof dispersed therein. The method further includes forming a second article of a second composition, wherein the second composition comprises from about 1 weight percent to about 100 weight percent of the recycled thermoplastic composition, and optionally from about 1 weight percent to about 99 weight percent of a second thermoplastic material.

According to some methods, the transforming step comprises: grinding the first article or portion thereof; cutting the first article or portion thereof; melting the first article or portion thereof; or a combination of the foregoing. Optionally, the optical elements and fragments are deteriorated and do not impart an optical effect to the recycled thermoplastic composition, the second composition or both. Optionally, the optical elements and fragments do not impart an optical effect to the recycled thermoplastic composition or second article or both visible to a viewer having 20/20 visual acuity and normal color vision from a distance of about 1 meter from the recycled thermoplastic composition or the second article, or both.

According to some methods, the first side of the first article has a first minimum visible light transmittance or first minimum visible light reflectance or both, as measured over the range of visible light having wavelengths from 400 nanometers to 700 nanometers; and the second article has a second minimum visible light transmittance or second minimum visible light reflectance or both that is less than 40 percent or less than 20 percent, or less than 10 percent, or less than 5 percent of the first minimum visible light transmittance or the first minimum visible light reflectance, or both, respectively.

According to some methods, the first side of the first article without the optical element has a third minimum

visible light transmittance or third minimum visible light reflectance or both, as measured over the range of visible light having wavelengths from 400 nanometers to 700 nanometers; and the second article has a second minimum visible light transmittance or second minimum visible light reflectance or both that is within about 10 percent or within about 5 percent of the third minimum visible light transmittance or the third minimum visible light reflectance, or both, respectively.

The present disclosure will be better understood upon reading the following numbered aspects, which should not be confused with the claims. Any of the numbered aspects below can, in some instances, be combined with aspects described elsewhere in this disclosure and such combinations are intended to form part of the disclosure.

Aspect 1. A composition comprising:

a first thermoplastic material, and a plurality of optical elements or fragments thereof dispersed in the first thermoplastic material, wherein optionally the optical elements and the fragments are deteriorated and do no impart an optical effect to the composition, or optionally the optical elements and the fragments do not impart an optical effect to the composition visible to a viewer having 20/20 visual acuity and normal color vision from a distance of about 1 meter from the composition;

wherein the first thermoplastic material has a first minimum visible light transmittance, or a first minimum visible light reflectance, or both, as measured over the range of visible light having wavelengths from 400 nanometers to 700 nanometers, that is within about 10 percent or about 5 percent of a second minimum visible light transmittance, or a second minimum visible light reflectance, or both, respectively, of the composition.

Aspect 2. The composition of Aspect 1, wherein the composition is a recycled thermoplastic composition.

Aspect 3. The composition of any one of the preceding Aspects, further comprising a second thermoplastic material

Aspect 4. The composition of any one of the preceding Aspects, wherein a polymeric component including all the polymers present in the second thermoplastic material is the same or substantially the same as a polymeric component including all the polymers present in the first thermoplastic material.

Aspect 5. The composition of any one of the preceding Aspects, wherein the composition comprises at least 25 weight percent, or at least 50 weight percent, or at least 75 weight percent, or at least 90 weight percent, or at least 95 weight percent of the second thermoplastic material.

Aspect 6. The composition of any one of the preceding Aspects, wherein the first minimum visible light transmittance or the second minimum visible light transmittance, or both, is at least 60 percent, or at least 70 percent or at least 80 percent, or at least 90 percent.

Aspect 7. The composition of any one of the preceding Aspects, wherein the composition or the first thermoplastic material or both are substantially free of colorants, optionally wherein the thermoplastic material is substantially free of pigments or dyes or both.

Aspect 8. The composition of any one of the preceding Aspects, wherein when measured according to the CIE 1976 color space under a given illumination condition at a first observation angle between -15 degrees and +60 degrees, the first thermoplastic material has a first color measurement having coordinates $L_1^*$ and $a_1^*$ and $b_1^*$, and composition has a second color measurement having coordinates $L_2^*$ and $a_2^*$ and $b_2^*$, wherein the $\Delta E^*_{ab}$ between the first color measurement and the second color measurement is less than or equal to about 4, where $\Delta E^*_{ab}= [(L_1^*-L_2^*)^2 + (a_1^*-a_2^*)^2 + (b_1^*-b_2^*)^2]^{1/2}$, or optionally the $\Delta E^*_{ab}$ is less than or equal to about 3, or optionally is less than or equal to about 2, or optionally is less than or equal to about 1.

Aspect 9. The composition of any one of the preceding Aspects, wherein the first composition comprises from about 0.01 percent to about 20 percent optical elements or fragments, or from about 1 percent to about 10 percent optical elements or fragments, based on the total weight of the first composition.

Aspect 10. The composition of any of the preceding Aspects, wherein the recycled thermoplastic composition comprises less than 20 weight percent, or less than 10 weight percent, or less than 5 weight percent, or less than 3 weight percent, or less than 2 weight percent, or less than 1 weight percent of the optical elements or fragments.

Aspect 11. The composition of any one of the preceding Aspects, wherein the plurality of optical elements or fragments comprise from about 1 percent to about 80 percent fragments, or from about 10 percent to about 50 percent fragments, based on the total weight of the plurality of optical elements or fragments.

Aspect 12. The composition of any one of the preceding Aspects, wherein the plurality of optical elements or fragments have an average size of less than 400 nanometers as measured along the largest dimension, optionally less than 300 nanometers, or less than 200 nanometers, or less than 100 nanometers.

Aspect 13. The composition of any one of the preceding Aspects, wherein the first thermoplastic material or the second thermoplastic material or both comprises at least one thermoplastic polymer, optionally at least one thermoplastic elastomer.

Aspect 14. The composition of any one of the preceding Aspects, wherein the at least one thermoplastic polymer

includes one or more thermoplastic polyurethanes, thermoplastic polyethers, thermoplastic polyesters, thermoplastic polyamides, thermoplastic polyolefins, thermoplastic co-polymers thereof, or a combination thereof.

Aspect 15. The composition of any one of the preceding Aspects, wherein the first thermoplastic material or the second thermoplastic material or both includes one or more thermoplastic polyurethanes.

Aspect 16. The composition of any one of the preceding Aspects, wherein a polymeric component including all the polymers present in the first thermoplastic material or the second thermoplastic material or both comprises or consists essentially of a polyester polyurethane copolymer.

Aspect 17. The composition of any one of the preceding Aspects, wherein a polymeric component including all the polymers present in the first thermoplastic material or the second thermoplastic material or both comprises or consists essentially of thermoplastic polyester.

Aspect 18. The composition of any one of the preceding Aspects, wherein a polymeric component including all the polymers present in the first thermoplastic material or the second thermoplastic material or both comprises or consists essentially of thermoplastic polyether.

Aspect 19. The composition of any one of the preceding Aspects, wherein a polymeric component including all the polymers present in the first thermoplastic material or the second thermoplastic material or both comprises or consists essentially of thermoplastic polyamides, including thermoplastic polyamide copolymers such as polyether block amide (PEBA) block copolymers.

Aspect 20. The composition of any one of the preceding Aspects, wherein a polymeric component including all the polymers present in the first thermoplastic material or the second thermoplastic material or both comprises or consists essentially of thermoplastic polyolefins, including thermoplastic polypropylenes, thermoplastic polyethylenes, and copolymers of ethylene or polypropylene, such as ethylene-vinyl acetate or ethylene-vinyl alcohol polymers.

Aspect 21. The composition of any one of the preceding Aspects, wherein the first thermoplastic material or the second thermoplastic material or both is substantially free of pigments or dyes, and optionally wherein a polymeric component including all the polymers present in the first thermoplastic material or the second thermoplastic material or both comprises or consists essentially of thermoplastic polyurethanes.

Aspect 22. The composition of any one of the preceding Aspects, wherein a polymeric component including all the polymers present in the second thermoplastic material comprises or consists essentially of thermoplastic polyurethanes, and a polymeric component including all the polymers present in the first thermoplastic material comprises or consists essentially of a mixture of thermoplastic polyurethanes and thermoplastic ethylene-vinyl alcohol polymers.

Aspect 23. A method of making an article, comprising forming the article using the composition of Aspects 1 to 22.

Aspect 24. A component comprising:

a first structure comprising a recycled thermoplastic composition and optionally at least about 1 percent by weight, or at least about 10 percent or 20 percent or 25 percent or 50 percent or 75 percent by weight of a second thermoplastic material;

wherein the recycled thermoplastic composition includes a first thermoplastic material, and a plurality of optical elements or fragments thereof dispersed in the first thermoplastic material, wherein optionally the optical elements and the fragments are deteriorated and do no impart an optical effect to the component, or optionally the optical elements and the fragments do not impart an optical effect to the component or the composition or both visible to a viewer having 20/20 visual acuity and normal color vision from a distance of about 1 meter from the component; and

wherein the first structure has a first minimum visible light transmittance, or a first minimum visible light reflectance, or both, as measured over the range of visible light having wavelengths from 400 nanometers to 700 nanometers, that is within about 10 percent or about 5 percent of a second minimum visible light transmittance, or a second minimum visible light reflectance, or both, respectively, of a second structure that comprises the first thermoplastic material but is substantially free of optical elements or fragments.

Aspect 25. The component of any one of the preceding Aspects, wherein the recycled thermoplastic composition is the product of recycling a structurally-colored article having a side, wherein an optical element is disposed on the side, and the side compositionally comprises the first thermoplastic material.

Aspect 26. The component of any one of the preceding Aspects, wherein the recycled thermoplastic composition comprises a ground, crushed, shredded, cut or reflowed thermoplastic composition including an optical element or fragments thereof.

Aspect 27. A method of making an article, comprising forming the article using the component of Aspects 23 to 26.

Aspect 28. A component comprising:

a first structure comprising a first composition;

wherein the first composition comprises a recycled thermoplastic composition and optionally at least about 1 percent by weight, or at least about 10 percent or 20 percent or 25 percent or 50 percent or 75 percent by weight of a second thermoplastic material;

wherein the recycled thermoplastic composition is the product of recycling of a structurally-colored article compositionally comprising a first thermoplastic material and having an optical element that imparts a structural color to the structurally-colored article; and

wherein the first structure has a first minimum visible light transmittance, or a first minimum visible light reflectance, or both, as measured over the range of visible light having wavelengths from 400 nanometers to 700 nanometers, that is within about 10 percent or about 5 percent of a second minimum visible light transmittance, or a second minimum visible light reflectance, or both, respectively, of a second structure that comprises the first thermoplastic material but is substantially free of optical elements or fragments.

Aspect 29. The component of any one of the preceding Aspects, wherein a polymeric component including all the polymers present in the second thermoplastic material is the same or substantially the same as a polymeric component including all the polymers present in the first thermoplastic material.

Aspect 30. The component of any one of the preceding Aspects, wherein the recycling comprises melting the structurally-colored article or a portion thereof, and forming a molten recycled thermoplastic composition including molten first thermoplastic material with the plurality of optical elements or fragments thereof dispersed in the molten first thermoplastic material, wherein optionally the optical elements and the fragments are deteriorated and do no impart an optical effect to the component, or optionally the optical elements and the fragments do not impart an optical effect to the component or the composition or both visible to a viewer having 20/20 visual acuity and normal color vision from a distance of about 1 meter from the component.

Aspect 31. The component of any one of the preceding Aspects, wherein the recycling comprises grinding, crushing, shredding or cutting the structurally-colored article or the portion thereof, and melting the ground, crushed, shredded or cut portions of the structurally colored article.

Aspect 32. The component of any one of the preceding Aspects, wherein the recycling comprises solidifying the molten recycled thermoplastic composition into a solid recycled thermoplastic composition.

Aspect 33. The component of any one of the preceding Aspects, wherein the recycling comprises extruding and solidifying the molten recycled thermoplastic composition into pellets.

Aspect 34. The component of any one of the preceding Aspects, wherein the recycling comprises injection molding and solidifying the molten recycled thermoplastic composition to form the component.

Aspect 35. The component of any one of the preceding Aspects, wherein the recycled thermoplastic composition comprises at least 25 weight percent, or at least 50 weight percent, or at least 75 weight percent, or at least 90 weight percent, or at least 95 weight percent of the first thermoplastic material.

Aspect 36. The component of any one of the preceding Aspects, wherein the first minimum visible light transmittance or the second minimum visible light transmittance, or both, is at least 60 percent, or at least 70 percent or at least 80 percent, or at least 90 percent.

Aspect 37. The component of any one of the preceding Aspects, wherein the recycled thermoplastic composition or the second thermoplastic material or both are substantially free of colorants, optionally wherein the recycled thermoplastic composition or the second thermoplastic material or both are substantially free of pigments or dyes or both.

Aspect 38. The component of any one of the preceding Aspects, wherein when measured according to the CIE 1976 color space under a given illumination condition at a first observation angle between -15 degrees and +60 degrees, the first structure has a first color measurement having coordinates $L_1^*$ and $a_1^*$ and $b_1^*$, and second structure has a second color measurement having coordinates $L_2^*$ and $a_2^*$ and $b_2^*$, wherein the $\Delta E^*_{ab}$ between the first color measurement and the second color measurement is less than or equal to about 4, where $\Delta E^*_{ab}= [(L_1^*-L_2^*)^2 + (a_1^*-a_2^*)^2 + (b_1^*-b_2^*)^2]^{1/2}$, or optionally the $\Delta E^*_{ab}$ is less than or equal to about 3, or optionally is less than or equal to about 2, or optionally is less than or equal to about 1.

Aspect 39. The component of any one of the preceding Aspects, wherein the first structure is a film or sheet.

Aspect 40. The component of any one of the preceding Aspects, wherein the structurally-colored article comprises a container, an article of apparel, an article of footwear, an article of sports or recreation gear, an article for entertainment, an article for outdoor recreation, an article for education, a home furnishing or decoration, an article of electronic equipment, an article for construction, or any component thereof, or any material resulting from the manufacture or assembly thereof.

Aspect 41. The component of any one of the preceding Aspects, wherein the component comprises a container, an article of apparel, an article of footwear, an article of sports or recreation gear, an article for entertainment, an article for outdoor recreation, an article for education, a home furnishing or decoration, an article of electronic equipment, an

article for construction, or any component thereof, or any material resulting from the manufacture or assembly thereof.

Aspect 42. The component of any one of the preceding Aspects, wherein the container comprises a bag, a bottle, a liquid receptacle, a package, a backpack, a suitcase, or a component thereof.

Aspect 43. The component of any one of the preceding Aspects, wherein the article of sports or recreation gear comprises athletic equipment, protective equipment, locomotive equipment, fishing equipment, hunting equipment, camping equipment, or a component thereof.

Aspect 44. The component of any one of the preceding Aspects, wherein the article of sports or recreation gear comprises a bat, a racket, a stick, a mallet, a golf club, a paddle, a striking implement, a ball, a puck, a golf bag, a baseball glove, a football glove, a soccer ball restriction structure, a pad, a helmet, a guard, a visor, a mask, goggles, a bicycle, a motorcycle, a skateboard, a car, a truck, a boat, a surfboard, a ski, a snowboard, a sail, a parachute, or component thereof.

Aspect 45. The component of any one of the preceding Aspects, wherein the article for entertainment comprises a toy, a game, or a component thereof.

Aspect 46. The component of any one of the preceding Aspects, wherein the article of apparel comprises a shirt, a jersey, pants, shorts, a glove, a sock, a hat, a cap, a jacket, an undergarment, eyewear, a timepiece, jewelry, or a component thereof.

Aspect 47. The component of any one of the preceding Aspects, wherein the home furnishing or decoration comprises upholstery for furniture, a bed covering, a table covering, a towel, a window covering, a flag, or a component thereof.

Aspect 48. The component of any one of the preceding Aspects, wherein the recycled thermoplastic composition does not impart an optical effect to the component, wherein the optical effect is a structural color, an iridescent appearance, or a metallic appearance.

Aspect 49. The component of any one of the preceding Aspects, wherein the recycled thermoplastic composition does not impart a structural color to the component.

Aspect 50. The component of any one of the preceding Aspects, wherein the first structure does not exhibit a structural color.

Aspect 51. The component of any one of the preceding Aspects, wherein the component further comprises an optical element disposed on at least a side of the first structure, and the optical element, as disposed on the first structure, imparts a structural color to the component.

Aspect 52. The component of any one of the preceding Aspects, wherein the recycled thermoplastic composition comprises from about 0.01 percent to about 20 percent optical elements or fragments, or from about 1 percent to about 10 percent optical elements or fragments, based on the total weight of the first composition.

Aspect 53. The component of any of the preceding Aspects, wherein the recycled thermoplastic composition comprises less than 20 weight percent, or less than 10 weight percent, or less than 5 weight percent, or less than 3 weight percent, or less than 2 weight percent, or less than 1 weight percent of the optical elements or fragments.

Aspect 54. The component of any one of the preceding Aspects, wherein the plurality of optical elements or fragments comprise from about 1 percent to about 80 percent fragments, or from about 10 percent to about 50 percent fragments, based on the total weight of the plurality of optical elements or fragments.

Aspect 55. The component of any one of the preceding Aspects, wherein the plurality of optical elements or fragments have an average size of less than 400 nanometers as measured along the largest dimension, optionally less than 300 nanometers, or less than 200 nanometers, or less than 100 nanometers

Aspect 56. The component of any one of the preceding Aspects, wherein a polymeric component including all the polymers present in the first thermoplastic material or the second thermoplastic material or both comprises at least one thermoplastic polymer, optionally at least one thermoplastic elastomer.

Aspect 57. The component of any one of the preceding Aspects, wherein a polymeric component including all the polymers present in the at least one thermoplastic polymer includes one or more thermoplastic polyurethanes, thermoplastic polyethers, thermoplastic polyesters, thermoplastic polyamides, thermoplastic polyolefins, thermoplastic co-polymers thereof, or a combination thereof.

Aspect 58. The component of any one of the preceding Aspects, wherein a polymeric component including all the polymers present in the first thermoplastic material or the second thermoplastic material or both includes one or more thermoplastic polyurethanes.

Aspect 59. The component of any one of the preceding Aspects, wherein a polymeric component including all the polymers present in the first thermoplastic material or the second thermoplastic material or both comprises or consists essentially of a polyester polyurethane copolymer.

Aspect 60. The component of any one of the preceding Aspects, wherein a polymeric component including all the polymers present in the first thermoplastic material or the second thermoplastic material or both comprises or consists essentially of thermoplastic polyester.

Aspect 61. The component of any one of the preceding Aspects, wherein a polymeric component including all

the polymers present in the first thermoplastic material or the second thermoplastic material or both comprises or consists essentially of thermoplastic polyether.

Aspect 62. The component of any one of the preceding Aspects, wherein a polymeric component including all the polymers present in the first thermoplastic material or the second thermoplastic material or both comprises or consists essentially of thermoplastic polyamides, including thermoplastic polyamide copolymers such as polyether block amide (PEBA) block copolymers.

Aspect 63. The component of any one of the preceding Aspects, wherein a polymeric component including all the polymers present in the first thermoplastic material or the second thermoplastic material or both comprises or consists essentially of thermoplastic polyolefins, including thermoplastic polypropylenes, thermoplastic polyethylenes, and co-polymers of ethylene or polypropylene, such as ethylene-vinyl acetate or ethylene-vinyl alcohol polymers.

Aspect 64. The component of any one of the preceding Aspects, wherein a polymeric component including all the polymers present in the first thermoplastic material or the second thermoplastic material or both comprises or consists essentially of thermoplastic polyurethanes.

Aspect 65. The component of any one of the preceding Aspects, wherein a polymeric component including all the polymers present in the second thermoplastic material comprises or consists essentially of thermoplastic polyurethanes, and a polymeric component including all the polymers present in the first thermoplastic material comprises or consists essentially of a mixture of thermoplastic polyurethanes and thermoplastic ethylene-vinyl alcohol polymers.

Aspect 66. The component of any one of the preceding Aspects, wherein the optical element is a coating on a side of the structurally-colored article.

Aspect 67. The component of any one of the preceding Aspects, wherein the optical element of the structurally-colored article comprises a plurality of optical layers.

Aspect 68. The component of any one of the preceding Aspects, wherein the optical element of the structurally-colored article comprises a single layer reflector, a single layer filter, a multilayer reflector, a multilayer filter, or a combination thereof.

Aspect 69. The component of any one of the preceding Aspects, wherein the optical element of the structurally-colored article has at least two optical layers, including at least two adjacent layers having different refractive indices.

Aspect 70. The component of any one of the preceding Aspects, wherein at least one of the layers of the optical element of the structurally-colored article has a thickness that is about one fourth of the wavelength of visible light to be reflected by the optical element to produce the structural color.

Aspect 71. The component of any one of the preceding Aspects, wherein at least one of the layers of the optical element of the structurally-colored article comprises a material selected from the group consisting of: silicon dioxide, titanium dioxide, zinc sulfide, magnesium fluoride, tantalum pentoxide, and a combination thereof.

Aspect 72. The component of any one of the preceding Aspects, further comprising a textured surface on a first side of the optical element of the structurally-colored article.

Aspect 73. The component of any one of the preceding Aspects, wherein the textured surface has a plurality of profile features and a plurality of flat areas.

Aspect 74. The component of any one of the preceding Aspects, wherein the textured surface includes a plurality of profile features and flat planar areas, wherein the profile features extend above the flat areas of the textured surface.

Aspect 75. The component of any one of the preceding Aspects, wherein the dimensions of the profile features, a shape of the profile features, a spacing among the plurality of the profile features, in combination with the optical layer impart the structural color.

Aspect 76. The component of any one of the preceding Aspects, wherein the profile features are in random positions relative to one another over an area of the textured surface having a surface area of at least five square millimeters.

Aspect 77. The component of any one of the preceding Aspects, wherein the spacing among the profile features reduces distortion effects of the profile features produced from interfering with one another when imparting the structural color of the structurally-colored article.

Aspect 78. The component of any one of the preceding Aspects, wherein the profile features and the flat areas result in at least one optical layer of the optical element having an undulating topography, wherein the optical layer has a planar region between neighboring depressions and/or elevations that is planar with the flat planar areas of the textured surface.

Aspect 79. The component of any one of the preceding Aspects, wherein the structurally-colored article comprises a first side, and the optical element is disposed on at least a portion of the first side.

Aspect 80. The component of any one of the preceding Aspects, wherein the structural color of the structurally-colored article is visible to a viewer having 20/20 visual acuity and normal color vision from a distance of about 1 meter from the first structure.

Aspect 81. The component of any one of the preceding Aspects, wherein the structural color of the structurally-colored article has a single hue.

Aspect 82. The component of any one of the preceding Aspects, wherein the structural color of the structurally-colored article includes two or more hues.

Aspect 83. The component of any one of the preceding Aspects, wherein the structural color of the structurally-colored article has the appearance of a single color or multiple colors.

Aspect 84. The component of any one of the preceding Aspects, wherein the optical element, as disposed on the structurally-colored article, imparts a structural color that, when measured according to the CIE 1976 color space under a given illumination condition at three observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, and a third color measurement at a third angle of observation having coordinates $L_3$* and $a_3$* and $b_3$*, wherein the $L_1$*, $L_2$*, and $L_3$* values may be the same or different, wherein the $a_1$*, $a_2$*, and $a_3$* coordinate values may be the same or different, wherein the $b_1$*, $b_2$*, and $b_3$* coordinate values may be the same or different, and wherein the range of the combined $a_1$*, $a_2$* and $a_3$* values is less than about 40% of the overall scale of possible a* values, optionally is less than about 30% of the overall scale of possible a* values, optionally is less than about 20% of the overall scale of possible a* values, or optionally is less than about 10% of the overall scale of possible a* values.

Aspect 85. The component of any one of the preceding Aspects, wherein the optical element, as disposed on the structurally-colored article, imparts a structural color that, when measured according to the CIE 1976 color space under a given illumination condition at three observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, and a third color measurement at a third angle of observation having coordinates $L_3$* and $a_3$* and $b_3$*, wherein the $L_1$*, $L_2$*, and $L_3$* values may be the same or different, wherein the $a_1$*, $a_2$*, and $a_3$* coordinate values may be the same or different, wherein the $b_1$*, $b_2$*, and $b_3$* coordinate values may be the same or different, and wherein the range of the combined $b_1$*, $b_2$* and $b_3$* values is less than about 40% of the overall scale of possible b* values, optionally is less than about 30% of the overall scale of possible b* values, optionally is less than about 20% of the overall scale of possible b* values, or optionally is 10% of the overall scale of possible b* values.

Aspect 86. The component of any one of the preceding Aspects, wherein the optical element, as disposed on the structurally-colored article, imparts a structural color that, when measured according to the CIE 1976 color space under a given illumination condition at two observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, wherein the $L_1$* and $L_2$* values may be the same or different, wherein the $a_1$* and $a_2$* coordinate values may be the same or different, wherein the $b_1$* and $b_2$* coordinate values may be the same or different, and wherein the $\Delta E^*_{ab}$ between the first color measurement and the second color measurement is less than or equal to about 100, where $\Delta E^*_{ab} = [(L_1^*-L_2^*)^2 + (a_1^*-a_2^*)^2 + (b_1^*-b_2^*)^2]^{1/2}$, optionally is less than or equal to about 80, or optionally is less than or equal to about 60.

Aspect 87. The component of any one of the preceding Aspects, wherein the optical element, as disposed on the structurally-colored article, imparts a structural color that, when measured according to the CIELCH color space under a given illumination condition at three observation angles between -15 degrees and +60 degrees, has a first color measurement at a first angle of observation having coordinates $L_1$* and $C_1$* and $h_1$°, and a second color measurement at a second angle of observation having coordinates $L_2$* and $C_2$* and $h_2$°, and a third color measurement at a third angle of observation having coordinates $L_3$* and $C_3$* and $h_3$°, wherein the $L_1$*, $L_2$*, and $L_3$* values may be the same or different, wherein the $C_1$*, $C_2$*, and $C_3$* coordinate values may be the same or different, wherein the $h_1$°, h2° and $h_3$° coordinate values may be the same or different, and wherein the range of the combined $h_1$°, $h_2$° and $h_3$° values is less than about 60 degrees, optionally is less than about 50 degrees, optionally is less than about 40 degrees, optionally is less than about 30 degrees, or optionally is less than about 20 degrees.

Aspect 88. The component of any one of the preceding Aspects, wherein the structural color of the structurally-colored article is iridescent.

Aspect 89. The component of any one of the preceding Aspects, wherein the structural color has limited iridescence.

Aspect 90. The component of any one of the preceding Aspects, wherein the structural color is not iridescent.

Aspect 91. The component of any one of the preceding Aspects, wherein the structural color has limited iridescence such that, when each color visible at each possible angle of observation is assigned to a single hue selected from the group consisting of the primary, secondary and tertiary colors on the red yellow blue (RYB) color wheel, all of the assigned hues fall into a single hue group, wherein the single hue group is one of a) green-yellow, yellow, and yellow-orange; b) yellow, yellow-orange and orange; c) yellow-orange, orange, and orange-red; d) orange-red, and red-purple; e) red, red-purple, and purple; f) red-purple, purple, and purple-blue; g) purple, purple-blue, and blue; h) purple-blue, blue, and blue-green; i) blue, blue-green and green; and j) blue-green, green, and green-yellow.

Aspect 92. The component of any one of the preceding Aspects, wherein the structural color having limited

iridescence is limited to two or three of the hues green-yellow, yellow, yellow-orange; or the hues purple-blue, blue, and blue-green; or the hues orange-red, red, and red-purple; or the hues blue-green, green, and green-yellow; or the hues yellow-orange, orange, and orange-red; or the hues red-purple, purple, and purple-blue.

Aspect 93. A method of making an article, comprising forming the article using the component of Aspects 28 to 92.

Aspect 94. A structurally-colored component comprising:

a first structure comprising a first thermoplastic material and having an optical element disposed on a first side of the first structure; wherein the optical element imparts a structural color to the first structure; and

wherein the first structure has a Recycle Optical Property Differential of greater than about 40 percent, or greater than about 50 percent, or greater than about 60 percent, or greater than about 70 percent.

Aspect 95. The structurally-colored component of any one of the preceding Aspects, wherein the first structure is a film or sheet.

Aspect 96. The structurally-colored component of any one of the preceding Aspects, wherein the structurally-colored component comprises a container, an article of apparel, an article of footwear, an article of sports or recreation gear, an article for entertainment, an article for outdoor recreation, an article for education, a home furnishing or decoration, an article of electronic equipment, an article for construction, or any component thereof, or any material resulting from the manufacture or assembly thereof.

Aspect 97. The structurally-colored component of any one of the preceding Aspects, wherein the container comprises a bag, a bottle, a liquid receptacle, a package, a backpack, a suitcase, or a component thereof.

Aspect 98. The structurally-colored component of any one of the preceding Aspects, wherein the article of sports or recreation gear comprises athletic equipment, protective equipment, locomotive equipment, fishing equipment, hunting equipment, camping equipment, or a component thereof.

Aspect 99. The structurally-colored component of any one of the preceding Aspects, wherein the article of sports or recreation gear comprises a bat, a racket, a stick, a mallet, a golf club, a paddle, a striking implement, a ball, a puck, a golf bag, a baseball glove, a football glove, a soccer ball restriction structure, a pad, a helmet, a guard, a visor, a mask, goggles, a bicycle, a motorcycle, a skateboard, a car, a truck, a boat, a surfboard, a ski, a snowboard, a sail, a parachute, or component thereof.

Aspect 100. The structurally-colored component of any one of the preceding Aspects, wherein the article for entertainment comprises a toy, a game, or a component thereof.

Aspect 101. The structurally-colored component of any one of the preceding Aspects, wherein the article of apparel comprises a shirt, a jersey, pants, shorts, a glove, a sock, a hat, a cap, a jacket, an undergarment, eyewear, a timepiece, jewelry, or a component thereof.

Aspect 102. The structurally-colored component of any one of the preceding Aspects, wherein the home furnishing or decoration comprises upholstery for furniture, a bed covering, a table covering, a towel, a window covering, a flag, or a component thereof.

Aspect 103. The structurally-colored component of any one of the preceding Aspects, wherein the first thermoplastic material comprises essentially no colorants, optionally wherein the first thermoplastic material is substantially free of pigments or dyes or both.

Aspect 104. The structurally-colored component of any one of the preceding Aspects, wherein the first thermoplastic material comprises a colorant, optionally wherein the first thermoplastic material comprises pigments or dyes or both.

Aspect 105. The structurally-colored component of any one of the preceding Aspects, wherein the colorant imparts a first color to the first structure in the absence of the optical element.

Aspect 106. The structurally-colored component of any one of the preceding Aspects, wherein a polymeric component including all the polymers present in the first thermoplastic material comprises at least one thermoplastic polymer, optionally at least one thermoplastic elastomer.

Aspect 107. The structurally-colored component of any one of the preceding Aspects, wherein a polymeric component including all the polymers present in the at least one thermoplastic polymer includes one or more thermoplastic polyurethanes, thermoplastic polyethers, thermoplastic polyesters, thermoplastic polyamides, thermoplastic polyolefins, thermoplastic co-polymers thereof, or a combination thereof.

Aspect 108. The structurally-colored component of any one of the preceding Aspects, wherein a polymeric component including all the polymers present in the first thermoplastic material includes one or more thermoplastic polyurethanes.

Aspect 109. The structurally-colored component of any one of the preceding Aspects, wherein a polymeric component including all the polymers present in the first thermoplastic material comprises or consists essentially of a polyester polyurethane copolymer.

Aspect 110. The structurally-colored component of any one of the preceding Aspects, wherein a polymeric component including all the polymers present in the first thermoplastic material comprises or consists essentially of thermoplastic polyester.

Aspect 111. The structurally-colored component of any one of the preceding Aspects, wherein a polymeric component including all the polymers present in the first thermoplastic material comprises or consists essentially of thermoplastic polyether.

Aspect 112. The structurally-colored component of any one of the preceding Aspects, wherein a polymeric component including all the polymers present in the first thermoplastic material comprises or consists essentially of thermoplastic polyamides, including thermoplastic polyamide copolymers such as polyether block amide (PEBA) block copolymers.

Aspect 113. The structurally-colored component of any one of the preceding Aspects, wherein a polymeric component including all the polymers present in the first thermoplastic material or the second thermoplastic material or both comprises or consists essentially of thermoplastic polyolefins, including thermoplastic polypropylenes, thermoplastic polyethylenes, and copolymers of ethylene or polypropylene, such as ethylene-vinyl acetate or ethylene-vinyl alcohol polymers.

Aspect 114. The structurally-colored component of any one of the preceding Aspects, wherein a polymeric component including all the polymers present in the first thermoplastic material comprises or consists essentially of thermoplastic polyurethanes.

Aspect 115. The structurally-colored component of any one of the preceding Aspects, wherein the optical element is a coating on the first side of the first structure.

Aspect 116. The structurally-colored component of any one of the preceding Aspects, wherein the optical element comprises a plurality of optical layers.

Aspect 117. The structurally-colored component of any one of the preceding Aspects, wherein the optical element comprises a single layer reflector, a single layer filter, a multilayer reflector, a multilayer filter, or a combination thereof.

Aspect 118. The structurally-colored component of any one of the preceding Aspects, wherein the optical element has at least two optical layers, including at least two adjacent layers having different refractive indices.

Aspect 119. The structurally-colored component of any one of the preceding Aspects, wherein at least one of the layers of the optical element has a thickness that is about one fourth of the wavelength of visible light to be reflected by the optical element to produce the structural color.

Aspect 120. The structurally-colored component of any one of the preceding Aspects, wherein at least one of the layers of the optical element comprises a material selected from the group consisting of: silicon dioxide, titanium dioxide, zinc sulfide, magnesium fluoride, tantalum pentoxide, and a combination thereof.

Aspect 121. The structurally-colored component of any one of the preceding Aspects, further comprising a textured surface on a first side of the optical element.

Aspect 122. The structurally-colored component of any one of the preceding Aspects, wherein the textured surface has a plurality of profile features and a plurality of flat areas.

Aspect 123. The structurally-colored component of any one of the preceding Aspects, wherein the textured surface includes a plurality of profile features and flat planar areas, wherein the profile features extend above the flat areas of the textured surface.

Aspect 124. The structurally-colored component of any one of the preceding Aspects, wherein the dimensions of the profile features, a shape of the profile features, a spacing among the plurality of the profile features, in combination with the optical layer impart the structural color.

Aspect 125. The structurally-colored component of any one of the preceding Aspects, wherein the profile features are in random positions relative to one another over an area of the textured surface having a surface area of at least five square millimeters.

Aspect 126. The structurally-colored component of any one of the preceding Aspects, wherein the spacing among the profile features reduces distortion effects of the profile features produced from interfering with one another when imparting the structural color of the structurally-colored component.

Aspect 127. The structurally-colored component of any one of the preceding Aspects, wherein the profile features and the flat areas result in at least one optical layer of the optical element having an undulating topography, wherein the optical layer has a planar region between neighboring depressions and/or elevations that is planar with the flat planar areas of the textured surface.

Aspect 128. The structurally-colored component of any one of the preceding Aspects, wherein the structural color of the first structure is visible to a viewer having 20/20 visual acuity and normal color vision from a distance of about 1 meter from the first structure.

Aspect 129. The structurally-colored component of any one of the preceding Aspects, wherein the structural color of the first structure has a single hue.

Aspect 130. The structurally-colored component of any one of the preceding Aspects, wherein the structural color of the first structure includes two or more hues.

Aspect 131. The structurally-colored component of any one of the preceding Aspects, wherein the structural color of the first structure has the appearance of a single color or multiple colors.

Aspect 132. The structurally-colored component of any one of the preceding Aspects, wherein the optical element, as disposed on the first structure, imparts a structural color that, when measured according to the CIE 1976 color space under a given illumination condition at three observation angles between -15 degrees and +60 degrees, has a first color measurement at a first angle of observation having coordinates $L_1^*$ and $a_1^*$ and $b_1^*$, and a second color measurement at a second angle of observation having coordinates $L_2^*$ and $a_2^*$ and $b_2^*$, and a third color measurement at a third angle of observation having coordinates $L_3^*$ and $a_3^*$ and $b_3^*$, wherein the $L_1^*$, $L_2^*$, and $L_3^*$ values may be the same or different, wherein the $a_1^*$, $a_2^*$, and $a_3^*$ coordinate values may be the same or different, wherein the $b_1^*$, $b_2^*$, and $b_3^*$ coordinate values may be the same or different, and wherein the range of the combined $a_1^*$, $a_2^*$ and $a_3^*$ values is less than about 40% of the overall scale of possible a* values, optionally is less than about 30% of the overall scale of possible a* values, optionally is less than about 20% of the overall scale of possible a* values, or optionally is less than about 10% of the overall scale of possible a* values.

Aspect 133. The structurally-colored component of any one of the preceding Aspects, wherein the optical element, as disposed on the first structure, imparts a structural color that, when measured according to the CIE 1976 color space under a given illumination condition at three observation angles between -15 degrees and +60 degrees, has a first color measurement at a first angle of observation having coordinates $L_1^*$ and $a_1^*$ and $b_1^*$, and a second color measurement at a second angle of observation having coordinates $L_2^*$ and $a_2^*$ and $b_2^*$, and a third color measurement at a third angle of observation having coordinates $L_3^*$ and $a_3^*$ and $b_3^*$, wherein the $L_1^*$, $L_2^*$, and $L_3^*$ values may be the same or different, wherein the $a_1^*$, $a_2^*$, and $a_3^*$ coordinate values may be the same or different, wherein the $b_1^*$, $b_2^*$, and $b_3^*$ coordinate values may be the same or different, and wherein the range of the combined $b_1^*$, $b_2^*$ and $b_3^*$ values is less than about 40% of the overall scale of possible b* values, optionally is less than about 30% of the overall scale of possible b* values, optionally is less than about 20% of the overall scale of possible b* values, or optionally is 10% of the overall scale of possible b* values.

Aspect 134. The structurally-colored component of any one of the preceding Aspects, wherein the optical element, as disposed on the first structure, imparts a structural color that, when measured according to the CIE 1976 color space under a given illumination condition at two observation angles between -15 degrees and +60 degrees, has a first color measurement at a first angle of observation having coordinates $L_1^*$ and $a_1^*$ and $b_1^*$, and a second color measurement at a second angle of observation having coordinates $L_2^*$ and $a_2^*$ and $b_2^*$, wherein the $L_1^*$ and $L_2^*$ values may be the same or different, wherein the $a_1^*$ and $a_2^*$ coordinate values may be the same or different, wherein the $b_1^*$ and $b_2^*$ coordinate values may be the same or different, and wherein the $\Delta E^*_{ab}$ between the first color measurement and the second color measurement is less than or equal to about 100, where $\Delta E^*_{ab} = [(L_1^*-L_2^*)^2 + (a_1^*-a_2^*)^2 + (b_1^*-b_2^*)^2]^{1/2}$, optionally is less than or equal to about 80, or optionally is less than or equal to about 60.

Aspect 135. The structurally-colored component of any one of the preceding Aspects, wherein the optical element, as disposed on the first structure, imparts a structural color that, when measured according to the CIELCH color space under a given illumination condition at three observation angles between -15 degrees and +60 degrees, has a first color measurement at a first angle of observation having coordinates $L_1^*$ and $C_1^*$ and $h_1°$, and a second color measurement at a second angle of observation having coordinates $L_2^*$ and $C_2^*$ and $h_2°$, and a third color measurement at a third angle of observation having coordinates $L_3^*$ and $C_3^*$ and $h_3°$, wherein the $L_1^*$, $L_2^*$, and $L_3^*$ values may be the same or different, wherein the $C_1^*$, $C_2^*$, and $C_3^*$ coordinate values may be the same or different, wherein the $h_1°$, $h_2°$ and $h_3°$ coordinate values may be the same or different, and wherein the range of the combined $h_1°$, $h_2°$ and $h_3°$ values is less than about 60 degrees, optionally is less than about 50 degrees, optionally is less than about 40 degrees, optionally is less than about 30 degrees, or optionally is less than about 20 degrees.

Aspect 136. The structurally-colored component of any one of the preceding Aspects, wherein the structural color of the first structure is iridescent.

Aspect 137. The structurally-colored component of any one of the preceding Aspects, wherein the structural color has limited iridescence.

Aspect 138. The structurally-colored component of any one of the preceding Aspects, wherein the structural color is not iridescent.

Aspect 139. The structurally-colored component of any one of the preceding Aspects, wherein the structural color has limited iridescence such that, when each color visible at each possible angle of observation is assigned to a single hue selected from the group consisting of the primary, secondary and tertiary colors on the red yellow blue (RYB) color wheel, all of the assigned hues fall into a single hue group, wherein the single hue group is one of a) green-yellow, yellow, and yellow-orange; b) yellow, yellow-orange and orange; c) yellow-orange, orange, and orange-red; d) orange-red, and red-purple; e) red, red-purple, and purple; f) red-purple, purple, and purple-blue; g) purple, purple-blue, and blue; h) purple-blue, blue, and blue-green; i) blue, blue-green and green; and j) blue-green, green, and green-yellow.

Aspect 140. The structurally-colored component of any one of the preceding Aspects, wherein the structural color having limited iridescence is limited to two or three of the hues green-yellow, yellow, yellow-orange; or the hues purple-blue, blue, and blue-green; or the hues orange-red, red, and red-purple; or the hues blue-green, green, and green-yellow; or the hues yellow-orange, orange, and orange-red; or the hues red-purple, purple, and purple-blue.
Aspect 141. A method of making an article, comprising forming the article using the structurally-colored component of any of Aspects 94 to 140.
Aspect 142. A colored component comprising:

a first structure comprising a first thermoplastic material and having a visible color;

wherein the first structure has a Recycle Optical Property Differential of greater than about 40 percent, or greater than about 50 percent, or greater than about 60 percent, or greater than about 70 percent.

Aspect 143. The colored component of any one of the preceding Aspects, wherein the first structure is a film or sheet.
Aspect 144. The colored component of any one of the preceding Aspects, wherein the visible color is a structural color.
Aspect 145. The colored component of any one of the preceding Aspects, wherein the first structure comprises an optical element disposed on the first side of the first structure, and the optical element imparts the structural color to the colored component.
Aspect 146. The colored component of any one of the preceding Aspects, wherein the component comprises a container, an article of apparel, an article of footwear, an article of sports or recreation gear, an article for entertainment, an article for outdoor recreation, an article for education, a home furnishing or decoration, an article of electronic equipment, an article for construction, or any component thereof, or any material resulting from the manufacture or assembly thereof.
Aspect 147. The colored component of any one of the preceding Aspects, wherein the container comprises a bag, a bottle, a liquid receptacle, a package, a backpack, a suitcase, or a component thereof.
Aspect 148. The colored component of any one of the preceding Aspects, wherein the article of sports or recreation gear comprises athletic equipment, protective equipment, locomotive equipment, fishing equipment, hunting equipment, camping equipment, or a component thereof.
Aspect 149. The colored component of any one of the preceding Aspects, wherein the article of sports or recreation gear comprises a bat, a racket, a stick, a mallet, a golf club, a paddle, a striking implement, a ball, a puck, a golf bag, a baseball glove, a football glove, a soccer ball restriction structure, a pad, a helmet, a guard, a visor, a mask, goggles, a bicycle, a motorcycle, a skateboard, a car, a truck, a boat, a surfboard, a ski, a snowboard, a sail, a parachute, or component thereof.
Aspect 150. The colored component of any one of the preceding Aspects, wherein the article for entertainment comprises a toy, a game, or a component thereof.
Aspect 151. The colored component of any one of the preceding Aspects, wherein the article of apparel comprises a shirt, a jersey, pants, shorts, a glove, a sock, a hat, a cap, a jacket, an undergarment, eyewear, a timepiece, jewelry, or a component thereof.
Aspect 152. The colored component of any one of the preceding Aspects, wherein the home furnishing or decoration comprises upholstery for furniture, a bed covering, a table covering, a towel, a
Aspect 153. The colored component of any one of the preceding Aspects, wherein the first thermoplastic material comprises essentially no colorants, optionally wherein the first thermoplastic material comprises essentially no pigments or dyes or both.
Aspect 154. The colored component of any one of the preceding Aspects, wherein the first thermoplastic material comprises a colorant, optionally wherein the first thermoplastic material comprises a pigment or dye or both.
Aspect 155. The colored component of any one of the preceding Aspects, wherein a polymeric component including all the polymers present in the first thermoplastic material comprises at least one thermoplastic polymer, optionally at least one thermoplastic elastomer.
Aspect 156. The colored component of any one of the preceding Aspects, wherein a polymeric component including all the polymers present in the at least one thermoplastic polymer includes one or more thermoplastic polyurethanes, thermoplastic polyethers, thermoplastic polyesters, thermoplastic polyamides, thermoplastic polyolefins, thermoplastic co-polymers thereof, or a combination thereof.
Aspect 157. The colored component of any one of the preceding Aspects, wherein a polymeric component including all the polymers present in the first thermoplastic material includes one or more thermoplastic polyurethanes.
Aspect 158. The colored component of any one of the preceding Aspects, wherein a polymeric component including all the polymers present in the first thermoplastic material comprises or consists essentially of a polyester

polyurethane copolymer.

Aspect 159. The colored component of any one of the preceding Aspects, wherein a polymeric component including all the polymers present in the first thermoplastic material comprises or consists essentially of thermoplastic polyester.

Aspect 160. The colored component of any one of the preceding Aspects, wherein a polymeric component including all the polymers present in the first thermoplastic material comprises or consists essentially of thermoplastic polyether.

Aspect 161. The colored component of any one of the preceding Aspects, wherein a polymeric component including all the polymers present in the first thermoplastic material comprises or consists essentially of thermoplastic polyamides, including thermoplastic polyamide copolymers such as polyether block amide (PEBA) block copolymers.

Aspect 162. The colored component of any one of the preceding Aspects, wherein a polymeric component including all the polymers present in the first thermoplastic material or the second thermoplastic material or both comprises or consists essentially of thermoplastic polyolefins, including thermoplastic polypropylenes, thermoplastic polyethylenes, and copolymers of ethylene or polypropylene, such as ethylene-vinyl acetate or ethylene-vinyl alcohol polymers.

Aspect 163. The colored component of any one of the preceding Aspects, wherein a polymeric component including all the polymers present in the first thermoplastic material comprises or consists essentially of thermoplastic polyurethanes.

Aspect 164. The colored component of any one of the preceding Aspects, wherein the optical element is a coating on the first side of the first structure.

Aspect 165. The colored component of any one of the preceding Aspects, wherein the optical element comprises a plurality of optical layers.

Aspect 166. The colored component of any one of the preceding Aspects, wherein the optical element comprises a single layer reflector, a single layer filter, a multilayer reflector, a multilayer filter, or a combination thereof.

Aspect 167. The colored component of any one of the preceding Aspects, wherein the optical element has at least two optical layers, including at least two adjacent layers having different refractive indices.

Aspect 168. The colored component of any one of the preceding Aspects, wherein at least one of the layers of the optical element has a thickness that is about one fourth of the wavelength of visible light to be reflected by the optical element to produce the structural color.

Aspect 169. The colored component of any one of the preceding Aspects, wherein at least one of the layers of the optical element comprises a material selected from the group consisting of: silicon dioxide, titanium dioxide, zinc sulfide, magnesium fluoride, tantalum pentoxide, and a combination thereof.

Aspect 170. The colored component of any one of the preceding Aspects, further comprising a textured surface on a first side of the optical element.

Aspect 171. The colored component of any one of the preceding Aspects, wherein the textured surface has a plurality of profile features and a plurality of flat areas.

Aspect 172. The colored component of any one of the preceding Aspects, wherein the textured surface includes a plurality of profile features and flat planar areas, wherein the profile features extend above the flat areas of the textured surface.

Aspect 173. The colored component of any one of the preceding Aspects, wherein the dimensions of the profile features, a shape of the profile features, a spacing among the plurality of the profile features, in combination with the optical layer impart the structural color.

Aspect 174. The colored component of any one of the preceding Aspects, wherein the profile features are in random positions relative to one another over an area of the textured surface having a surface area of at least five square millimeters.

Aspect 175. The colored component of any one of the preceding Aspects, wherein the spacing among the profile features reduces distortion effects of the profile features produced from interfering with one another when imparting the structural color to the first structure.

Aspect 176. The colored component of any one of the preceding Aspects, wherein the profile features and the flat areas result in at least one optical layer of the optical element having an undulating topography, wherein the optical layer has a planar region between neighboring depressions and/or elevations that is planar with the flat planar areas of the textured surface.

Aspect 177. The colored component of any one of the preceding Aspects, wherein the structural color of the first structure is visible to a viewer having 20/20 visual acuity and normal color vision from a distance of about 1 meter from the first structure.

Aspect 178. The colored component of any one of the preceding Aspects, wherein the structural color of the first structure has a single hue.

Aspect 179. The colored component of any one of the preceding Aspects, wherein the structural color of the first structure includes two or more hues.

Aspect 180. The colored component of any one of the preceding Aspects, wherein the structural color of the first structure has the appearance of a single color or multiple colors.

Aspect 181. The colored component of any one of the preceding Aspects, wherein the optical element, as disposed on the first structure, imparts a structural color that, when measured according to the CIE 1976 color space under a given illumination condition at three observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, and a third color measurement at a third angle of observation having coordinates $L_3$* and $a_3$* and $b_3$*, wherein the $L_1$*, $L_2$*, and $L_3$* values may be the same or different, wherein the $a_1$*, $a_2$*, and $a_3$* coordinate values may be the same or different, wherein the $b_1$*, $b_2$*, and $b_3$* coordinate values may be the same or different, and wherein the range of the combined $a_1$*, $a_2$* and $a_3$* values is less than about 40% of the overall scale of possible a* values, optionally is less than about 30% of the overall scale of possible a* values, optionally is less than about 20% of the overall scale of possible a* values, or optionally is less than about 10% of the overall scale of possible a* values. The colored component of any one of the preceding Aspects, wherein the optical element, as disposed on the first structure, imparts a structural color that, when measured according to the CIE 1976 color space under a given illumination condition at three observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, and a third color measurement at a third angle of observation having coordinates $L_3$* and $a_3$* and $b_3$*, wherein the $L_1$*, $L_2$*, and $L_3$* values may be the same or different, wherein the $a_1$*, $a_2$*, and $a_3$* coordinate values may be the same or different, wherein the $b_1$*, $b_2$*, and $b_3$* coordinate values may be the same or different, and wherein the range of the combined $b_1$*, $b_2$* and $b_3$* values is less than about 40% of the overall scale of possible b* values, optionally is less than about 30% of the overall scale of possible b* values, optionally is less than about 20% of the overall scale of possible b* values, or optionally is 10% of the overall scale of possible b* values.

Aspect 183. The colored component of any one of the preceding Aspects, wherein the optical element, as disposed on the first structure, imparts a structural color that, when measured according to the CIE 1976 color space under a given illumination condition at two observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, wherein the $L_1$* and $L_2$* values may be the same or different, wherein the a,* and $a_2$* coordinate values may be the same or different, wherein the $b_1$* and $b_2$* coordinate values may be the same or different, and wherein the $\Delta E^*_{ab}$ between the first color measurement and the second color measurement is less than or equal to about 100, where $\Delta E^*_{ab} = [(L_1^*-L_2^*)^2 + (a_1^*-a_2^*)^2 + (b_1^*-b_2^*)^2]^{1/2}$, optionally is less than or equal to about 80, or optionally is less than or equal to about 60.

Aspect 184. The colored component of any one of the preceding Aspects, wherein the optical element, as disposed on the first structure, imparts a structural color that, when measured according to the CIELCH color space under a given illumination condition at three observation angles between -15 degrees and +60 degrees, has a first color measurement at a first angle of observation having coordinates $L_1$* and $C_1$* and $h_1$°, and a second color measurement at a second angle of observation having coordinates $L_2$* and $C_2$* and $h_2$°, and a third color measurement at a third angle of observation having coordinates $L_3$* and $C_3$* and $h_3$°, wherein the $L_1$*, $L_2$*, and $L_3$* values may be the same or different, wherein the $C_1$*, $C_2$*, and $C_3$* coordinate values may be the same or different, wherein the $h_1$°, $h_2$° and $h_3$° coordinate values may be the same or different, and wherein the range of the combined $h_1$°, $h_2$° and $h_3$° values is less than about 60 degrees, optionally is less than about 50 degrees, optionally is less than about 40 degrees, optionally is less than about 30 degrees, or optionally is less than about 20 degrees.

Aspect 185. The colored component of any one of the preceding Aspects, wherein the structural color of the first structure is iridescent.

Aspect 186. The colored component of any one of the preceding Aspects, wherein the structural color has limited iridescence.

Aspect 187. The colored component of any one of the preceding Aspects, wherein the structural color is not iridescent.

Aspect 188. The colored component of any one of the preceding Aspects, wherein the structural color has limited iridescence such that, when each color visible at each possible angle of observation is assigned to a single hue selected from the group consisting of the primary, secondary and tertiary colors on the red yellow blue (RYB) color wheel, all of the assigned hues fall into a single hue group, wherein the single hue group is one of a) green-yellow, yellow, and yellow-orange; b) yellow, yellow-orange and orange; c) yellow-orange, orange, and orange-red; d) orange-red, and red-purple; e) red, red-purple, and purple; f) red-purple, purple, and purple-blue; g) purple, purple-blue, and blue; h) purple-blue, blue, and blue-green; i) blue, blue-green and green; and j) blue-green, green, and green-yellow.

Aspect 189. The colored component of any one of the preceding Aspects, wherein the structural color having limited iridescence is limited to two or three of the hues green-yellow, yellow, yellow-orange; or the hues purple-blue, blue, and blue-green; or the hues orange-red, red, and red-purple; or the hues blue-green, green, and green-yellow; or

the hues yellow-orange, orange, and orange-red; or the hues red-purple, purple, and purple-blue.

Aspect 190. A method of making an article, comprising forming the article using the colored component of any of Aspects 142 to 189.

Aspect 191. A method of recycling, the method comprising:

transforming a structurally-colored first article into a recycled thermoplastic composition, wherein the structurally-colored first article comprises a first thermoplastic material and a first side of the structurally-colored article has an optical element disposed thereon that imparts a structural color to the first side;

wherein the recycled thermoplastic composition comprises the first thermoplastic material and a plurality of optical elements or fragments thereof dispersed therein, wherein optionally the optical elements and the fragments are deteriorated and do no impart an optical effect to the composition, or optionally wherein the optical elements and the fragments do not impart an optical effect to the composition visible to a viewer having 20/20 visual acuity and normal color vision from a distance of about 1 meter from the composition; and

forming a second article of a second composition, wherein the second composition comprises from about 1 weight percent to about 100 weight percent of the recycled thermoplastic composition, and optionally from about 1 weight percent to about 99 weight percent of a second thermoplastic material, optionally wherein the optical elements and the fragments in the composition do not impart an optical effect to the second article visible to a viewer having 20/20 visual acuity and normal color vision from a distance of about 1 meter from the second article.

Aspect 192. The method of any one of the preceding Aspects, wherein

the first side of the first article has a first minimum visible light transmittance or first minimum visible light reflectance or both, as measured over the range of visible light having wavelengths from 400 nanometers to 700 nanometers; and

the second article has a second minimum visible light transmittance or second minimum visible light reflectance or both that is less than 40 percent or less than 20 percent, or less than 10 percent, or less than 5 percent of the first minimum visible light transmittance or the first minimum visible light reflectance, or both, respectively.

Aspect 193. The method of any one of the preceding Aspects, wherein

the first side of the first article without the optical element has a third minimum visible light transmittance or third minimum visible light reflectance or both, as measured over the range of visible light having wavelengths from 400 nanometers to 700 nanometers; and

the second article has a second minimum visible light transmittance or second minimum visible light reflectance or both that is within about 10 percent or within about 5 percent of the third minimum visible light transmittance or the third minimum visible light reflectance, or both, respectively.

Aspect 194. The method of any one of the preceding Aspects, wherein the second article has a second minimum visible light transmittance is at least 10 percent, or at least 20 percent, or at least 40 percent, or at least 60 percent, or at least 80 percent.

Aspect 195. The method of any one of the preceding Aspects, wherein the transforming step comprises: grinding the first article or portion thereof; cutting the first article or portion thereof; melting the first article or portion thereof; or a combination of the foregoing.

Aspect 196. The method of any one of the preceding Aspects, wherein the recycled thermoplastic composition is in solid or molten form.

Aspect 197. The method of any one of the preceding Aspects, wherein the recycled thermoplastic composition is in the form of a pellet, optionally an extruded pellet.

Aspect 198. The method of any one of the preceding Aspects, wherein the recycled thermoplastic composition comprises a plurality of fragments of the first article.

Aspect 199. The method of any one of the preceding Aspects, further comprising mixing the recycled thermoplastic composition with an additional quantity of the first thermoplastic material, or with the optional second thermoplastic material, or both.

Aspect 200. The method of any one of the preceding Aspects, further comprising increasing the temperature of the recycled thermoplastic composition to a temperature that is above the softening point of the first thermoplastic material to provide a molten recycled thermoplastic composition.

Aspect 201. The method of any one of the preceding Aspects, wherein the structurally-colored first article is a film or sheet.

Aspect 202. The method of any one of the preceding Aspects, wherein the structurally-colored first article comprises a container, an article of apparel, an article of footwear, an article of sports or recreation gear, an article for entertainment, an article for outdoor recreation, an article for education, a home furnishing or decoration, an article of electronic equipment, an article for construction, or any component thereof, or any material resulting from the manufacture or assembly thereof.

Aspect 203. The method of any one of the preceding Aspects, wherein the container comprises a bag, a bottle, a liquid receptacle, a package, a backpack, a suitcase, or a component thereof.

Aspect 204. The method of any one of the preceding Aspects, wherein the article of sports or recreation gear comprises athletic equipment, protective equipment, locomotive equipment, fishing equipment, hunting equipment, camping equipment, or a component thereof.

Aspect 205. The method of any one of the preceding Aspects, wherein the article of sports or recreation gear comprises a bat, a racket, a stick, a mallet, a golf club, a paddle, a striking implement, a ball, a puck, a golf bag, a baseball glove, a football glove, a soccer ball restriction structure, a pad, a helmet, a guard, a visor, a mask, goggles, a bicycle, a motorcycle, a skateboard, a car, a truck, a boat, a surfboard, a ski, a snowboard, a sail, a parachute, or component thereof.

Aspect 206. The method of any one of the preceding Aspects, wherein the article for entertainment comprises a toy, a game, or a component thereof.

Aspect 207. The method of any one of the preceding Aspects, wherein the article of apparel comprises a shirt, a jersey, pants, shorts, a glove, a sock, a hat, a cap, a jacket, an undergarment, eyewear, a timepiece, jewelry, or a component thereof.

Aspect 208. The method of any one of the preceding Aspects, wherein the home furnishing or decoration comprises upholstery for furniture, a bed covering, a table covering, a towel, a window covering, a flag, or a component thereof.

Aspect 209. The method of any one of the preceding Aspects, wherein the first thermoplastic material comprises essentially no colorants, optionally wherein the first thermoplastic material comprises essentially no pigments or dyes or both.

Aspect 210. The method of any one of the preceding Aspects, wherein the first thermoplastic material comprises a colorant, optionally wherein the first thermoplastic material comprises a pigment or dye or both.

Aspect 211. The method of any one of the preceding Aspects, wherein the method does not include altering, modifying, reducing, or removing a colorant.

Aspect 212. The method of any one of the preceding Aspects, wherein the colorant imparts a first color to the first article in the absence of the optical element and imparts a second color to the second article wherein the first color and the second color have one or more of the same hue, value, or chroma.

Aspect 213. The method of any one of the preceding Aspects, wherein when measured according to the CIE 1976 color space under a given illumination condition at a first observation angle between -15 degrees and +60 degrees, the first article without the optical element has a first color measurement having coordinates $L_1^*$ and $a_1^*$ and $b_1^*$, and the second article has a second color measurement having coordinates $L_2^*$ and $a_2^*$ and $b_2^*$, wherein the $AE^*_{ab}$ between the first color measurement and the second color measurement is less than or equal to about 4, where $\Delta E^*_{ab} = [(L_1^* - L_2^*)^2 + (a_1^* - a_2^*)^2 + (b_1^* - b_2^*)^2]^{1/2}$, or optionally the $\Delta E^*_{ab}$ is less than or equal to about 3, or optionally is less than or equal to about 2, or optionally is less than or equal to about 1.

Aspect 214. The method of any one of the preceding Aspects, wherein a polymeric component including all the polymers present in the first thermoplastic material or the second thermoplastic material or both comprises at least one thermoplastic polymer, optionally at least one thermoplastic elastomer.

Aspect 215. The method of any one of the preceding Aspects, wherein a polymeric component including all the polymers present in the at least one thermoplastic polymer includes one or more thermoplastic polyurethanes, thermoplastic polyethers, thermoplastic polyesters, thermoplastic polyamides, thermoplastic polyolefins, thermoplastic co-polymers thereof, or a combination thereof.

Aspect 216. The method of any one of the preceding Aspects, wherein a polymeric component including all the polymers present in the first thermoplastic material or the second thermoplastic material or both includes one or more thermoplastic polyurethanes.

Aspect 217. The method of any one of the preceding Aspects, wherein a polymeric component including all the polymers present in the first thermoplastic material or the second thermoplastic material or both comprises or consists essentially of a polyester polyurethane copolymer.

Aspect 218. The method of any one of the preceding Aspects, wherein a polymeric component including all the polymers present in the first thermoplastic material or the second thermoplastic material or both comprises or consists essentially of thermoplastic polyester.

Aspect 219. The method of any one of the preceding Aspects, wherein a polymeric component including all the polymers present in the first thermoplastic material or the second thermoplastic material or both comprises or consists essentially of thermoplastic polyether.

Aspect 220. The method of any one of the preceding Aspects, wherein a polymeric component including all the polymers present in the first thermoplastic material or the second thermoplastic material or both comprises or consists essentially of thermoplastic polyamides, including thermoplastic polyamide copolymers such as polyether block amide (PEBA) block copolymers.

Aspect 221. The method of any one of the preceding Aspects, wherein a polymeric component including all the polymers present in the first thermoplastic material or the second thermoplastic material or both comprises or consists essentially of thermoplastic polyolefins, including thermoplastic polypropylenes, thermoplastic polyethylenes, and copolymers of ethylene or polypropylene, such as ethylene-vinyl acetate or ethylene-vinyl alcohol polymers.

Aspect 222. The method of any one of the preceding Aspects, wherein a polymeric component including all the polymers present in the first thermoplastic material or the second thermoplastic material or both comprises or consists essentially of thermoplastic polyurethanes.

Aspect 223. The method of any one of the preceding Aspects, wherein a polymeric component including all the polymers present in the second thermoplastic material comprises or consists essentially of thermoplastic polyurethanes, and a polymeric component including all the polymers present in the first thermoplastic material comprises or consists essentially of a mixture of thermoplastic polyurethanes and thermoplastic ethylene-vinyl alcohol polymers.

Aspect 224. The method of any one of the preceding Aspects, wherein the optical element of the structurally-colored first article comprises a plurality of optical layers.

Aspect 225. The method of any one of the preceding Aspects, wherein the optical element of the structurally-colored first article comprises a single layer reflector, a single layer filter, a multilayer reflector, a multilayer filter, or a combination thereof.

Aspect 226. The method of any one of the preceding Aspects, wherein the optical element of the structurally-colored first article has at least two optical layers, including at least two adjacent layers having different refractive indices.

Aspect 227. The method of any one of the preceding Aspects, wherein at least one of the layers of the optical element of the structurally-colored first article comprises a material selected from the group consisting of: silicon dioxide, titanium dioxide, zinc sulfide, magnesium fluoride, tantalum pentoxide, and a combination thereof.

Aspect 228. The method of any one of the preceding Aspects, further comprising a textured surface on a first side of the optical element of the structurally-colored first article.

Aspect 229. The method of any one of the preceding Aspects, wherein the textured surface has a plurality of profile features and a plurality of flat areas.

Aspect 230. The method of any one of the preceding Aspects, wherein the textured surface includes a plurality of profile features and flat planar areas, wherein the profile features extend above the flat areas of the textured surface.

Aspect 231. The method of any one of the preceding Aspects, wherein the dimensions of the profile features, a shape of the profile features, a spacing among the plurality of the profile features, in combination with the optical layer impart the structural color.

Aspect 232. The method of any one of the preceding Aspects, wherein the profile features are in random positions relative to one another over an area of the textured surface having a surface area of at least five square millimeters.

Aspect 233. The method of any one of the preceding Aspects, wherein the spacing among the profile features reduces distortion effects of the profile features produced from interfering with one another when imparting the structural color of the structurally-colored first article.

Aspect 234. The method of any one of the preceding Aspects, wherein the profile features and the flat areas result in at least one optical layer of the optical element having an undulating topography, wherein the optical layer has a planar region between neighboring depressions and/or elevations that is planar with the flat planar areas of the textured surface.

Aspect 235. The method of any one of the preceding Aspects, wherein the recycled thermoplastic composition comprises a plurality of optical fragments that are in solid or molten form.

Aspect 236. The method of any of the preceding Aspects, wherein the recycled thermoplastic composition comprises less than 20 weight percent, or less than 10 weight percent, or less than 5 weight percent, or less than 3 weight percent, or less than 2 weight percent, or less than 1 weight percent of the optical elements or fragments.

Aspect 237. The method of any of the preceding Aspects, wherein the second composition comprises from about 0.01 percent to about 20 percent optical elements or fragments, or from about 1 percent to about 10 percent optical elements or fragments, based on the total weight of the second composition.

Aspect 238. The method of any one of the preceding Aspects, wherein the plurality of optical elements or fragments comprise from about 1 percent to about 80 percent fragments, or from about 10 percent to about 50 percent fragments, based on the total weight of the plurality of optical elements or fragments.

Aspect 239. The method of any one of the preceding Aspects, wherein the plurality of optical elements or fragments have an average size of less than 400 nanometers as measured along the largest dimension, optionally less than 300 nanometers, or less than 200 nanometers, or less than 100 nanometers

Aspect 240. The method of any one of the preceding Aspects, wherein the structural color of the first article is visible to a viewer having 20/20 visual acuity and normal color vision from a distance of about 1 meter from the first structure.

Aspect 241. The method of any one of the preceding Aspects, wherein the structural color of the first article has a single hue.

Aspect 242. The method of any one of the preceding Aspects, wherein the structural color of the first article includes two or more hues.

Aspect 243. The method of any one of the preceding Aspects, wherein the structural color of the first article has the appearance of a single color or multiple colors.

Aspect 244. The method of any one of the preceding Aspects, wherein the optical element, as disposed on the first article, imparts a structural color that, when measured according to the CIE 1976 color space under a given illumination condition at three observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, and a third color measurement at a third angle of observation having coordinates $L_3$* and $a_3$* and $b_3$*, wherein the $L_1$*, $L_2$*, and $L_3$* values may be the same or different, wherein the $a_1$*, $a_2$*, and $a_3$* coordinate values may be the same or different, wherein the $b_1$*, $b_2$*, and $b_3$* coordinate values may be the same or different, and wherein the range of the combined $a_1$*, $a_2$* and $a_3$* values is less than about 40% of the overall scale of possible a* values, optionally is less than about 30% of the overall scale of possible a* values, optionally is less than about 20% of the overall scale of possible a* values, or optionally is less than about 10% of the overall scale of possible a* values.

Aspect 245. The method of any one of the preceding Aspects, wherein the optical element, as disposed on the first article, imparts a structural color that, when measured according to the CIE 1976 color space under a given illumination condition at three observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, and a third color measurement at a third angle of observation having coordinates $L_3$* and $a_3$* and $b_3$*, wherein the $L_1$*, $L_2$*, and $L_3$* values may be the same or different, wherein the $a_1$*, $a_2$*, and $a_3$* coordinate values may be the same or different, wherein the $b_1$*, $b_2$*, and $b_3$* coordinate values may be the same or different, and wherein the range of the combined $b_1$*, $b_2$* and $b_3$* values is less than about 40% of the overall scale of possible b* values, optionally is less than about 30% of the overall scale of possible b* values, optionally is less than about 20% of the overall scale of possible b* values, or optionally is 10% of the overall scale of possible b* values.

Aspect 246. The method of any one of the preceding Aspects, wherein the optical element, as disposed on the first article, imparts a structural color that, when measured according to the CIE 1976 color space under a given illumination condition at two observation angles between -15 degrees and +60 degrees, has a first color measurement at a first angle of observation having coordinates $L_1$* and $a_1$* and $b_1$*, and a second color measurement at a second angle of observation having coordinates $L_2$* and $a_2$* and $b_2$*, wherein the $L_1$* and $L_2$* values may be the same or different, wherein the $a_1$* and $a_2$* coordinate values may be the same or different, wherein the $b_1$* and $b_2$* coordinate values may be the same or different, and wherein the $AE^*_{ab}$ between the first color measurement and the second color measurement is less than or equal to about 100, where $\Delta E^*_{ab} = [(L_1^*-L_2^*)^2 + (a_1^*-a_2^*)^2 + (b_1^*-b_2^*)^2]^{1/2}$, optionally is less than or equal to about 80, or optionally is less than or equal to about 60.

Aspect 247. The method of any one of the preceding Aspects, wherein the optical element, as disposed on the first article, imparts a structural color that, when measured according to the CIELCH color space under a given illumination condition at three observation angles between -15 degrees and +60 degrees, has a first color measurement at a first angle of observation having coordinates $L_1$* and $C_1$* and $h_1$°, and a second color measurement at a second angle of observation having coordinates $L_2$* and $C_2$* and $h_2$°, and a third color measurement at a third angle of observation having coordinates $L_3$* and $C_3$* and $h_3$°, wherein the $L_1$*, $L_2$*, and $L_3$* values may be the same or different, wherein the $C_1$*, $C_2$*, and $C_3$* coordinate values may be the same or different, wherein the $h_1$°, $h_2$° and $h_3$° coordinate values may be the same or different, and wherein the range of the combined $h_1$°, $h_2$° and $h_3$° values is less than about 60 degrees, optionally is less than about 50 degrees, optionally is less than about 40 degrees, optionally is less than about 30 degrees, or optionally is less than about 20 degrees.

Aspect 248. The method of any one of the preceding Aspects, wherein the structural color of the first article is iridescent.

Aspect 249. The method of any one of the preceding Aspects, wherein the structural color of the first article has limited iridescence.

Aspect 250. The method of any one of the preceding Aspects, wherein the structural color of the first article is not iridescent.

Aspect 251. The method of any one of the preceding Aspects, wherein the structural color of the first article has limited iridescence such that, when each color visible at each possible angle of observation is assigned to a single hue selected from the group consisting of the primary, secondary and tertiary colors on the red yellow blue (RYB) color wheel, all of the assigned hues fall into a single hue group, wherein the single hue group is one of a) green-yellow, yellow, and yellow-orange; b) yellow, yellow-orange and orange; c) yellow-orange, orange, and orange-red; d) orange-red, and red-purple; e) red, red-purple, and purple; f) red-purple, purple, and purple-blue; g) purple, purple-blue, and blue; h) purple-blue, blue, and blue-green; i) blue, blue-green and green; and j) blue-green, green, and green-yellow.

Aspect 252. The method of any one of the preceding Aspects, wherein the structural color having limited iridescence is limited to two or three of the hues green-yellow, yellow, yellow-orange; or the hues purple-blue, blue, and blue-green; or the hues orange-red, red, and red-purple; or the hues blue-green, green, and green-yellow; or the hues yellow-orange, orange, and orange-red; or the hues red-purple, purple, and purple-blue.

Aspect 253. The method of any one of the preceding Aspects, wherein the second article does not exhibit a structural color.

Aspect 254. The method of any one of the preceding Aspects, further comprising disposing an optical element on a side of the second article, wherein the optical element imparts a structural color to the second article.

Aspect 255. A structure comprising the second article made according to the method of any one of Aspects 191 to 254.

Aspect 256. The methods, components, color components, structurally colored components, structures, and/or articles of any one of the preceding Aspects, wherein the article is a fiber.

Aspect 257. The methods and/or methods and/or articles of any one of the preceding Aspects, wherein the article is a yarn.

Aspect 258. The methods and/or articles of any one of the preceding Aspects, wherein the article is a monofilament yarn.

Aspect 259. The methods and/or articles of any one of the preceding Aspects, wherein the article is a textile.

Aspect 260. The methods and/or articles of any one of the preceding Aspects, wherein the article is a knit textile.

Aspect 261. The methods and/or articles of any one of the preceding Aspects, wherein the article is a non-woven textile.

Aspect 262. The methods and/or articles of any one of the preceding Aspects, wherein the article is a non-woven synthetic leather.

Aspect 263. The methods and/or articles of any one of the preceding Aspects, wherein the article is a film.

Aspect 264. The methods and/or articles of any one of the preceding Aspects, wherein the article is an article of footwear, a component of footwear, an article of apparel, a component of apparel, an article of sporting equipment, or a component of sporting equipment.

Aspect 265. The methods and/or articles of any one of the preceding Aspects, wherein the article is an article of footwear.

Aspect 266. The methods and/or articles of any one of the preceding Aspects, wherein the article is a sole component of an article of footwear.

Aspect 267. The methods and/or articles of any one of the preceding Aspects, wherein the article is an upper component of an article of footwear.

Aspect 268. The methods and/or articles of any one of the preceding Aspects, wherein the article is a knit upper component of an article of footwear.

Aspect 269. The methods and/or articles of any one of the preceding Aspects, wherein the article is a non-woven synthetic leather upper for an article of footwear.

Aspect 270. The methods and/or articles of any one of the preceding Aspects, wherein the article is a bladder including a volume of a fluid, wherein the bladder has a first bladder wall having a first bladder wall thickness, wherein the first bladder wall has a gas transmission rate of 15 $cm^3/m^2$•atm•day or less for nitrogen for an average wall thickness of 20 mils.

Aspect 271. The methods and/or articles of any one of the preceding Aspects, wherein the article is a bladder, and the inorganic optical element is optionally on an inside surface of the bladder or optionally the inorganic optical element is on an outside surface of the bladder.

Aspect 272. The methods and/or articles of any one of the preceding Aspects, wherein each of the constituent layers and reflector layer(s) are three dimensional flat planar surfaces or substantially three dimensional flat planar surfaces.

Aspect 273. The article and/or method of any of the preceding Aspects, wherein the profile feature has at least one dimension greater than 500 micrometers and optionally greater than about 600 micrometers.

Aspect 274. The article and/or method of any of the preceding Aspects, wherein at least one of the length and width of the profile feature is greater than 500 micrometers or optionally both the length and the width of the profile feature is greater than 500 micrometers.

Aspect 275. The article and/or method of any of the preceding Aspects, wherein the height of the profile features can be greater than 50 micrometers or optionally greater than about 60 micrometers.

Aspect 276. The article and/or method of any of the preceding Aspects, wherein at least one of the length and width of the profile feature is less than 500 micrometers or both the length and the width of the profile feature is less than 500 micrometers, while the height is greater than 50 micrometers.

Aspect 277. The article and/or method of any of the preceding Aspects, wherein at least one of the length and width of the profile feature is greater than 500 micrometers or both the length and the width of the profile feature is greater than 500 micrometers, while the height is greater than 50 micrometers.

Aspect 278. The article and/or method of any of the preceding Aspects, wherein at least one of the dimensions of the profile feature is in the nanometer range, while at least one other dimension is in the micrometer range.

Aspect 279. The article and/or method of any of the preceding Aspects, wherein the nanometer range is about 10 nanometers to about 1000 nanometers, while the micrometer range is about 5 micrometers to 500 micrometers.

Aspect 280. The article and/or method of any of the preceding Aspects, wherein at least one of the length and width of the profile feature is in the nanometer range, while the other of the length and the width of the profile feature is in the micrometer range.

Aspect 281. The article and/or method of any of the preceding Aspects, wherein height of the profile features is greater than 250 nanometers.

Aspect 282. The article and/or method of any of the preceding Aspects, wherein at least one of the length and width of the profile feature is in the nanometer range and the other in the micrometer range, where the height is greater than 250 nanometers.

Aspect 283. The article and/or method of any of the preceding Aspects, wherein spatial orientation of the profile features is periodic.

Aspect 284. The article and/or method of any of the preceding Aspects, wherein spatial orientation of the profile features is a semi-random pattern or a set pattern.

Aspect 285. The article and/or method of any of the preceding Aspects, wherein the surface of the layers of the inorganic optical element are a substantially three-dimensional flat planar surface or a three-dimensional flat planar surface.

Aspect 286. A method of forming an article, the method comprising: forming a first article comprising a first composition, wherein the first composition comprises from about 1 weight percent to about 100 weight percent of a recycled thermoplastic composition, wherein said recycled thermoplastic composition comprises a first thermoplastic material and a plurality of first optical elements or fragments thereof that are dispersed therein.

Aspect 287. The method of any of the preceding Aspects, further comprising applying a second optical element to a side of said first article to impart a structural color to said side.

Aspect 288. The method of any of the preceding Aspects, further comprising: transforming a structurally-colored second article into the recycled thermoplastic composition, wherein the structurally-colored second article comprises the first thermoplastic material and a side of the structurally-colored second article has an optical element disposed thereon that imparts a structural color to said side.

Aspect 289. The method of any of the preceding Aspects, wherein the first optical elements and the fragments in the first composition do not impart an optical effect to the first article visible to a viewer having 20/20 visual acuity and normal color vision from a distance of about 1 meter from the first article.

Aspect 290. The method of any of the preceding Aspects, wherein: the side of the second article with the optical element has a second minimum visible light transmittance or second minimum visible light reflectance or both, as measured over the range of visible light having wavelengths from 400 nanometers to 700 nanometers; and the first article has a first minimum visible light transmittance or first minimum visible light reflectance or both that is less than 40 percent of the second minimum visible light transmittance or the second minimum visible light reflectance, or both, respectively.

Aspect 291. The method of any of the preceding Aspects, wherein: the side of the second article without the optical element has a third minimum visible light transmittance or third minimum visible light reflectance or both, as measured over the range of visible light having wavelengths from 400 nanometers to 700 nanometers; and the first article has a first minimum visible light transmittance or first minimum visible light reflectance or both that is within about 10 percent of the third minimum visible light transmittance or the third minimum visible light reflectance, or both, respectively.

Aspect 292. The method of any of the preceding Aspects, wherein the transforming step comprises: grinding the second article or portion thereof; cutting the second article or portion thereof; melting the second article or portion thereof; or a combination of the foregoing.

Aspect 293. The method of any of the preceding Aspects, wherein the recycled thermoplastic composition is in solid or molten form; optionally in the form of a pellet.

Aspect 294. The method of any of the preceding Aspects, wherein the recycled thermoplastic composition

comprises a plurality of fragments of the second article.

Aspect 295. The method of any of the preceding Aspects, further comprising mixing the recycled thermoplastic composition with an additional quantity of the first thermoplastic material.

Aspect 296. The method of any of the preceding Aspects, further comprising increasing the temperature of the recycled thermoplastic composition to a temperature that is above the softening point of the first thermoplastic material to provide a molten recycled thermoplastic composition.

Aspect 297. The method of any of the preceding Aspects, wherein the first thermoplastic material comprises essentially no colorants.

Aspect 298. The method of any of the preceding Aspects, wherein the first thermoplastic material comprises a colorant.

Aspect 299. The method of any of the preceding Aspects, wherein the colorant imparts a second color to the second article in the absence of the optical element and imparts a first color to the first article wherein the second color and the first color have one or more of the same hue, value, or chroma.

Aspect 300. The method of any of the preceding Aspects, wherein the method does not include altering, modifying, reducing, or removing a colorant.

Aspect 301. The method of any of the preceding Aspects, wherein the recycled thermoplastic composition, the first composition, or both comprises from about 0.01 percent to about 20 percent of the first optical elements or fragments, based on the total weight of the recycled composition or the first composition, respectively.

Aspect 302. The method of any of the preceding Aspects, wherein the plurality of first optical elements or fragments comprise from about 1 percent to about 80 percent fragments, based on the total weight of the plurality of optical elements or fragments.

Aspect 303. The method of any of the preceding Aspects, wherein the plurality of first optical elements or fragments have an average size of less than 400 nanometers as measured along the largest dimension.

Aspect 304. The method of any of the preceding Aspects, wherein the second article, the first article, or both, is a film or sheet.

Now having described aspects of the present disclosure generally, additional discussion regarding aspects will be described in greater detail.

This disclosure is not limited to particular aspects described, and as such may, of course, vary. The terminology used herein serves the purpose of describing particular aspects only, and is not intended to be limiting, since the scope of the present disclosure will be limited only by the appended claims.

Where a range of values is provided, each intervening value, to the tenth of the unit of the lower limit unless the context clearly dictates otherwise, between the upper and lower limit of that range and any other stated or intervening value in that stated range, is encompassed within the disclosure. The upper and lower limits of these smaller ranges may independently be included in the smaller ranges and are also encompassed within the disclosure, subject to any specifically excluded limit in the stated range. Where the stated range includes one or both of the limits, ranges excluding either or both of those included limits are also included in the disclosure.

As will be apparent to those of skill in the art upon reading this disclosure, each of the individual aspects described and illustrated herein has discrete components and features which may be readily separated from or combined with the features of any of the other several aspects without departing from the scope or spirit of the present disclosure. Any recited method may be carried out in the order of events recited or in any other order that is logically possible.

Aspects of the present disclosure will employ, unless otherwise indicated, techniques of material science, chemistry, textiles, polymer chemistry, and the like, which are within the skill of the art. Such techniques are explained fully in the literature.

Unless otherwise defined, all technical and scientific terms used herein have the same meaning as commonly understood by one of ordinary skill in the art of material science, chemistry, textiles, polymer chemistry, and the like. Although methods and materials similar or equivalent to those described herein can be used in the practice or testing of the present disclosure, suitable methods and materials are described herein.

As used in the specification and the appended claims, the singular forms "a," "an," and "the" may include plural referents unless the context clearly dictates otherwise. Thus, for example, reference to "a support" includes a plurality of supports.

As used herein, the phrase "consisting essentially of" or "consists essentially of" in the context of a composition or thermoplastic material means that the composition or thermoplastic material can vary from the stated composition in a manner that does not materially affect the functional characteristics of the stated composition or thermoplastic material. Examples of variations that do not materially affect the functional characteristics of a composition or thermoplastic material include contaminants, impurities, and the like.

As used herein, "comprising" is to be interpreted as specifying the presence of the stated features, integers, steps, or components as referred to, but does not preclude the presence or addition of one or more features, integers, steps, or components, or groups thereof. Moreover, each of the terms "by", "comprising," "comprises", "comprised of,"

"including," "includes," "included," "involving," "involves," "involved," and "such as" are used in their open, non-limiting sense and may be used interchangeably. Further, the term "comprising" is intended to include examples and aspects encompassed by the terms "consisting essentially of" and "consisting of." Similarly, the term "consisting essentially of" is intended to include examples encompassed by the term "consisting of.

When a range is expressed, a further aspect includes from the one particular value and/or to the other particular value. For example, where the stated range includes one or both of the limits, ranges excluding either or both of those included limits are also included in the disclosure, e.g. the phrase "x to y" includes the range from 'x' to 'y' as well as the range greater than 'x' and less than 'y'. The range can also be expressed as an upper limit, e.g. 'about x, y, z, or less' and should be interpreted to include the specific ranges of 'about x', 'about y', and 'about z' as well as the ranges of 'less than x', less than y', and 'less than z'. Likewise, the phrase 'about x, y, z, or greater' should be interpreted to include the specific ranges of 'about x', 'about y', and 'about z' as well as the ranges of 'greater than x', greater than y', and 'greater than z'. In addition, the phrase "about 'x' to 'y'", where 'x' and 'y' are numerical values, includes "about 'x' to about 'y'".

It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a numerical range of "about 0.1% to 5%" should be interpreted to include not only the explicitly recited values of about 0.1% to about 5%, but also include individual values (e.g., about 1%, about 2%, about 3%, and about 4%) and the sub-ranges (e.g., about 0.5% to about 1.1%; about 5% to about 2.4%; about 0.5% to about 3.2%, and about 0.5% to about 4.4%, and other possible sub-ranges) within the indicated range.

As used herein, the terms "about," "approximate," "at or about," and "substantially" mean that the amount or value in question can be the exact value or a value that provides equivalent results or effects as recited in the claims or taught herein. That is, it is understood that amounts, sizes, formulations, parameters, and other quantities and characteristics are not and need not be exact, but may be approximate and/or larger or smaller, as desired, reflecting tolerances, conversion factors, rounding off, measurement error and the like, and other factors known to those of skill in the art such that equivalent results or effects are obtained. In some circumstances, the value that provides equivalent results or effects cannot be reasonably determined. In such cases, it is generally understood, as used herein, that "about" and "at or about" mean the nominal value indicated $\pm$10% variation unless otherwise indicated or inferred. In general, an amount, size, formulation, parameter or other quantity or characteristic is "about," "approximate," or "at or about" whether or not expressly stated to be such. It is understood that where "about," "approximate," or "at or about" is used before a quantitative value, the parameter also includes the specific quantitative value itself, unless specifically stated otherwise.

As used herein the phrase "substantially the same" in the context of a composition means that the composition has from about 80% to 100% of the same ingredients as a stated reference composition. For example, a first composition is substantially the same as a second composition if the first composition comprises at least 99% or at least 98% or at least 97% or at least 96% or at least 95% or at least 94% or at least 93% or at least 92% or at least 91% or at least 90% or at least 89% or at least 88% or at least 87% or at least 86% or at least 85% or at least 84% or at least 83% or at least 82% or at least 81% or at least 80% of the same ingredients as the second composition.

As used herein, the terms "optional" or "optionally" means that the subsequently described feature can or cannot occur, and that the description includes instances where said event or circumstance occurs and instances where it does not.

In this specification and in the claims that follow, reference will be made to a number of terms that shall be defined to have the identified meanings unless a contrary intention is apparent.

The present disclosure provides compositions, components, and articles are described as recyclable. As used herein, "recyclable" refers to the ability of the article or components thereof to be reprocessed and to enter into recycling streams without compromising the suitability of compositions including the recycled materials, for further use in later manufacturing applications and/or processing.

The present disclosure provides methods of recycling articles and components to make recycled thermoplastic compositions, and further provides methods of making articles and components using recycled thermoplastic compositions. While the term recycling can be used to describe many different acts of reusing or repurposing something, as used herein the term "recycling" refers to the physical reprocessing (e.g., by grinding, cutting, shredding, melting, re-extruding, etc.) of a thermoplastic material to form a recycled thermoplastic composition. As used herein "recycled" materials (e.g., recycled composition) refer to materials that have been recovered from an earlier use and processed into a form that is suitable for further use in later manufacturing applications and/or processing.

In one aspect, the disclosure relates to structurally-colored components and articles. The structurally-colored components or articles comprise at least a first side comprising a thermoplastic material and having an optical element disposed thereon. The optical element, as disposed on the first side, imparts a structural color to the component or article. When the structurally-colored component or article is recycled, as described herein, the resulting recycled thermoplastic composition including the optical element or fragments thereof, and components or articles formed from the

recycled thermoplastic composition, no longer exhibit a visible structural color.

Structurally-colored articles can include post-consumer goods or packaging, as well as factory trim and scrap from manufacture or assembly such goods or packaging. By way of example, the structurally-colored component can comprise a container, an article of apparel, an article of footwear, an article of sports or recreation gear, an article for entertainment, an article for outdoor recreation, an article for education, a home furnishing or decoration, an article of electronic equipment, an article for construction, or any component thereof, or any material resulting from the manufacture or assembly thereof.

The article of manufacture can include a container such as a bag, a bottle, a liquid receptacle, a package, a backpack, a suitcase, or the like. The article of manufacture can include sports or recreation gear comprising athletic equipment, protective equipment, locomotive equipment, fishing equipment, hunting equipment, camping equipment, or the like. The article of sports or recreation gear can include, for example, a bat, a racket, a stick, a mallet, a golf club, a paddle, a striking implement, a ball, a puck, a golf bag, a baseball glove, a football glove, a soccer ball restriction structure, a pad, a helmet, a guard, a visor, a mask, goggles, a bicycle, a motorcycle, a skateboard, a car, a truck, a boat, a surfboard, a ski, a snowboard, a sail, a parachute, or the like. The article for entertainment can include a toy, a game, or the like. The article of apparel can include a shirt, a jersey, pants, shorts, a glove, a sock, a hat, a cap, a jacket, an undergarment, eyewear, a timepiece, jewelry, or the like. The home furnishing or decoration can include upholstery for furniture, a bed covering, a table covering, a towel, a window covering, a flag, or the like.

In particular embodiments, the article can be an article of footwear. The article of footwear can be designed for a variety of uses, such as sporting, athletic, military, work-related, recreational, or casual use. Primarily, the article of footwear is intended for outdoor use on unpaved surfaces (in part or in whole), such as on a ground surface including one or more of grass, turf, gravel, sand, dirt, clay, mud, pavement, and the like, whether as an athletic performance surface or as a general outdoor surface. However, the article of footwear may also be desirable for indoor applications, such as indoor sports including dirt playing surfaces for example (e.g., indoor baseball fields with dirt infields).

The article of footwear can be designed for use in indoor or outdoor sporting activities, such as global football/soccer, golf, American football, rugby, baseball, running, track and field, cycling (e.g., road cycling and mountain biking), and the like. The article of footwear can optionally include traction elements (e.g., lugs, cleats, studs, and spikes as well as tread patterns) to provide traction on soft and slippery surfaces, where articles of the present disclosure can be used or applied between or among the traction elements and optionally on the sides of the traction elements but on the surface of the traction element that contacts the ground or surface. Cleats, studs and spikes are commonly included in footwear designed for use in sports such as global football/soccer, golf, American football, rugby, baseball, and the like, which are frequently played on unpaved surfaces. Lugs and/or exaggerated tread patterns are commonly included in footwear including boots design for use under rugged outdoor conditions, such as trail running, hiking, and military use.

The article can be an article of apparel (i.e., a garment). The article of apparel can be an article of apparel designed for athletic or leisure activities. The article of apparel can be an article of apparel designed to provide protection from the elements (e.g., wind and/or rain), or from impacts.

The article can be an article of sporting equipment. The article of sporting equipment can be designed for use in indoor or outdoor sporting activities, such as global football/soccer, golf, American football, rugby, baseball, running, track and field, cycling (e.g., road cycling and mountain biking), and the like.

Figures 1A-1M illustrates footwear, apparel, athletic equipment, container, electronic equipment, and vision wear that include the structure (*e.g.*, the inorganic optical element) of the present disclosure. A structure including the inorganic optical element is represented by hashed areas 12A'/12M' - 12A"/12M'. The location of the structure is provided only to indicate one possible area that the structure can be located. Also, two locations are illustrated in some of the figures and one location is illustrated in other figures, but this is done only for illustration purposes as the items can include one or a plurality of structure, where the size and location can be determined based on the item. The structure(s) located on each item can represent a number, letter, symbol, design, emblem, graphic mark, icon, logo, or the like.

Figures 1N(a) and 1N(b) illustrate a perspective view and a side view of an article of footwear 100 that include a sole structure 104 and an upper 102. The structure including the inorganic optical element is represented by 122a and 122b. The sole structure 104 is secured to the upper 102 and extends between the foot and the ground when the article of footwear 100 is worn. The primary elements of the sole structure 104 are a midsole 114 and an outsole 112. The midsole 114 is secured to a lower area of the upper 102 and may be formed of a polymer foam or another appropriate material. In other configurations, the midsole 114 can incorporate fluid-filled chambers, plates, moderators, and/or other elements that further attenuate forces, enhance stability, or influence motions of the foot. The outsole 112 is secured to a lower surface of the midsole 114 and may be formed from a wear-resistant rubber material that is textured to impart traction, for example. The upper 102 can be formed from various elements (e.g., lace, tongue, collar) that combine to provide a structure for securely and comfortably receiving a foot. Although the configuration of the upper 102 may vary significantly, the various elements generally define a void within the upper 102 for receiving and securing the foot relative to sole structure 104. Surfaces of the void within upper 102 are shaped to accommodate the foot and can extend over the instep and toe areas of the foot, along the medial and lateral sides of the foot, under the foot, and around the heel

area of the foot. The upper 102 can be made of one or more materials such as textiles, a polymer foam, leather, synthetic leather, and the like that are stitched or bonded together. Although this configuration for the sole structure 104 and the upper 102 provides an example of a sole structure that may be used in connection with an upper, a variety of other conventional or nonconventional configurations for the sole structure 104 and/or the upper 102 can also be utilized. Accordingly, the configuration and features of the sole structure 104 and/or the upper 102 can vary considerably.

Figures 1O(a) and 1O(b) illustrate a perspective view and a side view of an article of footwear 130 that include a sole structure 134 and an upper 132. The structure including the inorganic optical element is represented by 136a and 136b/136b'. The sole structure 134 is secured to the upper 132 and extends between the foot and the ground when the article of footwear 130 is worn. The upper 132 can be formed from various elements (e.g., lace, tongue, collar) that combine to provide a structure for securely and comfortably receiving a foot. Although the configuration of the upper 132 may vary significantly, the various elements generally define a void within the upper 132 for receiving and securing the foot relative to the sole structure 134. Surfaces of the void within the upper 132 are shaped to accommodate the foot and can extend over the instep and toe areas of the foot, along the medial and lateral sides of the foot, under the foot, and around the heel area of the foot. The upper 132 can be made of one or more materials such as textiles including natural and synthetic leathers, molded polymeric components, polymer foam and the like that are stitched or bonded together.

The primary elements of the sole structure 134 are a forefoot component 142, a heel component 144, and an outsole 146. Each of the forefoot component 142 and the heel component 144 are directly or indirectly secured to a lower area of the upper 132 and formed from a polymer material that encloses a fluid, which may be a gas, liquid, or gel. During walking and running, for example, the forefoot component 142 and the heel component 144 compress between the foot and the ground, thereby attenuating ground reaction forces. That is, the forefoot component 142 and the heel component 144 are inflated and may be pressurized with the fluid to cushion the foot. The outsole 146 is secured to lower areas of the forefoot component 142 and the heel component 144 and may be formed from a wear-resistant rubber material that is textured to impart traction. The forefoot component 142 can be made of one or more polymers (e.g., layers of one or more polymers films) that form a plurality of chambers that includes a fluid such as a gas. The plurality of chambers can be independent or fluidically interconnected. Similarly, the heel component 144 can be made of one or more polymers (e.g., layers of one or more polymers films) that form a plurality of chambers that includes a fluid such as a gas and can also be independent or fluidically interconnected. In some configurations, the sole structure 134 may include a foam layer, for example, that extends between the upper 132 and one or both of the forefoot component 142 and the heel component 144, or a foam element may be located within indentations in the lower areas of the forefoot component 142 and the heel component 144. In other configurations, the sole structure 132 may incorporate plates, moderators, lasting elements, or motion control members that further attenuate forces, enhance stability, or influence the motions of the foot, for example. Although the depicted configuration for the sole structure 134 and the upper 132 provides an example of a sole structure that may be used in connection with an upper, a variety of other conventional or nonconventional configurations for the sole structure 134 and/or the upper 132 can also be utilized. Accordingly, the configuration and features of the sole structure 134 and/or the upper 132 can vary considerably.

Figure 1O(c) is a cross-sectional view of A-A that depicts the upper 132 and the heel component 144. The optical element 136b can be disposed on the outside wall of the heel component 144 or alternatively or optionally the optical element 136b' can be disposed on the inside wall of the heel component 144.

Figures 1 P(a) and 1P(b) illustrate a perspective view and a side view of an article of footwear 160 that includes traction elements 168. The structure including the inorganic optical element is represented by 172a and 172b. The article of footwear 160 includes an upper 162 and a sole structure 164, where the upper 162 is secured to the sole structure 164. The sole structure 164 can include one or more of a toe plate 166a, a mid-plate 166b, and a heel plate 166c. The plate can include one or more traction elements 168, or the traction elements can be applied directly to a ground-facing surface of the article of footwear. As shown in Figs. 1P(a) and (b), the traction elements 168 are cleats, but the traction elements can include lugs, cleats, studs, and spikes as well as tread patterns to provide traction on soft and slippery surfaces. In general, the cleats, studs and spikes are commonly included in footwear designed for use in sports such as global football/soccer, golf, American football, rugby, baseball, and the like, while lugs and/or exaggerated tread patterns are commonly included in footwear (not shown) including boots design for use under rugged outdoor conditions, such as trail running, hiking, and military use. The sole structure 164 is secured to the upper 162 and extends between the foot and the ground when the article of footwear 160 is worn. The upper 162 can be formed from various elements (e.g., lace, tongue, collar) that combine to provide a structure for securely and comfortably receiving a foot. Although the configuration of the upper 162 may vary significantly, the various elements generally define a void within the upper 162 for receiving and securing the foot relative to the sole structure 164. Surfaces of the void within upper 162 are shaped to accommodate the foot and extend over the instep and toe areas of the foot, along the medial and lateral sides of the foot, under the foot, and around the heel area of the foot. The upper 162 can be made of one or more materials such as textiles including natural and synthetic leathers, molded polymeric components, a polymer foam, and the like that are stitched or bonded together. In other aspects not depicted, the sole structure 164 may incorporate foam, one or

more fluid-filled chambers, plates, moderators, or other elements that further attenuate forces, enhance stability, or influence the motions of the foot. Although the depicted configuration for the sole structure 164 and the upper 162 provides an example of a sole structure that may be used in connection with an upper, a variety of other conventional or nonconventional configurations for the sole structure 164 and/or the upper 162 can also be utilized. Accordingly, the configuration and features of the sole structure 164 and/or the upper 162 can vary considerably.

In particular embodiments, the structurally-colored component is a sheet or film or the like, and the optical element is disposed on at least one surface of the sheet or film.

According to various embodiments, the structurally colored articles and components exhibit a structural color, i.e., visible color produced, at least in part, through optical effects (e.g., through scattering, refraction, reflection, interference, and/or diffraction of visible wavelengths of light) imparted by an optical element. The structural color can include one of a number of colors. The "color" of an article as perceived by a viewer can differ from the actual color of the article, as the color perceived by a viewer is determined by the actual color of the article by the presence of optical elements which may absorb, refract, interfere with, or otherwise alter light reflected by the article, by the viewer's ability to detect the wavelengths of light reflected by the article, by the wavelengths of light used to illuminate the article, as well as other factors such as the coloration of the environment of the article, and the type of incident light (e.g., sunlight, fluorescent light, and the like). As a result, the color of an object as perceived by a viewer can differ from the actual color of the article.

Conventionally, color is imparted to man-made objects by applying colored pigments or dyes to the object. More recently, methods of imparting "structural color" to man-made objects have been developed. Structural color is color which is produced, at least in part, by microscopically structured surfaces that interfere with visible light contacting the surface. The structural color is color caused by physical phenomena including the scattering, refraction, reflection, interference, and/or diffraction of light, unlike color caused by the absorption or emission of visible light through coloring matters. For example, optical phenomena which impart structural color can include multilayer interference, thin-film interference, refraction, dispersion, light scattering, Mie scattering, diffraction, and diffraction grating. In various aspects described herein, structural color imparted to an article can be visible to a viewer having 20/20 visual acuity and normal color vision from a distance of about 1 meter from the article. In addition to "colors", the structural color can be iridescent or metallic.

As described herein, structural color is produced, at least in part, by the optical element, as opposed to the color being produced solely by pigments and/or dyes. The coloration of a structurally-colored article can be due solely to structural color (i.e., the article, a colored portion of the article, or a colored outer layer of the article can be substantially free of pigments and/or dyes). Structural color can also be used in combination with pigments and/or dyes, for example, to alter all or a portion of a structural color.

"Hue" is commonly used to describe the property of color which is discernible based on a dominant wavelength of visible light, and is often described using terms such as magenta, red, orange, yellow, green, cyan, blue, indigo, violet, etc. or can be described in relation (e.g., as similar or dissimilar) to one of these. The hue of a color is generally considered to be independent of the intensity or lightness of the color. For example, in the Munsell color system, the properties of color include hue, value (lightness) and chroma (color purity). Particular hues are commonly associated with particular ranges of wavelengths in the visible spectrum: wavelengths in the range of about 700 to 635 nanometers are associated with red, the range of about 635 to 590 nanometers is associated with orange, the range of about 590 to 560 nanometers is associated with yellow, the range of about 560 to 520 nanometers is associated with green, the range of about 520 to 490 nanometers is associated with cyan, the range of about 490 nanometers to 450 nanometers is associated with blue, and the range of about 450 to 400 nanometers is associated with violet.

The color (including the hue) of an article as perceived by a viewer can differ from the actual color of the article. The color as perceived by a viewer depends not only on the physics of the article, but also its environment, and the characteristics of the perceiving eye and brain. For example, as the color perceived by a viewer is determined by the actual color of the article (e.g., the color of the light leaving the surface of the article), by the viewer's ability to detect the wavelengths of light reflected or emitted by the article, by the wavelengths of light used to illuminate the article, as well as other factors such as the coloration of the environment of the article, and the type of incident light (e.g., sunlight, fluorescent light, and the like). As a result, the color of an object as perceived by a viewer can differ from the actual color of the article.

When used in the context of structural color, one can characterize the hue of a structurally-colored article, i.e., an article that has been structurally-colored by incorporating an optical element into the article, based on the wavelengths of light the structurally-colored portion of the article absorbs and reflects (e.g., linearly and non-linearly). While the optical element may impart a first structural color, the presence of an optional textured surface and/or primer layer can alter the structural color. Other factors such as coatings or transparent elements may further alter the perceived structural color. The hue of the structurally-colored article can include any of the hues described herein as well as any other hues or combination of hues. The structural color can be referred to as a "single hue" (i.e., the hue remains substantially the same, regardless of the angle of observation and/or illumination), or "multihued" (i.e., the hue varies depending upon the angle of observation and/or illumination). The multihued structural color can be iridescent (i.e., the hue changes

gradually over two or more hues as the angle of observation or illumination changes). The hue of an iridescent multihued structural color can change gradually across all the hues in the visible spectrum (e.g., like a "rainbow") as the angle of observation or illumination changes. The hue of an iridescent multihued structural color can change gradually across a limited number of hues in the visible spectrum as the angle of observation or illumination changes, in other words, one or more hues in the visible spectrum (e.g., red, orange, yellow, etc.) are not observed in the structural color as the angle of observation or illumination changes. Only one hue, or substantially one hue, in the visible spectrum may be present for a single-hued structural color. The hue of a multihued structural color can change more abruptly between a limited number of hues (e.g., between 2-8 hues, or between 2-4 hues, or between 2 hues) as the angle of observation or illumination changes.

The structural color can be a multi-hued structural color in which two or more hues are imparted by the structural color.

The structural color can be iridescent multi-hued structural color in which the hue of the structural color varies over a wide number of hues (e.g., 4, 5, 6, 7, 8 or more hues) when viewed at a single viewing angle, or when viewed from two or more different viewing angles that are at least 15 degrees apart from each other.

The structural color can be limited iridescent multi-hue structural color in which the hue of the structural color varies, or varies substantially (*e.g.*, about 90 percent, about 95 percent, or about 99 percent) over a limited number of hues (e.g., 2 hues, or 3 hues) when viewed from two or more different viewing angles that are at least 15 degrees apart from each other.

The structural color can be single-hue angle-independent structural color in which the hue, the hue and value, or the hue, value and chroma of the structural color is independent of or substantially (e.g., about 90 percent, about 95 percent, or about 99 percent) independent of the angle of observation. For example, the single-hue angle-independent structural color can display the same hue or substantially the same hue when viewed from at least 3 different angles that are at least 15 degrees apart from each other (e.g., single-hue structural color).

Similarly, other properties of the structural color, such as the lightness of the color, the saturation of the color, and the purity of the color, among others, can be substantially the same regardless of the angle of observation or illumination, or can vary depending upon the angle of observation or illumination. The structural color can have a matte appearance, a glossy appearance, or a metallic appearance, or a combination thereof.

As discussed above, the color (including hue) of a structurally-colored article can vary depending upon the angle at which the structurally-colored article is observed or illuminated. The hue or hues of an article can be determined by observing the article, or illuminating the article, at a variety of angles using constant lighting conditions. As used herein, the "angle" of illumination or viewing is the angle measured from an axis or plane that is orthogonal to the surface. The viewing or illuminating angles can be set between about 0 and 180 degrees. The viewing or illuminating angles can be set at 0 degrees, 15 degrees, 30 degrees, 45 degrees, 60 degrees, and -15 degrees and the color can be measured using a colorimeter or spectrophotometer (*e.g.*, Konica Minolta), which focuses on a particular area of the article to measure the color. The viewing or illuminating angles can be set at 0 degrees, 15 degrees, 30 degrees, 45 degrees, 60 degrees, 75 degrees, 90 degrees, 105 degrees, 120 degrees, 135 degrees, 150 degrees, 165 degrees, 180 degrees, 195 degrees, 210 degrees, 225 degrees, 240 degrees, 255 degrees, 270 degrees, 285 degrees, 300 degrees, 315 degrees, 330 degrees, and 345 degrees and the color can be measured using a colorimeter or spectrophotometer. In a particular example of a multihued article colored using only structural color, when measured at 0 degrees, 15 degrees, 30 degrees, 45 degrees, 60 degrees, and - 15 degrees, the hues measured for article consisted of "blue" at three of the measurement angles, "blue-green" at 2 of the measurement angles and "purple" at one of the measurement angles.

In other embodiments, the color (including hue, value and/or chroma) of a structurally-colored article does not change substantially, if at all, depending upon the angle at which the article is observed or illuminated. In instances such as this the structural color can be an angle-independent structural color in that the hue, the hue and value, or the hue, value and chroma observed is substantially independent or is independent of the angle of observation.

Various methodologies for defining color coordinate systems exist. One example is L*a*b* color space, where, for a given illumination condition, L* is a value for lightness, and a* and b* are values for color-opponent dimensions based on the CIE coordinates (CIE 1976 color space or CIELAB). In an embodiment, a structurally-colored article having structural color can be considered as having a "single" color when the change in color measured for the article is within about 10% or within about 5% of the total scale of the a* or b* coordinate of the L*a*b* scale (CIE 1976 color space) at three or more measured observation or illumination angles selected from measured at observation or illumination angles of 0 degrees, 15 degrees, 30 degrees, 45 degrees, 60 degrees, and -15 degrees. In certain embodiments, colors which, when measured and assigned values in the L*a*b* system that differ by at least 5 percent of the scale of the a* and b* coordinates, or by at least 10 percent of the scale of the a* and b* coordinates, are considered to be different colors. The structurally-colored article can have a change of less than about 40%, or less than about 30%, or less than about 20%, or less than about 10%, of the total scale of the a* coordinate or b* coordinate of the L*a*b* scale (CIE 1976 color space) at three or more measured observation or illumination angles.

A change in color between two measurements in the CIELAB space can be determined mathematically. For

example, a first measurement has coordinates $L_1$*, $a_1$* and $b_1$*, and a second measurement has coordinates $L_2$*, $a_2$* and $b_2$*. The total difference between these two measurements on the CIELAB scale can be expressed as $\Delta E^*_{ab}$, which is calculated as follows: $\Delta E^*_{ab} = [(L_1^* - L_2^*)^2 + (a_1^* - a_2^*)^2 + (b_1^* - b_2^*)^2]^{1/2}$. Generally speaking, if two colors have a $\Delta E^*_{ab}$ of less than or equal to 1, the difference in color is not perceptible to human eyes, and if two colors have a $\Delta E^*_{ab}$ of greater than 100 the colors are considered to be opposite colors, while a $\Delta E^*_{ab}$ of about 2-3 is considered the threshold for perceivable color difference. In certain embodiments, a structurally-colored article having structural color can be considered as having a "single" color when the $\Delta E^*_{ab}$ is less than 60, or less than 50, or less than 40, or less than 30, between three or more measured observation or illumination angles selected from measured at observation or illumination angles of 0 degrees, 15 degrees, 30 degrees, 45 degrees, 60 degrees, and -15 degrees. The structurally-colored article can have a $\Delta E^*_{ab}$ that is less than about 100, or less than about 80, or less than about 60, between two or more measured observation or illumination angles.

Another example of a color scale is the CIELCH color space, where, for a given illumination condition, L* is a value for lightness, C* is a value for chroma, and h° denotes a hue as an angular measurement. In an embodiment, a structurally-colored article having structural color can be considered as having a "single" color when the color measured for the article is less than 10 degrees different or less than 5 degrees different at the h° angular coordinate of the CIELCH color space, at three or more measured observation or illumination angles selected from measured at observation or illumination angles of 0 degrees, 15 degrees, 30 degrees, 45 degrees, 60 degrees, and -15 degrees. In certain embodiments, colors which, when measured and assigned values in the CIELCH system that vary by at least 45 degrees in the h° measurements, are considered to be different colors The structurally-colored article can have a change of less than about 60 degrees, or less than about 50 degrees, or less than about 40 degrees, or less than about 30 degrees, or less than about 20 degrees, or less than about 10 degrees, in the h° measurements of the CIELCH system at three or more measured observation or illumination angles.

Another system for characterizing color includes the "PANTONE" Matching System (Pantone LLC, Carlstadt, New Jersey, USA), which provides a visual color standard system to provide an accurate method for selecting, specifying, broadcasting, and matching colors through any medium. In an example, a structurally-colored article having a structural color can be considered as having a "single" color when the color measured for the article is within a certain number of adjacent standards, e.g., within 20 adjacent PANTONE standards, at three or more measured observation or illumination angles selected from 0 degrees, 15 degrees, 30 degrees, 45 degrees, 60 degrees, and -15 degrees.

Now having described structural color, additional details regarding the optical element are provided. As described herein, the structurally-colored article, component, or structure includes the optical element. The optical element includes at least one optical layer. The optical element can be or include a single layer reflector, a single layer filter, multilayer reflector or a multilayer filter or a combination thereof. The optical element can function to modify the light that impinges thereupon so that structural color is imparted to the article. The optical element can include at least one optical layer and optionally one or more additional layers (e.g., a protective layer, the textured layer, the primer layer, a polymer layer, and the like).

The method of making the structurally-colored article can include disposing (e.g., affixing, attaching, bonding, fastening, joining, appending, connecting, binding) the optical element onto an article (e.g., an article of footwear, an article of apparel, an article of sporting equipment, etc.). The article includes a component, and the component has a surface upon which the optical element can be disposed. The surface of the article can be made of a material such as a thermoplastic material or thermoset material, as described herein. For example, the article has a surface including a thermoplastic material (i.e., a first thermoplastic material), for example an externally-facing surface of the component or an internally-facing surface of the component (e.g., an externally-facing surface or an internally-facing surface a bladder). The optical element can be disposed onto the thermoplastic material, for example.

In an aspect, the temperature of at least a portion of the first side of the article including the thermoplastic material is increased to a temperature at or above creep relaxation temperature ($T_{cr}$), Vicat softening temperature ($T_{vs}$), heat deflection temperature ($T_{hd}$), and/or melting temperature ($T_m$) of the thermoplastic material, for example to soften or melt the thermoplastic material. The temperature can be increased to a temperature at or above the creep relaxation temperature. The temperature can be increased to a temperature at or above the Vicat softening temperature. The temperature can be increased to a temperature at or above the heat deflection temperature. The temperature can be increased to a temperature at or above the melting temperature. While the temperature of the at least a portion of the first side of the article is at or above the increased temperature (e.g., at or above the creep relaxation temperature, the heat deflection temperature, the Vicat softening temperature, or the melting temperature of the thermoplastic material), the optical element is affixed to the thermoplastic material within the at least a portion of the first side of the article. Following the affixing, the temperature of the thermoplastic material is decreased to a temperature below its creep relaxation temperature to at least partially re-solidify the thermoplastic material. The thermoplastic material can be actively cooled (*e.g.*, removing the source that increases the temperature and actively (*e.g.*, flowing cooler gas adjacent the article reducing the temperature of the thermoplastic material) or passively cooled (*e.g.*, removing the source that increases the temperature and allowing the thermoplastic layer to cool on its own).

The optical element has a first side (including the outer surface) and a second side opposing the first side (including the opposing outer surface), where the first side or the second side is adjacent the article. For example, when the optical element is used in conjunction with a component having internally-facing and externally-facing surfaces, such as a film or a bladder, the first side of the optical element can be disposed on the internally-facing surface of the component, such as in the following order: second side of the optical element/core of the optical element/first side of the optical element/internally-facing surface of the component/core of the component/externally-facing surface of the component. Alternatively, the second side the optical element can be disposed on the internally-facing surface of the component, such as in the following order: first side of the optical element/core of the optical element/second side of the optical element/internally-facing surface of the component/core of the component wall/externally-facing surface of the component. In another example, the first side of the optical element can be disposed on the externally-facing surface of the component, such as in the following order: internally-facing surface of the component/core of the component/externally-facing surface of the component/first side of the optical element/core of the optical element/second side of the optical element. Similarly, the second side of the optical element can be disposed on the externally-facing surface of the component, such as in the following order: internally-facing surface of the component/core of the component/externally-facing surface of the component/second side of the optical element/core of the optical element/first side of the optical element. In examples where the optional textured surface, the optional primer layer, or both are present, the textured surface and/or the primer layer can be located at the interface between the surface of the component and a side of the optical element.

The optical element or layers or portions thereof (e.g., optical layer) can be formed using known techniques such as physical vapor deposition, electron beam deposition, atomic layer deposition, molecular beam epitaxy, cathodic arc deposition, pulsed laser deposition, sputtering deposition (e.g., radio frequency, direct current, reactive, non-reactive), chemical vapor deposition, plasma-enhanced chemical vapor deposition, low pressure chemical vapor deposition and wet chemistry techniques such as layer-by-layer deposition, sol-gel deposition, Langmuir Blodgett, and the like. The temperature of the first side can be adjusted using the technique to form the optical element and/or a separate system to adjust the temperature. Additional details are provided herein.

The optical layer(s) of the optical element can comprise single layer or a multilayer reflector. The multilayer reflector can be configured to have a certain reflectivity at a given wavelength of light (or range of wavelengths) depending, at least in part, on the material selection, thickness and number of the layers of the multilayer reflector. In other words, one can carefully select the materials, thicknesses, and numbers of the layers of a multilayer reflector and optionally its interaction with one or more other layers, so that it can reflect a certain wavelength of light (or range of wavelengths), to produce a desired structural color. The optical layer can include at least two adjacent layers, where the adjacent layers have different refractive indices. The difference in the index of refraction of adjacent layers of the optical layer can be about 0.0001 to 50 percent, about 0.1 to 40 percent, about 0.1 to 30 percent, about 0.1 to 20 percent, about 0.1 to 10 percent (and other ranges there between (e.g., the ranges can be in increments of 0.0001 to 5 percent)). The index of refraction depends at least in part upon the material of the optical layer and can range from 1.3 to 2.6.

The optical layer can include 2 to 20 layers, 2 to 10 layer, 2 to 6 layers, or 2 to 4 layers. Each layer of the optical layer can have a thickness that is about one-fourth of the wavelength of light to be reflected to produce the desired structural color. Each layer of the optical layer can have a thickness of about 10 to 500 nanometers or about 90 to 200 nanometers. The optical layer can have at least two layers, where adjacent layers have different thicknesses and optionally the same or different refractive indices.

The optical element can comprise a single layer or multilayer filter. The multilayer filter destructively interferes with light that impinges upon the structure or article, where the destructive interference of the light and optionally interaction with one or more other layers or structures (e.g., a single layer or multilayer reflector, a textured structure) impart the structural color. In this regard, the layers of the multilayer filter can be designed (e.g., material selection, thickness, number of layer, and the like) so that a single wavelength of light, or a particular range of wavelengths of light, make up the structural color. For example, the range of wavelengths of light can be limited to a range within plus or minus 30 percent or a single wavelength, or within plus or minus 20 percent of a single wavelength, or within plus or minus 10 percent of a single wavelength, or within plus or minus 5 percent or a single wavelength. The range of wavelengths can be broader to produce a more iridescent structural color.

The optical layer(s) can include multiple layers where each layer independently comprises a material selected from: the transition metals, the metalloids, the lanthanides, and the actinides, as well as nitrides, oxynitrides, sulfides, sulfates, selenides, and tellurides of these. The material can be selected to provide an index of refraction that when optionally combined with the other layers of the optical element achieves the desired result. One or more layers of the optical layer can be made of liquid crystals. Each layer of the optical layer can be made of liquid crystals. One or more layers of the optical layer can be made of a material such as: silicon dioxide, titanium dioxide, zinc sulfide, magnesium fluoride, tantalum pentoxide, aluminum oxide, or a combination thereof. Each layer of the optical layer can be made of a material such as: silicon dioxide, titanium dioxide, zinc sulfide, magnesium fluoride, tantalum pentoxide, aluminum oxide, or a combination thereof.

The optical element can be uncolored (*e.g.*, no pigments or dyes added to the structure or its layers), colored (*e.g.*, pigments and/or dyes are added to the structure or its layers (*e.g.*, dark or black color)), reflective, and/or transparent (*e.g.*, percent transmittance of 75 percent or more). The surface of the component upon which the optical element is disposed can be uncolored (*e.g.*, no pigments or dyes added to the material), colored (e.g., pigments and/or dyes are added to the material (*e.g.*, dark or black color)), reflective, and/or transparent (*e.g.*, percent transmittance of 75 percent or more).

The optical layer(s) can be formed in a layer-by-layer manner, where each layer has a different index of refraction. Each layer of the optical layer can be formed using known techniques such as physical vapor deposition including: chemical vapor deposition, pulsed laser deposition, evaporative deposition, sputtering deposition (*e.g.*, radio frequency, direct current, reactive, non-reactive), plasma enhanced chemical vapor deposition, electron beam deposition, atomic layer deposition, molecular beam epitaxy, cathodic arc deposition, low pressure chemical vapor deposition and wet chemistry techniques such as layer by layer deposition, sol-gel deposition, Langmuir Blodgett and the like.

As mentioned above, the optical element can include one or more layers in addition to the optical layer(s). The optical element has a first side (e.g., the side having a surface) and a second side (e.g., the side having a surface), where the first side or the second side is adjacent the surface of the component. The one or more other layers of the optical element can be on the first side and/or the second side of the optical element. For example, the optical element can include a protective layer and/or a polymeric layer such as a thermoplastic polymeric layer, where the protective layer and/or the polymeric layer can be on one or both of the first side and the second side of the optical element. In another example, the optical element can include a primer layer as described herein. One or more of the optional other layers can include a textured surface. Alternatively or in addition, one or more optical layers of the optical element can include a textured surface.

A protective layer can be disposed on the first and/or second side of the optical layer to protect the optical layer. The protective layer is more durable or more abrasion resistant than the optical layer. The protective layer is optically transparent to visible light. The protective layer can be on the first side of the optical element to protect the optical layer. All or a portion of the protective layer can include a dye or pigment in order to alter an appearance of the structural color. The protective layer can include silicon dioxide, glass, combinations of metal oxides, or mixtures of polymers. The protective layer can have a thickness of about 3 nanometers to 1 millimeter.

The protective layer can be formed using physical vapor deposition, chemical vapor deposition, pulsed laser deposition, evaporative deposition, sputtering deposition (e.g., radio frequency, direct current, reactive, non-reactive), plasma enhanced chemical vapor deposition, electron beam deposition, cathodic arc deposition, low pressure chemical vapor deposition and wet chemistry techniques such as layer by layer deposition, sol-gel deposition, Langmuir Blodgett, and the like. Alternatively or in addition, the protective layer can be applied by spray coating, dip coating, brushing, spin coating, doctor blade coating, and the like.

A polymeric layer can be disposed on the first and/or the second side of the optical element. The polymeric layer can be used to dispose the optical element onto an article, such as, for example, when the article does not include a thermoplastic material to adhere the optical element. The polymeric layer can comprise a polymeric adhesive material, such as a hot melt adhesive. The polymeric layer can be a thermoplastic material and can include one or more layers. The thermoplastic material can be any one of the thermoplastic material described herein. The polymeric layer can be applied using various methodologies, such as spin coating, dip coating, doctor blade coating, and so on. The polymeric layer can have a thickness of about 3 nanometer to 1 millimeter.

As described above, one or more embodiments of the present disclosure provide articles that incorporate the optical element (*e.g.*, single or multilayer structures) on a side of a component of the article to impart structural color. The optical element can be disposed onto the thermoplastic material of the side of the article, and the side of the article can include a textile, including a textile comprising the thermoplastic material

In various aspects, the component or the optical element can optionally include a textured surface. Having described the optical element, additional details will now be described for the optional textured surface. As described herein the optical element can include at least one optical layer and optionally a textured surface. The textured surface can be a surface of a textured structure or a textured layer. The textured surface may be provided as part of the optical element. For example, the optical element may comprise a textured layer or a textured structure that comprises the textured surface. The textured surface may be formed on the first or second side of the optical element. For example, a side of the optical layer may be formed or modified to provide a textured surface, or a textured layer or textured structure can be affixed to the first or second side of the optical element. The textured surface may be provided as part of the component to which the optical element is disposed. For example, the optical element may be disposed onto the surface of the component where the surface of the component is a textured surface, or the surface of the component includes a textured structure or a textured layer affixed to it.

The textured surface (or a textured structure or textured layer including the textured surface) may be provided as a feature on or part of another medium, such as a transfer medium, and imparted to a side or layer of the optical element or to the surface of the component. For example, a mirror image or relief form of the textured surface may be

provided on the side of a transfer medium, and the transfer medium contacts a side of the optical element or the surface of the component in a way that imparts the textured surface to the optical element or article. While the various embodiments herein may be described with respect to a textured surface of the optical element, it will be understood that the features of the textured surface, or a textured structure or textured layer, may be imparted in any of these ways.

The textured surface can contribute to the structural color resulting from the optical element. As described herein, structural coloration is imparted, at least in part, due to optical effects caused by physical phenomena such as scattering, diffraction, reflection, interference or unequal refraction of light rays from an optical element. The textured surface (or its mirror image or relief) can include a plurality of profile features and flat or planar areas. The plurality of profile features included in the textured surface, including their size, shape, orientation, spatial arrangement, etc., can affect the light scattering, diffraction, reflection, interference and/or refraction resulting from the optical element. The flat or planar areas included in the textured surface, including their size, shape, orientation, spatial arrangement, etc., can affect the light scattering, diffraction, reflection, interference and/or refraction resulting from the optical element. The desired structural color can be designed, at least in part, by adjusting one or more of properties of the profile features and/or flat or planar areas of the textured surface.

The profile features can extend from a side of the flat areas, so as to provide the appearance of projections and/or depressions therein. A profile feature may include various combinations of projections and depressions. For example, a profile feature may include a projection with one or more depressions therein, a depression with one or more projections therein, a projection with one or more further projections thereon, a depression with one or more further depressions therein, and the like. The flat areas do not have to be completely flat and can include texture, roughness, and the like. The texture of the flat areas may not contribute much, if any, to the imparted structural color. The texture of the flat areas typically contributes to the imparted structural color. For clarity, the profile features and flat areas are described in reference to the profile features extending above the flat areas, but the inverse (*e.g.*, dimensions, shapes, and the like) can apply when the profile features are depressions in the textured surface.

The textured surface can comprise a thermoplastic material. The profile features and the flat areas can be formed using a thermoplastic material. For example, when the thermoplastic material is heated above its softening temperature a textured surface can be formed in the thermoplastic material such as by molding, stamping, printing, compressing, cutting, etching, vacuum forming, etc., the thermoplastic material to form profile features and flat areas therein. The textured surface can be imparted on a side of a thermoplastic material. The textured surface can be formed in a layer of thermoplastic material. The profile features and the flat areas can be made of the same thermoplastic material or a different thermoplastic material. The dimensional measurements in reference to the profile features (e.g., length, width, height, diameter, and the like) described herein refer to an average dimensional measurement of profile features in 1 square centimeter in the inorganic optical element.

The textured surface generally has a length dimension extending along an x-axis, and a width dimension extending along a z-axis, and a thickness dimension extending along a y-axis. The textured surface has a generally planar portion extending in a first plane that extends along the x-axis and the z-axis. A profile feature can extend outward from the first plane, so as to extend above or below the plane x. A profile feature may extend generally orthogonal to the first plane, or at an angle greater to or less than 90 degrees to the first plane.

The dimensional measurements in reference to the profile features (e.g., length, width, height, diameter, and the like) described herein refer to an average dimensional measurement of profile features in 1 square centimeter in the inorganic optical element.

The dimension (*e.g.*, length, width, height, diameter, depending upon the shape of the profile feature) of each profile feature can be within the nanometer to micrometer range. A textured surface can have a profile feature and/or flat area with a dimension of about 10 nanometers to about 500 micrometers. The profile feature can have dimensions in the nanometer range, e.g., from about 10 nanometers to about 1000 nanometers. All of the dimensions of the profile feature (*e.g.*, length, width, height, diameter, depending on the geometry) can be in the nanometer range, *e.g.*, from about 10 nanometers to about 1000 nanometers. The textured surface can have a plurality of profile features having dimensions that are 1 micrometer or less. In this context, the phrase "plurality of the profile features" is meant to mean that about 50 percent or more, about 60 percent or more, about 70 percent or more, about 80 percent or more, about 90 percent or more, or about 99 percent or more of the profile features have a dimension in this range. The profile features can have a ratio of width:height and/or length:height dimensions of about 1:2 and 1:100, or 1:5 and 1:50, or 1:5 and 1:10.

The textured surface can have a profile feature and/or flat area with a dimension within the micrometer range of dimensions. A textured surface can have a profile feature and/or flat area with a dimension of about 1 micrometer to about 500 micrometers. All of the dimensions of the profile feature (*e.g.*, length, width, height, diameter, depending on the geometry) can be in the micrometer range, *e.g.*, from about 1 micrometer to about 500 micrometers. The textured surface can have a plurality of profile features having dimensions that are from about 1 micrometer to about 500 micrometer. In this context, the phrase "plurality of the profile features" is meant to mean that about 50 percent or more, about 60 percent or more, about 70 percent or more, about 80 percent or more, about 90 percent or more, or about 99

percent or more of the profile features have a dimension in this range. The height of the profile features (or depth if depressions) can be about 0.1 and 50 micrometers, about 1 to 5 micrometers, or 2 to 3 micrometers. The profile features can have a ratio of width:height and/or length:height dimensions of about 1:2 and 1:100, or 1:5 and 1:50, or 1:5 and 1:10.

A textured surface can have a plurality of profile features having a mixture of size dimensions within the nanometer to micrometer range (*e.g.*, a portion of the profile features are on the nanometer scale and a portion of the profile features are on the micrometer scale). A textured surface can have a plurality of profile features having a mixture of dimensional ratios. The textured surface can have a profile feature having one or more nanometer-scale projections or depressions on a micrometer-scale projection or depression.

The profile feature can have height and width dimensions that are within a factor of three of each other ($0.33w \leq h \leq 3w$ where w is the width and h is the height of the profile feature) and/or height and length dimensions that are within a factor of three of each other ($0.33l \leq h \leq 3l$ where l is the length and h is the height of the profile feature). The profile feature can have a ratio of length:width that is from about 1:3 to about 3:1, or about 1:2 to about 2:1, or about 1:1.5 to about 1.5:1, or about 1:1.2 to about 1.2:1, or about 1:1. The width and length of the profile features can be substantially the same or different.

In another aspect, the textured surface can have a profile feature and/or flat area with at least one dimension in the mid-micrometer range and higher (e.g., greater than 500 micrometers). The profile feature can have at least one dimension (e.g., the largest dimension such as length, width, height, diameter, and the like depending upon the geometry or shape of the profile feature) of greater than 500 micrometers, greater than 600 micrometers, greater than 700 micrometers, greater than 800 micrometers, greater than 900 micrometers, greater than 1000 micrometers, greater than 2 millimeters, greater than 10 millimeters, or more. For example, the largest dimension of the profile feature can range from about 600 micrometers to about 2000 micrometers, or about 650 micrometers to about 1500 micrometers, or about 700 micrometers to about 1000 micrometers. At least one or more of the dimensions of the profile feature (e.g., length, width, height, diameter, depending on the geometry) can be in the micrometer range, while one or more of the other dimensions can be in the nanometer to micrometer range (e.g., less than 500 micrometers, less than 100 micrometers, less than 10 micrometers, or less than 1 micrometer). The textured surface can have a plurality of profile features having at least one dimension that is in the mid-micrometer or more range (e.g., 500 micrometers or more). In this context, the phrase "plurality of the profile features" is meant to mean that about 50 percent or more, about 60 percent or more, about 70 percent or more, about 80 percent or more, about 90 percent or more, or about 99 percent or more of the profile features have at least one dimension that is greater than 500 micrometers. In particular, at least one of the length and width of the profile feature is greater than 500 micrometers or both the length and the width of the profile feature is greater than 500 micrometers. In another example, the diameter of the profile feature is greater than 500 micrometers. In another example, when the profile feature is an irregular shape, the longest dimension is greater than 500 micrometers.

In aspects, the height of the profile features can be greater than 50 micrometers. In this context, the phrase "plurality of the profile features" is meant to mean that about 50 percent or more, about 60 percent or more, about 70 percent or more, about 80 percent or more, about 90 percent or more, or about 99 percent or more of the profile features have at height that is greater than 50 micrometers. The height of the profile feature can be 50 micrometers, about 60 micrometers, about 70 micrometers, about 80 micrometers, about 90 micrometers, or about 100 micrometers to about 60 micrometers, about 70 micrometers, about 80 micrometers, about 90 micrometers, about 100 micrometers, about 150 micrometers, about 250 micrometers, about 500 micrometers or more. For example, the ranges can include 50 micrometers to 500 micrometers, about 60 micrometers to 250 micrometers, about 60 micrometers to about 150 micrometers, and the like. One or more of the other dimensions (e.g., length, width, diameter, or the like) can be in the nanometer to micrometer range (e.g., less than 500 micrometers, less than 100 micrometers, less than 10 micrometers, or less than 1 micrometer). In particular, at least one of the length and width of the profile feature is less than 500 micrometers or both the length and the width of the profile feature is less than 500 micrometers, while the height is greater than 50 micrometers. One or more of the other dimensions (e.g., length, width, diameter, or the like) can be in the micrometer to millimeter range (e.g., greater than 500 micrometers to 10 millimeters).

The dimension (e.g., length, width, height, diameter, depending upon the shape of the profile feature) of each profile feature can be within the nanometer to micrometer range. The textured surface can have a profile feature and/or flat area with a dimension of about 10 nanometers to about 500 micrometers or higher (e.g., about 1 millimeter, about 2 millimeters, about 5 millimeters, or about 10 millimeters). At least one of the dimensions of the profile feature (e.g., length, width, height, diameter, depending on the geometry) can be in the nanometer range (e.g., from about 10 nanometers to about 1000 nanometers), while at least one other dimension (e.g., length, width, height, diameter, depending on the geometry) can be in the micrometer range (e.g., 5 micrometers to 500 micrometers or more (e.g., about 1 to 10 millimeters)). The textured surface can have a plurality of profile features having at least one dimension in the nanometer range (e.g., about 10 to 1000 nanometers) and the other in the micrometer range (e.g., 5 micrometers to 500 micrometers or more). In this context, the phrase "plurality of the profile features" is meant to mean that about 50 percent or more, about 60 percent or more, about 70 percent or more, about 80 percent or more, about 90 percent or more, or about 99 percent or more of the profile features have at least one dimension in the nanometer range and at least one dimension

in the micrometer range. In particular, at least one of the length and width of the profile feature is in the nanometer range, while the other of the length and the width of the profile feature is in the micrometer range.

In aspects, the height of the profile features can be greater than 250 nanometers. In this context, the phrase "plurality of the profile features" is meant to mean that about 50 percent or more, about 60 percent or more, about 70 percent or more, about 80 percent or more, about 90 percent or more, or about 99 percent or more of the profile features have at height that is greater than 250 nanometers. The height of the profile feature can be 250 nanometers, about 300 nanometers, about 400 nanometers, or about 500 nanometers, to about 300 nanometers, about 400 nanometers, about 500 nanometers, or about 1000 nanometers or more. For example, the range can be 250 nanometers to about 1000 nanometers, about 300 nanometers to 500 nanometers, about 400 nanometers to about 1000 nanometers, and the like. One or more of the other dimensions (e.g., length, width, diameter, or the like) can be in the micrometer to millimeter range (e.g., greater than 500 micrometers to 10 millimeters). In particular, at least one of the length and width of the profile feature is in the nanometer range (e.g., about 10 to 1000 nanometers) and the other in the micrometer range (e.g., 5 micrometers to 500 micrometers or more), while the height is greater than 250 nanometers.

The profile features can have a certain spatial arrangement. The spatial arrangement of the profile features may be uniform, such as spaced evenly apart or forming a pattern. The spatial arrangement can be random. Adjacent profile features can be about 10 to 500 nanometers apart, about 100 to 1000 nanometers apart, about 1 to 100 micrometers apart or about 5 to 100 micrometers apart. Adjacent profile features can overlap one another or be adjacent one another so little or no flat regions are positioned there between. The desired spacing can depend, at least in part, on the size and/or shape of the profile structures and the desired structural color effect.

The profile features can have a certain cross-sectional shape (with respect to a plane parallel the first plane). The textured surface can have a plurality of profile features having the same or similar cross-sectional shape. The textured surface has a plurality of profile features having a mixture of different cross-sectional shapes. The cross-sectional shapes of the profile features can include polygonal (*e.g.*, square or triangle or rectangle cross section), circular, semi-circular, tubular, oval, random, high and low aspect ratios, overlapping profile features, and the like.

The profile feature (*e.g.*, about 10 nanometers to 500 micrometers) can include an upper, flat surface. The profile feature (*e.g.*, about 10 nanometers to 500 micrometers) can include an upper, concavely curved surface. The concave curved surface may extend symmetrically either side of an uppermost point. The concave curved surface may extend symmetrically across only 50 percent of the uppermost point. The profile feature (*e.g.*, about 10 nanometers to 500 micrometers) can include an upper, convexly curved surface. The curved surface may extend symmetrically either side of an uppermost point. The curved surface may extend symmetrically across only 50 percent of the uppermost point.

The profile feature can include protrusions from the textured surface. The profile feature can include indents (hollow areas) formed in the textured surface. The profile feature can have a smooth, curved shape (*e.g.*, a polygonal cross-section with curved corners).

The profile features (whether protrusions or depressions) can be approximately conical or frusto-conical (i.e. the projections or indents may have horizontally or diagonally flattened tops) or have an approximately part-spherical surface (*e.g.*, a convex or concave surface respectively having a substantially even radius of curvature).

The profile features may have one or more sides or edges that extend in a direction that forms an angle to the first plane of the textured surface. The angle between the first plane and a side or edge of the profile feature is about 45 degrees or less, about 30 degrees or less, about 25 degrees or less, or about 20 degrees or less. The one or more sides or edges may extend in a linear or planar orientation, or may be curved so that the angle changes as a function of distance from the first plane. The profile features may have one or more sides that include step(s) and/or flat side(s). The profile feature can have one or more sides (or portions thereof) that can be orthogonal or perpendicular to the first plane of the textured surface, or extend at an angle of about 10 degrees to 89 degrees to the first plane (90 degrees being perpendicular or orthogonal to the first plane)). The profile feature can have a side with a stepped configuration, where portions of the side can be parallel to the first plane of the textured surface or have an angle of about 1 degrees to 179 degrees (0 degrees being parallel to the first plane)).

The textured surface can have profile features with varying shapes (*e.g.*, the profile features can vary in shape, height, width and length among the profile features) or profile features with substantially uniform shapes and/or dimensions. The structural color produced by the textured surface can be determined, at least in part, by the shape, dimensions, spacing, and the like, of the profile features.

The profile features can be shaped so as to result in a portion of the surface (e.g., about 25 to 50 percent or more) being about normal to the incoming light when the light is incident at the normal to the first plane of the textured surface. The profile features can be shaped so as to result in a portion of the surface (e.g., about 25 to 50 percent or more) being about normal to the incoming light when the light is incident at an angle of up to 45 degrees to the first plane of the textured surface.

The spatial orientation of the profile features on the textured surface can be used to produce the structural color, or to effect the degree to which the structural color shifts at different viewing angles. The spatial orientation of the profile features on the textured surface can be random, a semi-random pattern, or in a set pattern. A set pattern of profile

features is a known set up or configuration of profile features in a certain area (e.g., about 50 nanometers squared to about 10 millimeters squared depending upon the dimensions of the profile features (e.g., any increment between about 50 nanometers and about 10 millimeters is included)). A semi-random pattern of profile features is a known set up of profile features in a certain area (e.g., about 50 nanometers squared to 10 millimeters squared) with some deviation (e.g., 1 to 15% deviation from the set pattern), while random profile features are present in the area but the pattern of profile features is discernable. A random spatial orientation of the profile features in an area produces no discernable pattern in a certain area, (e.g., about 50 nanometers squared to 10 millimeters squared).

The spatial orientation of the profile features can be periodic (e.g., full or partial) or non-periodic. A periodic spatial orientation of the profile features is a recurring pattern at intervals. The periodicity of the periodic spatial orientation of the profile features can depend upon the dimensions of the profile features but generally are periodic from about 50 nanometers to 100 micrometers. For example, when the dimensions of the profile features are submicron, the periodicity of the periodic spatial orientation of the profile features can be in the 50 to 500 nanometer range or 100 to 1000 nanometer range. In another example, when the dimensions of the profile features are at the micron level, the periodicity of the periodic spatial orientation of the profile features can be in the 10 to 500 micrometer range or 10 to 1000 micrometer range. Full periodic pattern of profile features indicates that the entire pattern exhibits periodicity, whereas partial periodicity indicates that less than all of the pattern exhibits periodicity (e.g., about 70-99 percent of the periodicity is retained). A non-periodic spatial orientation of profile features is not periodic and does not show periodicity based on the dimensions of the profile features, in particular, no periodicity in the 50 to 500 nanometer range or 100 to 1000 nanometer range where the dimensions are of the profile features are submicron or no periodicity in the 10 to 500 micrometer range or 10 to 1000 micrometer range where the dimensions are of the profile features are in the micron range.

In an aspect, the spatial orientation of the profile features on the textured surface can be set to reduce distortion effects, *e.g.*, caused by the interference of one profile feature with another in regard to the structural color of the article. Since the shape, dimension, relative orientation of the profile features can vary considerably across the textured surface, the desired spacing and/or relative positioning for a particular area (*e.g.*, in the micrometer range or about 1 to 10 square micrometers) having profile features can be appropriately determined. As discussed herein, the shape, dimension, relative orientation of the profile features affect the contours of the reflective layer(s) and/or constituent layer(s), so the dimensions (e.g., thickness), index of refraction, number of layers in the inorganic optical element (e.g., reflective layer(s) and constituent layer(s)) are considered when designing the textured side of the texture layer.

The profile features are located in nearly random positions relative to one another across a specific area of the textured surface (*e.g.*, in the micrometer range or about 1 to 10 square micrometers to centimeter range or about 0.5 to 5 square centimeters, and all range increments therein), where the randomness does not defeat the purpose of producing the structural color. In other words, the randomness is consistent with the spacing, shape, dimension, and relative orientation of the profile features, the dimensions (*e.g.*, thickness), index of refraction, and number of layers (e.g., the reflective layer(s), the constituent layer(s), and the like, with the goal to achieve the structural color.

The profile features are positioned in a set manner relative to one another across a specific area of the textured surface to achieve the purpose of producing the structural color. The relative positions of the profile features do not necessarily follow a pattern, but can follow a pattern consistent with the desired structural color. As mentioned above and herein, various parameters related to the profile features, flat areas, and reflective layer(s) and/or the constituent layer can be used to position the profile features in a set manner relative to one another.

The textured surface can include micro and/or nanoscale profile features that can form gratings (*e.g.*, a diffractive grating), photonic crystal structure, a selective mirror structure, crystal fiber structures, deformed matrix structures, spiraled coiled structures, surface grating structures, and combinations thereof. The textured surface can include micro and/or nanoscale profile features that form a grating having a periodic or non-periodic design structure to impart the structural color. The micro and/or nanoscale profile features can have a peak-valley pattern of profile features and/or flat areas to produce the desired structural color. The grading can be an Echelette grating.

The profile features and the flat areas of the textured surface in the inorganic optical element can appear as topographical undulations in each layer (e.g., reflective layer(s) and/or the constituent layer(s)). For example, referring to FIG. 2A, an inorganic optical element 200 includes a textured structure 220 having a plurality of profile features 222 and flat areas 224. As described herein, one or more of the profile features 222 can be projections from a surface of the textured structure 220, and/or one or more of the profile features can be depressions in a surface of the textured structure 220 (not shown). One or more constituent layers 240 are disposed on the textured structure 220 and then a reflective layer 230 and one or more constituent layers 245 are disposed on the preceding layers. In some embodiments, the resulting topography of the textured structure 220 and the one or more constituent layers 240 and 245 and the reflective layer 230 are not identical, but rather, the one or more constituent layers 240 and 245 and the reflective layer 230 can have elevated or depressed regions 242 which are either elevated or depressed relative to the height of the planar regions 244 and which roughly correspond to the location of the profile features 222 of the textured structure 220. The one or more constituent layers 240 and 245 and the reflective layer 230 have planar regions 244 that roughly correspond to the location of the flat areas 224 of the textured structure 220. Due to the presence of the elevated or depressed

regions 242 and the planar regions 244, the resultant overall topography of the one or more constituent layers 240 and 245 and the reflective layer 230 can be that of an undulating or wave-like structure. The dimension, shape, and spacing of the profile features along with the number of layers of the constituent layer, the reflective layer, the thickness of each of the layers, refractive index of each layer, and the type of material, can be used to produce an inorganic optical element which results in a particular structural color.

While the textured surface can produce the structural color in some embodiments, or can affect the degree to which the structural color shifts at different viewing angles, in other embodiments, a "textured surface" or surface with texture may not produce the structural color, or may not affect the degree to which the structural color shifts at different viewing angles. The structural color can be produced by the design of the inorganic optical element with or without the textured surface. As a result, the inorganic optical element can include the textured surface having profile elements of dimensions in the nanometer to millimeter range, but the structural color or the shifting of the structural color is not attributable to the presence or absence of the textured surface. In other words, the inorganic optical element imparts the same structural color where or not the textured surface is present The design of the textured surface can be configured to not affect the structural color imparted by the inorganic optical element, or not affect the shifting of the structural color imparted by the inorganic optical element. The shape of the profile features, dimensions of the shapes, the spatial orientation of the profile features relative to one another, and the like can be selected so that the textured surface does not affect the structural color attributable to the inorganic optical element.

The structural color imparted by a first inorganic optical element and a second inorganic optical element, where the only difference between the first and second inorganic optical element is that the first inorganic optical element includes the textured surface, can be compared. A color measurement can be performed for each of the first and second inorganic optical element at the same relative angle, where a comparison of the color measurements can determine what, if any, change is correlated to the presence of the textured surface. For example, at a first observation angle the structural color is a first structural color for the first inorganic optical element and at first observation angle the structural color is a second structural color for the second inorganic optical element. The first color measurement can be obtained and has coordinates $L_1$* and $a_1$* and $b_1$*, while a second color measurement can be obtained and has coordinates $L_2$* and $a_2$* and $b_2$* can be obtained, according to the CIE 1976 color space under a given illumination condition.

When $\Delta E^*_{ab}$ between the first color measurement and the second color measurement is less than or equal to about 2.2 or is less than or equal to about 3, the first structural color associated with the first color measurement and the second structural color associated with the second color measurement are the same or not perceptibly different to an average observer (e.g., the textured surface does not cause or change the structural color by more than 20 percent, 10 percent, or 5 percent). When $\Delta E^*_{ab}$ between the first color measurement and the second color measurement is greater than 3 or optionally greater than about 4 or 5, the first structural color associated with the first color measurement and the second structural color associated with the second color measurement are different or perceptibly different to an average observer (e.g., the textured surface does cause or change the structural color by more than 20 percent, 10 percent, or 5 percent).

In another approach, when the percent difference between one or more of values $L_1$* and $L_2$* $a_1$* and $a_2$*, and $b_1$* and $b_2$* is less than 20 percent, the first structural color associated with the first color measurement and the second structural color associated with the second color measurement are the same or not perceptibly different to an average observer (e.g., the textured surface does not cause or change the structural color by less than 20 percent, 10 percent, or 5 percent). When the percent difference between one or more of values $L_1$* and $L_2$* $a_1$* and $a_2$*, and $b_1$* and $b_2$* is greater than 20 percent, the first structural color associated with the first color measurement and the second structural color associated with the second color measurement are different or perceptibly different to an average observer (e.g., the textured surface does cause or change the structural color by more than 20 percent, 10 percent, or 5 percent).

In another case, the structural color imparted by a first inorganic optical element and a second inorganic optical element, where the only different between the first and second inorganic optical element is that the first inorganic optical element includes the textured surface, can be compared at different angles of incident light upon the inorganic optical element or different observation angles. A color measurement can be performed for each of the first and second inorganic optical element at different angles (e.g., angle of about -15 and 180 degrees or about -15 degrees and +60 degrees and which are at least 15 degrees apart from each other), where a comparison of the color measurements can determine what, if any, change is correlated to the presence of the textured surface a different angles. For example, at a first observation angle the structural color is a first structural color for the first inorganic optical element and at second observation angle the structural color is a second structural color for the second inorganic optical element. The first color measurement can be obtained and has coordinates $L_1$* and $a_1$* and $b_1$*, while a second color measurement can be obtained and has coordinates $L_2$* and $a_2$* and $b_2$* can be obtained, according to the CIE 1976 color space under a given illumination condition.

When $\Delta E^*_{ab}$ between the first color measurement and the second color measurement is less than or equal to about 2.2 or is less than or equal to about 3, the first structural color associated with the first color measurement and the second structural color associated with the second color measurement are the same or not perceptibly different to

an average observer (e.g., the textured surface does not cause or change the structural color based on different angles of incident light upon the inorganic optical element or different observation angles). When $\Delta E^*_{ab}$ between the first color measurement and the second color measurement is greater than 3 or optionally greater than about 4 or 5, the first structural color associated with the first color measurement and the second structural color associated with the second color measurement are different or perceptibly different to an average observer (e.g., the textured surface does cause or change the structural color at different angles of incident light upon the inorganic optical element or different observation angles).

In another approach, when the percent difference between one or more of values $L_1^*$ and $L_2^*$ $a_1^*$ and $a_2^*$, and $b_1^*$ and $b_2^*$ is less than 20 percent, the first structural color associated with the first color measurement and the second structural color associated with the second color measurement are the same or not perceptibly different to an average observer (e.g., the textured surface does not cause or change the structural color by more than 20 percent, 10 percent, or 5 percent at different angles of incident light upon the inorganic optical element or different observation angles). When the percent difference between one or more of values $L_1^*$ and $L_2^*$ $a_1^*$ and $a_2^*$, and $b_1^*$ and $b_2^*$ is greater than 20 percent, the first structural color associated with the first color measurement and the second structural color associated with the second color measurement are different or perceptibly different to an average observer (e.g., the textured surface does cause or change the structural color by more than 20 percent, 10 percent, or 5 percent at different angles of incident light upon the inorganic optical element or different observation angles).

In another embodiment, the structural color can be imparted by the inorganic optical element without the textured surface. The surface of the layers of the optical element are substantially flat (or substantially three-dimensional flat planar surface) or flat (or three dimensional flat planar surface) at the microscale (e.g., about 1 to 500 micrometers) and/or nanoscale (e.g., about 50 to 500 nanometers). In regard to substantially flat or substantially planar the surface can include some minor topographical features (e.g., nanoscale and/or microscale) such as those that might be caused due to unintentional imperfections, slight undulations that are unintentional, other topographical features (e.g., extensions above the plane of the layer or depressions below or into the plane of the layer) caused by the equipment and/or process used and the like that are unintentionally introduced. The topographical features do not resemble profile features of the textured surface. In addition, the substantially flat (or substantially three dimensional flat planar surface) or flat (or three dimensional flat planar surface) may include curvature as the dimensions of the optical element increase, for example about 500 micrometers or more, about 10 millimeter or more, about 10 centimeters or more, depending upon the dimensions of the inorganic optical element, as long as the surface is flat or substantially flat and the surface only includes some minor topographical features.

FIG. 2B is a cross-section illustration of a substantially flat (or substantially three-dimensional flat planar surface) or flat (or three-dimensional flat planar surface) inorganic optical element 300. The inorganic optical element 300 includes one or more constituent layers 340 are disposed on the flat or three-dimensional flat planar surface structure 320 and then a reflective layer 330 and one or more constituent layers 345 are disposed on the preceding layers. The material that makes up the constituent layers and the reflective layer, number of layers of the constituent layer, the reflective layer, the thickness of each of the layers, refractive index of each layer, and the like, can produce an inorganic optical element which results in a particular structural color.

In various aspects, the component or the optical element can optionally include a primer layer. Now having described the optical element and the textured surface, additional details will be provided for the optionally present primer layer. The optical element is used to produce the structural color, where the optical element can include (e.g., as part of the optical element) or use the primer layer to produce the structural color. As described herein, the optical element can also include (e.g., as part of optical element) the optional textured surface, such as a texture layer and/or a textured structure. The combination of the optical element and the optional texture layer and the optional primer layer can form a structural color structure having one of the following designs: texture layer/primer layer/optical element or primer layer/texture layer/optical element. The primer layer can have a thickness of about 3 nanometers to 200 micrometers. The structural color structure can include the combination of the primer layer, the optical element, and (optionally) textured surface. Selection of variables associated with the primer layer, texture layer, and the optical element, can be used to control and select the desired structural color.

The structural color structure can include the primer layer, the textured surface (optionally), and the optical element (e.g., optical layer), where the optical element is disposed on the textured surface or the primer layer, depending upon the design. The combination of the primer layer, the textured surface, and the optical element imparts structural color, to the article, where the structural color is different than the primer color, optionally with or without the application of pigments or dyes to the article. The optical element can be disposed onto the primer layer and/or the textured surface. The primer layer can include the textured surface as described herein. For example, the primer layer can be formed in a way so that it has the textured surface.

The primer layer can include a paint layer (e.g., dyes, pigments, and a combination thereof), an ink layer, a reground layer, an at least partially degraded polymer layer, a metal layer, an oxide layer, or a combination thereof. The primer layer can have a light or dark color. The primer layer can have a dark color. For example the dark color can be

selected from: black, shades of black, brown, dark shades of brown, dark shades of red, dark shades of orange, dark shades of yellow, dark shades of green, dark shades of cyan, dark shades of blue, dark shades of violet, grey, dark shades of gray, dark shades of magenta, dark shades of indigo, tones, tints, shades, or hues of any of these, and a combination thereof. The color can be defined using the L*a*b system, where the value of L* can be about 70 or less, about 60 or less, about 50 or less, about 40 or less, or about 30 or less and a* and b* coordinate values can vary across the positive and negative value scales.

The primer layer can be formed using digital printing, inkjet printing, offset printing, pad printing, screen printing, flexographic printing, heat transfer printing, physical vapor deposition including: chemical vapor deposition, pulsed laser deposition, evaporative deposition, sputtering deposition (radio frequency, direct current, reactive, non-reactive), plasma enhanced chemical vapor deposition, electron beam deposition, cathodic arc deposition, low pressure chemical vapor deposition and wet chemistry techniques such as layer by layer deposition, sol-gel deposition, or Langmuir Blodgett. Alternatively or in addition, the primer layer can be applied by spray coating, dip coating, brushing, spin coating, doctor blade coating, and the like.

The primer layer can have a percent transmittance of about 40% or less, about 30% or less, about 20% or less, about 15% or less, about 10% or less, about 5% or less, or about 1% or less, where "less" can include about 0% (e.g., 0 to 0.01 or 0 to 0.1), about 1%, about 2.5%, or about 5%.

The primer layer can include a paint composition that, upon applying to the structure, forms a thin layer. The thin layer can be a solid film having a dark color, such as those described above. The paint composition can include known paint compositions that can comprise one or more of the following components: one or more paint resin, one or more polymers, one or more dyes, and one or more pigments as well as water, film-forming solvents, drying agents, thickeners, surfactants, anti-skinning agents, plasticizers, mildewcides, mar-resistant agents, anti-flooding agents, and combinations thereof.

The primer layer can comprise a reground, and at least partially degraded, polymer layer. The reground, and at least partially degraded, polymer layer can have a dark color, such as those described above.

The primer layer can include a metal layer or oxide layer. The metal layer or oxide layer can have a dark color, such as those described above. The oxide layer can be a metal oxide, a doped metal oxide, or a combination thereof. The metal layer, the metal oxide or the doped metal oxide can include the following: the transition metals, the metalloids, the lanthanides, and the actinides, as well as nitrides, oxynitrides, sulfides, sulfates, selenides, tellurides and a combination of these. The metal oxide can include titanium oxide, aluminum oxide, silicon dioxide, tin dioxide, chromia, iron oxide, nickel oxide, silver oxide, cobalt oxide, zinc oxide, platinum oxide, palladium oxide, vanadium oxide, molybdenum oxide, lead oxide, and combinations thereof as well as doped versions of each. The metal oxide can be doped with water, inert gasses (e.g., argon), reactive gasses (e.g., oxygen or nitrogen), metals, small molecules, and a combination thereof.

The primer layer can be a coating on the surface of the article. The coating can be chemically bonded (e.g., covalently bonded, ionically bonded, hydrogen bonded, and the like) to the surface of the article. The coating has been found to bond well to a surface made of a polymeric material. In an example, the surface of the article can be made of a polymeric material such as a polyurethane, including a thermoplastic polyurethane (TPU), as those described herein.

The coating can be a crosslinked coating that includes one or more colorants such as solid pigment particles or dye. The crosslinked coating can be a matrix of crosslinked polymers (e.g., a crosslinked polyester polyurethane polymer or copolymer). The colorants can be entrapped in the coating, including entrapped in the matrix of crosslinked polymers. The solid pigment particles or dye can be physically entrapped in the crosslinked polymer matrix, can be chemically bonded (e.g., covalently bonded, ionically bonded, hydrogen bonded, and the like, with the coating including the polymeric matrix or with the material forming the surface of the article to which the coating is applied), or a combination of physically bonded and chemically bonded with the coating or article. The crosslinked coating can have a thickness of about 0.01 micrometers to 1000 micrometers.

The coating can be a product (or also referred to as "crosslinked product") of crosslinking a polymeric coating composition. The polymeric coating composition can include one or more colorants (e.g., solid pigment particles or dye) in a dispersion of polymers. The dispersion of polymers can include a water-borne dispersion of polymers such as a water-borne dispersion of polyurethane polymers, including polyester polyurethane copolymers). The water-borne dispersion of polymers can be crosslinked to entrap the colorants. The colorants can be physically entrapped in the crosslinked product, can be chemically bonded (e.g., covalently bonded, ionically bonded, hydrogen bonded, and the like, with the crosslinked copolymer matrix), or can be both physically bonded and chemically bonded with the crosslinked product. The product can be formed by crosslinking the polymeric coating composition. The product can have a thickness of about 0.01 micrometer to 1000 micrometers.

The coating can include colorants such a pigment (e.g., a solid pigment particle) or a dye. The solid pigment particles can include inorganic pigments such as metal and metal oxides such as homogeneous inorganic pigments, core-shell pigments and the like, as well as carbon pigments (e.g., carbon black), clay earth pigments, and ultramarine pigments. The solid pigment particles can be biological or organic pigments. The solid pigment particles can be of a

type known in the art as an extender pigment, which include, but are not limited to, calcium carbonate, calcium silicate, mica, clay, silica, barium sulfate and the like. The amount of the solid pigment particles sufficient to achieve the desired color intensity, shade, and opacity, can be in amounts up to about 5 percent to 25 percent or more by weight of the coating. The pigments can include those sold by KP Pigments such as pearl pigments, color shift pigments (e.g., CALYPSO, JEDI, VERO, BLACKHOLE, LYNX, ROSE GOLD, and the like), hypershift pigments, interference pigments and the like.

The colorant can be a dye such as an anionic dye, a cationic dye, a direct dye, a metal complex dye, a basic dye, a disperse dye, a solvent dye, a polymeric dye, a polymeric dye colorant, or a nonionic dye, where the coating can include one or more dyes and/or types of dyes. The dye can be a water-miscible dye. The dye can be a solubilized dye. The anionic dye can be an acid dye. The dye can be applied separately from the coating (e.g., either before or after the coating is applied and/or cured).

Acid dyes are water-soluble anionic dyes. Acid dyes are available in a wide variety, from dull tones to brilliant shades. Chemically, acid dyes include azo, anthraquinone and triarylmethane compounds. The "Color Index" (C.I.), published jointly by the Society of Dyers and Colourists (UK) and by the American Association of Textile Chemists and Colorists (USA), is the most extensive compendium of dyes and pigments for large scale coloration purposes, including 12000 products under 2000 C.I. generic names. In the C.I. each compound is presented with two numbers referring to the coloristic and chemical classification. The "generic name" refers to the field of application and/or method of coloration, while the other number is the "constitution number." Examples of acid dyes include Acid Yellow 1, 17, 23, 25, 34, 42, 44, 49, 61, 79, 99, 110, 116, 127, 151, 158:1, 159, 166, 169, 194, 199, 204, 220, 232, 241, 246, and 250; Acid Red, 1, 14, 17, 18, 42, 57, 88, 97, 118, 119, 151, 183, 184, 186, 194, 195, 198, 211, 225, 226, 249, 251, 257, 260, 266, 278, 283, 315, 336, 337, 357, 359, 361, 362, 374, 405, 407, 414, 418, 419, and 447; Acid Violet 3, 5, 7, 17, 54, 90, and 92; Acid Brown 4, 14, 15, 45, 50, 58, 75, 97, 98, 147, 160:1, 161, 165, 191, 235, 239, 248, 282, 283, 289, 298, 322, 343, 349, 354, 355, 357, 365, 384, 392, 402, 414, 420, 422, 425, 432, and 434; Acid Orange 3, 7, 10, 19, 33, 56, 60, 61, 67, 74, 80, 86, 94, 139, 142, 144, 154, and 162; Acid Blue 1, 7, 9, 15, 92, 133, 158, 185, 193, 277, 277:1, 314, 324, 335, and 342; Acid Green 1, 12, 68:1, 73, 80, 104, 114, and 119; Acid Black 1, 26, 52, 58, 60, 64, 65, 71, 82, 84, 107, 164, 172, 187, 194, 207, 210, 234, 235, and combinations of these. The acid dyes may be used singly or in any combination in the ink composition.

Acid dyes and nonionic disperse dyes are commercially available from many sources, including Dystar L.P., Charlotte, NC under the tradename TELON , Huntsman Corporation, Woodlands, TX, USA under the tradename ERIONYL and TECTILON, BASF SE, Ludwigshafen, Germany under the tradename BASACID, and Bezema AG, Montlingen, Switzerland under the tradename Bemacid.

The colorant can include the dye and a quaternary (tetraalkyl) ammonium salt, in particular when the dye is acidic dye. The quaternary (tetraalkyl) ammonium salt can react with the dye (e.g., acid dye) to form a complexed dye that can be used in the coating. The "alkyl" group can include C1 to C10 alkyl groups. The quaternary (tetraalkyl) ammonium salt can be selected from soluble tetrabutylammonium compounds and tetrahexylammonium compounds. The counterion of the quaternary ammonium salt should be selected so that the quaternary ammonium salt forms a stable solution with the dye (e.g., anionic dye). The quaternary ammonium compound may be, for example, a halide (such as chloride, bromide or iodide), hydroxide, sulfate, sulfite, carbonate, perchlorate, chlorate, bromate, iodate, nitrate, nitrite, phosphate, phosphite, hexfluorophosphite, borate, tetrafluoroborate, cyanide, isocyanide, azide, thiosulfate, thiocyanate, or carboxylate (such as acetate or oxalate). The tetraalkylammonium compound can be or include a tetrabutylammonium halide or tetrahexylammonium halide, particularly a tetrabutylammonium bromide or chloride or a tetrahexylammonium bromide or chloride. The coating (e.g., coating, polymeric coating composition (prior to curing) can include about 1 to 15 weight percent of the quaternary ammonium salt. The molar ratio of the acid dye to the quaternary ammonium compound can range from about 3:1 to 1:3 or about 1.5:1 to 1:1.5.

The coating (e.g., coating, polymeric coating composition (prior to curing), monomers and/or polymers of the matrix of crosslinked polymers, or precursors of the coating) can include a cross-linker, which functions to crosslink the polymeric components of the coating. The cross-linker can be a water-borne cross-linker. The cross-linker can include one or more of the following: a polycarboxylic acid crosslinking agent, an aldehyde crosslinking agent, a polyisocyanate crosslinking agent, or a combination thereof. The polycarboxylic acid crosslinking agent can be a polycarboxylic acid having from 2 to 9 carbon atoms. For example, the cross-linker can include a polyacrylic acid, a polymaleic acid, a copolymer of acid, a copolymer of maleic acid, fumaric acid, or 1, 2, 3, 4-butanetetracarboxylic acid. The concentration of the cross-linker can be about 0.01 to 5 weight percent or 1 to 3 weight percent of the coating.

The coating (e.g., coating, polymeric coating composition (prior to curing), monomers and/or polymers of the matrix of crosslinked polymers, or precursors of the coating) can include a solvent. The solvent can be an organic solvent. The organic solvent can be a water-miscible organic solvent. The coating may not include water, or may be essentially free of water. For example, the solvent can be or includes acetone, ethanol, 2-propanol, ethyl acetate, isopropyl acetate, methanol, methyl ethyl ketone, 1-butanol, t-butanol, or any mixture thereof.

Having described the various aspects of a structurally-colored article, additional details are provided regarding

the recycled thermoplastic composition resulting from the structurally-colored articles and components. Various embodiments disclosed herein provide a composition, component or article comprising a recycled thermoplastic composition. The recycled thermoplastic composition is the result of recycling a structurally-colored article or component or composition comprising a thermoplastic material and an optical element. The recycled thermoplastic composition comprises a plurality of optical elements or fragments thereof dispersed in the thermoplastic material.

As a result of recycling, the optical element of the structurally-colored article or component is at least partially modified from its state before recycling so that it no longer exhibits or imparts an optical effect (e.g., structural color that includes a "color", an iridescent appearance, or a metallic appearance) , or at least has a diminished capacity to exhibit or impart an optical effect, to the recycled thermoplastic composition or a component or article formed from the recycled thermoplastic composition. Recycling of a structurally-colored article having an optical element, includes processing the optical element (e.g. grinding, cutting, shredding, crushing, etc.), to result in a material comprising a plurality of smaller optical elements or fragments. A portion of the optical elements and the fragments (e.g., 1 to 99 weight percent) can be deteriorated such that they do not impart an optical effect after processing. Alternatively or additionally, another portion of the optical elements and the fragments (e.g., a minority, or from 1 to 40 weight percent, or from 1 to 20 weight percent, or less than 10 weight percent) are not deteriorated and may impart a minimal optical effect, or do not impart an optical effect which is visible to a viewer having 20/20 visual acuity and normal color vision from a distance of about 1 meter. The plurality of optical elements or fragments may comprise at least partially intact portions of the optical element, e.g., smaller fragments having one or more layers of the optical element structure that are not structurally deteriorated. The plurality of optical elements or fragments may comprise portions of the optical element that are not intact, e.g., optical element is molten or otherwise transformed so that the one or more layers are no longer distinguishable, and/or have different properties than the original optical element as disposed on the structurally-colored article. However, the collective optical elements or fragments thereof dispersed in the recycled thermoplastic composition are degraded or deteriorated to a state in which they are not sufficient to impart a structural color to the recycled thermoplastic composition or articles or components formed of the recycled thermoplastic composition.

The size of the plurality of optical elements or fragments may contribute to their ability to impart an optical effect to a composition, structure, or component. For example, beyond a certain size, optical element fragments may be able to impart a structural color or iridescence to a component or structure. The optical element and the fragments of the optical element are layered structures having two or more layers stacked in a z-dimension, orthogonal to the plane of the layered stack. In addition, the optical element and the fragments of the optical element have a width in an x-dimension, a length in a *y*-dimension and a thickness in the z-dimension. In various embodiments, the dimensions of the optical elements or fragments in one or more of the length, width and/or thickness are such that they do not impart an optical effect. The thickness of the optical elements or fragments of the optical elements dispersed in the recycled thermoplastic composition can be less than 30 percent, less than 20 percent, less than 10 percent, less than 5 percent, or smaller, than the thickness of the optical element on the structurally-colored article (before recycling). The width and/or length of the fragments of the optical elements dispersed in the recycled thermoplastic composition can be at least about 50 percent, or 45 percent, or 40 percent, or 35 percent, or 25 percent, or 20 percent, or 15 percent, or 10 percent, or 5 percent, or smaller, than the width and/or length, respectively, of the optical element on the structurally-colored article (before recycling). In some embodiments, the plurality of optical elements or fragments dispersed in the recycled thermoplastic composition may have an average size of less than 400 nanometers as measured along the largest dimension (in the x-, *y*- or z-dimension), optionally less than 300 nanometers, or less than 200 nanometers, or less than 100 nanometers.

In various embodiments, the plurality of optical elements or fragments comprise from about 1 percent to about 80 percent fragments of the optical element, or from about 10 percent to about 50 percent fragments of the optical element, based on the total weight of the plurality of optical elements or fragments.

The amount of optical elements or fragments in the recycled thermoplastic composition depends in large part upon the composition of the structurally-colored articles or components being recycled. For example, where the optical element of the structurally-colored article is a discrete coating on a small portion of a surface of a larger article, then the resulting recycled thermoplastic composition will only contain a minor amount of the optical elements or fragments. In comparison, where the structurally-colored article or component is a thin film having an optical element across an entire surface, then the resulting recycled thermoplastic composition will contain a greater amount of optical elements or fragments. In some embodiments, a recycled thermoplastic composition comprises less than 20 weight percent, or less than 10 weight percent, or less than 5 weight percent, or less than 3 weight percent, or less than 2 weight percent, or less than 1 weight percent of optical elements or fragments, based on the total weight of the recycled thermoplastic composition.

The amount of the optical elements or fragments in a composition or structure may contribute to the ability of the optical elements to impart an optical effect to a composition, structure, or component. In some embodiments, a component or article may include a composition utilizing the recycled thermoplastic composition, where the composition comprises from about 0.01 percent to about 20 percent optical elements or fragments, or from about 1 percent to about

10 percent optical elements or fragments, based on the total weight of the composition.

The recycled thermoplastic composition also includes a thermoplastic material. As a result of recycling, the thermoplastic material in the recycled thermoplastic composition may be substantially the same as the respective thermoplastic material before recycling. However, it is possible that the thermoplastic material in the recycled thermoplastic composition may be at least partially modified as a result of one or more of the recycling methods or steps. For example, the thermoplastic material may be in a different form - e.g., smaller pieces, particulate or molten form - or may have one or more modified material properties resulting from recycling process, e.g., one or more of molecular weight, specific gravity, melt flow index. In various embodiments, the material properties of the thermoplastic material in the recycled thermoplastic composition are within about plus or minus 20 percent of the respective properties of the thermoplastic material before recycling.

In some aspects, the structurally-colored article or component may comprise a composition that includes one or more colorants, such as pigments or dyes added to the thermoplastic material, or to a coating on the article or component. The recycling methods described herein will not chemically alter the colorants, nor reduce or remove the colorants. As a result of the recycling methods, the recycled thermoplastic composition will comprise the colorants.

In various aspects, the recycled thermoplastic composition is blended with one or more additional materials, such as an additional thermoplastic material. In various aspects, the one or more additional thermoplastic materials is the same or substantially the same thermoplastic material as the recycled thermoplastic composition. For example, the recycled thermoplastic composition may result from recycling a structurally-colored article comprising a thermoplastic polyurethane, and recycled thermoplastic composition is then blended with an additional amount of thermoplastic polyurethane, or a blend containing thermoplastic polyurethane. In other aspects, the one or more additional thermoplastic materials is a different material. For example, the recycled thermoplastic composition may result from recycling an article comprising a first thermoplastic material, and the additional thermoplastic material includes a thermoplastic material other than the first thermoplastic material. In some aspects, the additional thermoplastic material may be a virgin material, i.e., one that has not been recycled. In some aspects, the additional thermoplastic materials may comprise, at least in part, a recycled thermoplastic material.

In various aspects, a composition including the recycled thermoplastic composition may comprise at least 25 weight percent, or at least 50 weight percent, or at least 75 weight percent, or at least 90 weight percent, or at least 95 weight percent of a second thermoplastic material. The second thermoplastic material may be the same (or substantially the same) or different from the thermoplastic material of the recycled thermoplastic composition. For example, the polymeric component of the second thermoplastic composition may be the same or substantially the same as the polymeric component of the recycled thermoplastic composition, or it may be different therefrom.

Optionally, the recycled thermoplastic composition may also include one or more additives. Exemplary additives can include pigments, stabilizers, flame retardants, wax, antioxidants, etc. The optional additives may be provided, for example, to improve the material properties of the recycled thermoplastic composition, or to facilitate its processability. For example, the recycled thermoplastic composition may optionally include a plasticizer to increase the flexibility and durability of the final product, and/or to facilitate the processing of the material through subsequent process such as extruding or molding. The recycled thermoplastic composition may optionally include a processing aid such as a mold release agent or lubricant. One having ordinary skill in the art would recognize these and other optional additives that could be added to the recycled thermoplastic composition to achieve a necessary or desired result.

According to various embodiments, recycled thermoplastic compositions and articles or components therefrom have different optical properties from the structurally-colored articles or components before recycling.

In some embodiments, a colored structure or component can be characterized by a Recycle Optical Property Differential. The Recycle Optical Property Differential is a measure of the change in an optical property of a structure before and after recycling. In this context, the optical property can include, for example, a visible light transmittance measurement, a visible light reflectance measurement, or a color measurement. A greater Recycle Optical Property Differential indicates a greater change in the optical property due to recycling. Conversely, a smaller Recycle Optical Property Differential indicates a lesser change in the optical property due to recycling.

According to this method, a target surface of the structure or component is identified and isolated. The target surface is one that is representative of the component or structure as it is visible, including the color or optical effects exhibited by the structure or component. For example, if the structure or component is colored using a pigment or dye in the thermoplastic material, the target surface would be identified on a side of the component or structure having a representative amount of pigment or dye in its thermoplastic material; if the structure or component is colored using a coating, then the target surface would have a representative coating across the target surface.

The Recycle Optical Property Differential may be measured for the target surface of a structure or component, using the method described further herein. The Recycle Optical Property Differential for a structurally-colored component or article is greater than that of a component or article that is colored using conventional colorants such as dyes or pigments. In components or articles that are colored using dyes or pigments, the dyes or pigments are carried through the recycling process into the recycled thermoplastic composition. As a result, the optical property of the first structure

and the second structure are not substantially different. In contrast, for a component that is structurally colored with an optical element, the structural color is dependent upon the structure of the optical element, e.g., existence and relationship of the various layers of the optical element. Recycling of a structure comprising optical elements results in a structural deterioration of the optical elements, creating optical elements or fragments thereof that have different sizes, structures, and layers. As a result, the optical elements or fragments thereof in a recycled thermoplastic composition do not exhibit or impart the same optical effects as they did on the structurally-colored articles. Consequently, structurally-colored components or articles have a relatively higher Recycle Optical Property Differential than that of conventionally-colored components and articles.

In various embodiments, a structurally-colored component or article comprises a Recycled Optical Property Differential of greater than 40 percent, or greater than 45 percent or greater than 50 percent, or greater than 55 percent, or greater than 60 percent, or greater than 65 percent, or greater than 70 percent, or greater than 75 percent, or greater than 80 percent, or greater than 85 percent, or greater than 90 percent.

According to various embodiments, recycled thermoplastic compositions and articles or components made therefrom have very similar optical properties to similar compositions articles or components that do not include optical elements or fragments. For example, a first sheet or film comprising a first thermoplastic material and a recycled thermoplastic composition comprising optical elements or fragments thereof, may have a first optical property (e.g., visible light transmittance, color measurement, or both) that is within about 10 percent of the same optical property (e.g., visible light transmittance, color measurement, or both, respectively) of a sheet or film comprising just the first thermoplastic material (i.e., in the absence of the optical element or fragments). Because the recycled thermoplastic composition does not significantly change the optical properties of the first thermoplastic material, it can be combined more readily with the first thermoplastic material without a significant visual impact to the resultant composition, component or article. As a result, a higher percentage of the recycled thermoplastic composition can be included in the recycle stream used in the manufacture of materials and goods.

In various embodiments, a component or article comprising a recycled thermoplastic composition that includes a first thermoplastic material and an optical element or fragment thereof has a minimum visible light transmittance that is within 10 percent (plus or minus), or within 9 percent, or within 8 percent, or within 7 percent, or within 6 percent, or within 5 percent, or within 4 percent, or within 3 percent, or within 2 percent of the visible light transmittance of a component or article comprising the first polymeric material in the absence of the optical element or fragment thereof.

In various embodiments a component or article comprising a recycled thermoplastic composition that includes a first thermoplastic material and an optical element or fragment thereof has color measurement that is within 10 percent (plus or minus), or within 9 percent, or within 8 percent, or within 7 percent, or within 6 percent, or within 5 percent, or within 4 percent, or within 3 percent, or within 2 percent of a color measurement of a component or article comprising the first polymeric material in the absence of the optical element or fragment thereof. In some embodiments, the first thermoplastic material may be colored, e.g., with a dye or pigment. Regardless of whether the first thermoplastic material has a colorant, the color measurement of the recycled thermoplastic composition comprising an optical element or fragment thereof will be similar to the color measurement of the first thermoplastic material in the absence of the optical element or fragment.

In various embodiments, the color measurement of two articles may be characterized and compared according to the CIE 1976 color space. Under a given illumination condition at an observation angle of about -15 to 180 degrees or about -15 degrees and +60 degrees, a first structure compositionally comprising a first thermoplastic material and an optical element or fragment thereof has a first color measurement having coordinates $L_1^*$ and $a_1^*$ and $b_1^*$, and a second structure compositionally comprising the first thermoplastic material in the absence of the optical element or fragment thereof has a second color measurement having coordinates $L_2^*$ and $a_2^*$ and $b_2^*$, wherein the $\Delta E^*_{ab}$ between the first color measurement and the second color measurement is less than or equal to about 4, where $\Delta E^*_{ab} = [(L_1^*-L_2^*)^2 + (a_1^*-a_2^*)^2 + (b_1^*-b_2^*)^2]^{1/2}$, or optionally the $\Delta E^*_{ab}$ is less than or equal to about 3, or optionally is less than or equal to about 2, or optionally is less than or equal to about 1.

Having discussed the recycled thermoplastic compositions, we now provide further details regarding the method of recycling a structurally-colored article or component.

According to the various embodiments, the method of recycling includes a step of transforming a structurally-colored article into a recycled thermoplastic composition. Before transforming, the structurally-colored article includes at least one structure that includes a thermoplastic material and has an optical element disposed on a side of the structure that imparts a structural color to the structure. After transforming, the resultant recycled thermoplastic composition comprises the thermoplastic material, and a plurality of optical elements or fragments thereof dispersed in the thermoplastic material. In certain embodiments, the transforming step can include any process or combination of processes that may be employed to act upon a recyclable material to produce a material with a sufficiently small particle size to render the material fit for use in subsequent polymeric processing methods. Exemplary processes include grinding the article or portion thereof, cutting the article or portion thereof, or a combination of the foregoing. Exemplary grinding or cutting techniques include, but are not limited to, grinding (or regrinding), cutting, shredding, crushing, comminuting,

pulverizing, flaking, and the like. The particle size produced from processing the article is not limited except to the extent that the particles should be of a size sufficient or suitable for use in a polymeric processing operation such as, for example, to achieve appropriate softening or melting properties, or for use in a mixer or extrusion process.

In various aspects, the transforming may include melting the article, or a portion thereof. For example, the ground or cut thermoplastic material may be heated to produce a material that is at least partially molten. In various embodiments, the first thermoplastic material has a first glass transition temperature. In the melting step, the temperature of the ground or cut material may be increased, e.g., by an appropriate heating device, to a temperature above the first glass transition temperature to produce a material that is at least partially molten. The molten material may be further processed, e.g., by filtering or the like, as necessary or desired, to render it suitable for further processing.

According to the various embodiments, the method of recycling does not include chemically altering any colorants, nor does it include reducing or removing any colorants. In other words, if the structurally-colored article includes any pigments or dyes, these pigments or dyes will be carried through the method of recycling, and will be included in the recycled thermoplastic composition, and any structures or articles that include the recycled thermoplastic composition.

The method of recycling may optionally comprise extruding the molten material, or co-extruding the molten material, with one or more additional materials. The extrusion can be performed using any extruder known in the art. In some embodiments, the recycled thermoplastic composition may be extruded (or co-extruded) into a film or sheet or web. In some embodiments, the recycled thermoplastic composition may be extruded to form fibers and/or non-woven webs. In some embodiments, the extruded material may be laminated to one or more additional materials. For example, the recycled thermoplastic composition may be extruded (or co-extruded) into a film or sheet or web that is laminated to another web.

The method of recycling may optionally comprise pelletizing the ground, molten or extruded material. For example, the extruder may extrude the molten material into the shape of pellets, or the molten or extruded material may otherwise be formed into pellets having a desired size and shape. The pellets may then be solidified, for example, by reducing the temperature of the extruded material below the glass transition temperature of the pelletized material.

The method of recycling may optionally comprise blending or mixing of the recycled thermoplastic material with one or more additional thermoplastic materials. The blending step may occur before, during, or after one or more of the grinding or cutting, the melting, the extruding, and/or the pelletizing steps. The blending step may use static mixers, or other devices to provide a necessary or desired mixing or blending of the thermoplastic material.

The method of recycling may further comprise forming another article of a second composition comprising the recycled thermoplastic composition. The second composition may comprise from about 1 weight percent to about 100 weight percent of the recycled thermoplastic composition.

The method of recycling may optionally comprise decorating or coloring the recycled thermoplastic composition or components or articles formed therefrom. For example, the resulting articles can be colored with one or more dyes or pigments, or can be printed with a desired pattern. In some embodiments, an optical element may be disposed on an article formed from the recycled thermoplastic composition, to impart a structural color to the article.

Additional details are provided regarding the polymeric materials referenced herein for example, the thermoplastic polymers and materials described in reference to the article, components of the article, structures, layers, films, bladders, foams, primer layer, coating, and like the. The thermoplastic materials are described in reference to the structurally-colored articles before recycling, as well as the recycled thermoplastic compositions, and compositions including the recycled thermoplastic compositions. The thermoplastic material can include, as a polymeric component, a thermoplastic polymer, optionally a thermoplastic elastomer. The thermoplastic polymer can include one or more thermoplastic polyurethanes, thermoplastic polyethers, thermoplastic polyesters, thermoplastic polyamides, thermoplastic polyolefins, thermoplastic co-polymers thereof, or a combination thereof.

The polymeric component of the thermoplastic materials can comprise or consist essentially of thermoplastic polyurethanes, including thermoplastic polyester polyurethane copolymers. The polymeric component of the thermoplastic materials can comprise or consist essentially of thermoplastic polyesters. The polymeric component of the thermoplastic materials can comprise or consist essentially of thermoplastic polyethers. The polymeric component of the thermoplastic materials can comprise or consist essentially of thermoplastic polyamides, including thermoplastic polyamide copolymers such as polyether block amide (PEBA) block copolymers. The polymeric component of the thermoplastic materials can comprise or consist essentially of thermoplastic polyolefins, including thermoplastic polypropylenes, thermoplastic polyethylenes, and copolymers of ethylene or polypropylene, such as ethylene-vinyl acetate or ethylene-vinyl alcohol copolymers.

In a particular example, the polymeric component of a recycled thermoplastic composition can comprise or consist essentially of thermoplastic polyurethanes, and the recycled thermoplastic composition may be combined with a thermoplastic material having a polymeric component that can comprise or consist essentially of a mixture of thermoplastic polyurethanes and thermoplastic ethylene-vinyl alcohol copolymers.

The term "polymer" refers to a chemical compound formed of a plurality of repeating structural units referred to as monomers. Polymers often are formed by a polymerization reaction in which the plurality of structural units become

covalently bonded together. When the monomer units forming the polymer all have the same chemical structure, the polymer is a homopolymer. When the polymer includes two or more monomer units having different chemical structures, the polymer is a copolymer. One example of a type of copolymer is a terpolymer, which includes three different types of monomer units. The co-polymer can include two or more different monomers randomly distributed in the polymer (*e.g.*, a random co-polymer). Alternatively, one or more blocks containing a plurality of a first type of monomer can be bonded to one or more blocks containing a plurality of a second type of monomer, forming a block copolymer. A single monomer unit can include one or more different chemical functional groups.

Polymers having repeating units which include two or more types of chemical functional groups can be referred to as having two or more segments. For example, a polymer having repeating units of the same chemical structure can be referred to as having repeating segments. Segments are commonly described as being relatively harder or softer based on their chemical structures, and it is common for polymers to include relatively harder segments and relatively softer segments bonded to each other in a single monomeric unit or in different monomeric units. When the polymer includes repeating segments, physical interactions or chemical bonds can be present within the segments or between the segments or both within and between the segments. Examples of segments often referred to as hard segments include segments including a urethane linkage, which can be formed from reacting an isocyanate with a polyol to form a polyurethane. Examples of segments often referred to as soft segments include segments including an alkoxy functional group, such as segments including ether or ester functional groups, and polyester segments. Segments can be referred to based on the name of the functional group present in the segment (*e.g.*, a polyether segment, a polyester segment), as well as based on the name of the chemical structure which was reacted in order to form the segment (*e.g.*, a polyol-derived segment, an isocyanate-derived segment). When referring to segments of a particular functional group or of a particular chemical structure from which the segment was derived, it is understood that the polymer can contain up to 10 mole percent of segments of other functional groups or derived from other chemical structures. For example, as used herein, a polyether segment is understood to include up to 10 mole percent of non-polyether segments.

As previously described, the polymer can be a thermoplastic polymer. In general, a thermoplastic polymer softens or melts when heated and returns to a solid state when cooled. The thermoplastic polymer transitions from a solid state to a softened state when its temperature is increased to a temperature at or above its softening temperature, and a liquid state when its temperature is increased to a temperature at or above its melting temperature. When sufficiently cooled, the thermoplastic polymer transitions from the softened or liquid state to the solid state. As such, the thermoplastic polymer may be softened or melted, molded, cooled, re-softened or re-melted, re-molded, and cooled again through multiple cycles. For amorphous thermoplastic polymers, the solid state is understood to be the "rubbery" state above the glass transition temperature of the polymer. The thermoplastic polymer can have a melting temperature from about 90 degrees C to about 190 degrees C when determined in accordance with ASTM D3418-97 as described herein below, and includes all subranges therein in increments of 1 degree. The thermoplastic polymer can have a melting temperature from about 93 degrees C to about 99 degrees C when determined in accordance with ASTM D3418-97 as described herein below. The thermoplastic polymer can have a melting temperature from about 112 degrees C to about 118 degrees C when determined in accordance with ASTM D3418-97 as described herein below.

The glass transition temperature is the temperature at which an amorphous polymer transitions from a relatively brittle "glassy" state to a relatively more flexible "rubbery" state. The thermoplastic polymer can have a glass transition temperature from about -20 degrees C to about 30 degrees C when determined in accordance with ASTM D3418-97 as described herein below. The thermoplastic polymer can have a glass transition temperature (from about -13 degree C to about -7 degrees C when determined in accordance with ASTM D3418-97 as described herein below. The thermoplastic polymer can have a glass transition temperature from about 17 degrees C to about 23 degrees C when determined in accordance with ASTM D3418-97 as described herein below.

The thermoplastic polymer can have a melt flow index from about 10 to about 30 cubic centimeters per 10 minutes ($cm^3$/10 min) when tested in accordance with ASTM D1238-13 as described herein below at 160 degrees C using a weight of 2.16 kilograms (kg). The thermoplastic polymer can have a melt flow index from about 22 $cm^3$/10 min to about 28 $cm^3$/10 min when tested in accordance with ASTM D1238-13 as described herein below at 160 degrees C using a weight of 2.16 kg.

The thermoplastic polymer can have a cold Ross flex test result of about 120,000 to about 180,000 cycles without cracking or whitening when tested on a thermoformed plaque of the thermoplastic polymer in accordance with the cold Ross flex test as described herein below. The thermoplastic polymer can have a cold Ross flex test result of about 140,000 to about 160,000 cycles without cracking or whitening when tested on a thermoformed plaque of the thermoplastic polymer in accordance with the cold Ross flex test as described herein below.

The thermoplastic polymer can have a modulus from about 5 megaPascals (MPa) to about 100 MPa when determined on a thermoformed plaque in accordance with ASTM D412-98 Standard Test Methods for Vulcanized Rubber and Thermoplastic Rubbers and Thermoplastic Elastomers-Tension with modifications described herein below. The thermoplastic polymer can have a modulus from about 20 MPa to about 80 MPa when determined on a thermoformed plaque in accordance with ASTM D412-98 Standard Test Methods for Vulcanized Rubber and Thermoplastic Rubbers

and Thermoplastic Elastomers-Tension with modifications described herein below.

The polymer can be a thermoset polymer. As used herein, a "thermoset polymer" is understood to refer to a polymer which cannot be heated and melted, as its melting temperature is at or above its decomposition temperature. A "thermoset material" refers to a material which comprises at least one thermoset polymer. The thermoset polymer and/or thermoset material can be prepared from a precursor (*e.g.*, an uncured or partially cured polymer or material) using thermal energy and/or actinic radiation (*e.g.*, ultraviolet radiation, visible radiation, high energy radiation, infrared radiation) to form a partially cured or fully cured polymer or material which no longer remains fully thermoplastic. In some cases, the cured or partially cured polymer or material may remain thermoelastic properties, in that it is possible to partially soften and mold the polymer or material at elevated temperatures and/or pressures, but it is not possible to melt the polymer or material. The curing can be promoted, for example, with the use of high pressure and/or a catalyst. In many examples, the curing process is irreversible since it results in cross-linking and/or polymerization reactions of the precursors. The uncured or partially cured polymers or materials can be malleable or liquid prior to curing. In some cases, the uncured or partially cured polymers or materials can be molded into their final shape, or used as adhesives. Once hardened, a thermoset polymer or material cannot be re-melted in order to be reshaped. The textured surface can be formed by partially or fully curing an uncured precursor material to lock in the textured surface.

Polyurethane

The polymer can be a polyurethane, such as a thermoplastic polyurethane (also referred to as "TPU"). Alternatively, the polymer can be a thermoset polyurethane. Additionally, polyurethane can be an elastomeric polyurethane, including an elastomeric TPU or an elastomeric thermoset polyurethane. The elastomeric polyurethane can include hard and soft segments. The hard segments can comprise or consist of urethane segments (*e.g.*, isocyanate-derived segments). The soft segments can comprise or consist of alkoxy segments (*e.g.*, polyol-derived segments including polyether segments, or polyester segments, or a combination of polyether segments and polyester segments). The polyurethane can comprise or consist essentially of an elastomeric polyurethane having repeating hard segments and repeating soft segments.

One or more of the polyurethanes can be produced by polymerizing one or more isocyanates with one or more polyols to produce polymer chains having carbamate linkages (-N(CO)O-) as illustrated below in Formula 1, where the isocyanate(s) each preferably include two or more isocyanate (-NCO) groups per molecule, such as 2, 3, or 4 isocyanate groups per molecule (although, mono-functional isocyanates can also be optionally included, e.g., as chain terminating units).

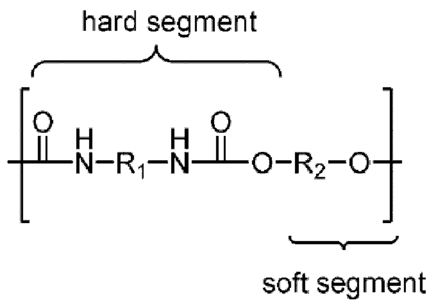

(Formula 1)

Each $R_1$ group and $R_2$ group independently is an aliphatic or aromatic group. Optionally, each $R_2$ can be a relatively hydrophilic group, including a group having one or more hydroxyl groups.

Additionally, the isocyanates can also be chain extended with one or more chain extenders to bridge two or more isocyanates, increasing the length of the hard segment. This can produce polyurethane polymer chains as illustrated below in Formula 2, where $R_3$ includes the chain extender. As with each $R_1$ and $R_3$, each $R_3$ independently is an aliphatic or aromatic functional group.

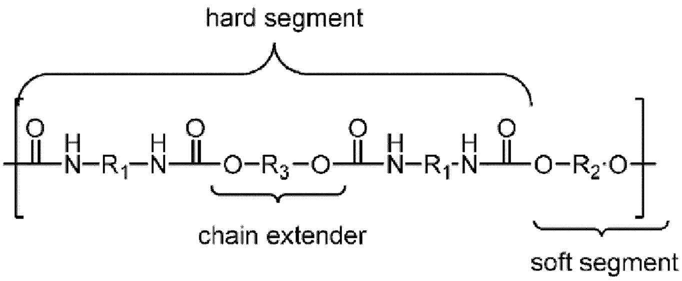


(Formula 2)

Each $R_1$ group in Formulas 1 and 2 can independently include a linear or branched group having from 3 to 30 carbon atoms, based on the particular isocyanate(s) used, and can be aliphatic, aromatic, or include a combination of aliphatic portions(s) and aromatic portion(s). The term "aliphatic" refers to a saturated or unsaturated organic molecule or portion of a molecule that does not include a cyclically conjugated ring system having delocalized pi electrons. In comparison, the term "aromatic" refers to an organic molecule or portion of a molecule having a cyclically conjugated ring system with delocalized pi electrons, which exhibits greater stability than a hypothetical ring system having localized pi electrons.

Each $R_1$ group can be present in an amount of about 5 percent to about 85 percent by weight, from about 5 percent to about 70 percent by weight, or from about 10 percent to about 50 percent by weight, based on the total weight of the reactant compounds or monomers which form the polymer.

In aliphatic embodiments (from aliphatic isocyanate(s)), each $R_1$ group can include a linear aliphatic group, a branched aliphatic group, a cycloaliphatic group, or combinations thereof. For instance, each $R_1$ group can include a linear or branched alkylene group having from 3 to 20 carbon atoms (*e.g.*, an alkylene having from 4 to 15 carbon atoms, or an alkylene having from 6 to 10 carbon atoms), one or more cycloalkylene groups having from 3 to 8 carbon atoms (*e.g.*, cyclopropyl, cyclobutyl, cyclopentyl, cyclohexyl, cycloheptyl, or cyclooctyl), and combinations thereof. The term "alkene" or "alkylene" as used herein refers to a bivalent hydrocarbon. When used in association with the term $C_n$ it means the alkene or alkylene group has "n" carbon atoms. For example, $C_{1-6}$ alkylene refers to an alkylene group having, *e.g.*, 1, 2, 3, 4, 5, or 6 carbon atoms.

Examples of suitable aliphatic diisocyanates for producing the polyurethane polymer chains include hexamethylene diisocyanate (HDI), isophorone diisocyanate (IPDI), butylenediisocyanate (BDI), bisisocyanatocyclohexylmethane (HMDI), 2,2,4-trimethylhexamethylene diisocyanate (TMDI), bisisocyanatomethylcyclohexane, bisisocyanatomethyltricyclodecane, norbornane diisocyanate (NDI), cyclohexane diisocyanate (CHDI), 4,4'-dicyclohexylmethane diisocyanate (H12MDI), diisocyanatododecane, lysine diisocyanate, and combinations thereof.

The isocyanate-derived segments can include segments derived from aliphatic diisocyanate. A majority of the isocyanate-derived segments can comprise segments derived from aliphatic diisocyanates. At least 90% of the isocyanate-derived segments are derived from aliphatic diisocyanates. The isocyanate-derived segments can consist essentially of segments derived from aliphatic diisocyanates. The aliphatic diisocyanate-derived segments can be derived substantially (*e.g.*, about 50 percent or more, about 60 percent or more, about 70 percent or more, about 80 percent or more, about 90 percent or more) from linear aliphatic diisocyanates. At least 80% of the aliphatic diisocyanate-derived segments can be derived from aliphatic diisocyanates that are free of side chains. The segments derived from aliphatic diisocyanates can include linear aliphatic diisocyanates having from 2 to 10 carbon atoms.

When the isocyanate-derived segments are derived from aromatic isocyanate(s)), each $R_1$ group can include one or more aromatic groups, such as phenyl, naphthyl, tetrahydronaphthyl, phenanthrenyl, biphenylenyl, indanyl, indenyl, anthracenyl, and fluorenyl. Unless otherwise indicated, an aromatic group can be an unsubstituted aromatic group or a substituted aromatic group, and can also include heteroaromatic groups. "Heteroaromatic" refers to monocyclic or polycyclic (*e.g.*, fused bicyclic and fused tricyclic) aromatic ring systems, where one to four ring atoms are selected from oxygen, nitrogen, or sulfur, and the remaining ring atoms are carbon, and where the ring system is joined to the remainder of the molecule by any of the ring atoms. Examples of suitable heteroaryl groups include pyridyl, pyrazinyl, pyrimidinyl, pyrrolyl, pyrazolyl, imidazolyl, thiazolyl, tetrazolyl, oxazolyl, isooxazolyl, thiadiazolyl, oxadiazolyl, furanyl, quinolinyl, isoquinolinyl, benzoxazolyl, benzimidazolyl, and benzothiazolyl groups.

Examples of suitable aromatic diisocyanates for producing the polyurethane polymer chains include toluene diisocyanate (TDI), TDI adducts with trimethyloylpropane (TMP), methylene diphenyl diisocyanate (MDI), xylene diisocyanate (XDI), tetramethylxylylene diisocyanate (TMXDI), hydrogenated xylene diisocyanate (HXDI), naphthalene 1,5-diisocyanate (NDI), 1,5-tetrahydronaphthalene diisocyanate, para-phenylene diisocyanate (PPDI), 3,3' -dimethyldipheny1-4, 4' -diisocyanate (DDDI), 4,4 '-dibenzyl diisocyanate (DBDI), 4-chloro-1,3-phenylene diisocyanate,

and combinations thereof. The polymer chains can be substantially free of aromatic groups.

The polyurethane polymer chains can be produced from diisocyanates including HMDI, TDI, MDI, $H_{12}$ aliphatics, and combinations thereof. For example, the polyurethane can comprise one or more polyurethane polymer chains produced from diisocyanates including HMDI, TDI, MDI, $H_{12}$ aliphatics, and combinations thereof.

Polyurethane chains which are at least partially crosslinked or which can be crosslinked, can be used in accordance with the present disclosure. It is possible to produce crosslinked or crosslinkable polyurethane chains by reacting multi-functional isocyanates to form the polyurethane. Examples of suitable triisocyanates for producing the polyurethane chains include TDI, HDI, and IPDI adducts with trimethyloylpropane (TMP), uretdiones (i.e., dimerized isocyanates), polymeric MDI, and combinations thereof.

The $R_3$ group in Formula 2 can include a linear or branched group having from 2 to 10 carbon atoms, based on the particular chain extender polyol used, and can be, for example, aliphatic, aromatic, or an ether or polyether. Examples of suitable chain extender polyols for producing the polyurethane include ethylene glycol, lower oligomers of ethylene glycol (*e.g.*, diethylene glycol, triethylene glycol, and tetraethylene glycol), 1,2-propylene glycol, 1,3-propylene glycol, lower oligomers of propylene glycol (*e.g.*, dipropylene glycol, tripropylene glycol, and tetrapropylene glycol), 1,4-butylene glycol, 2,3-butylene glycol, 1,6-hexanediol, 1,8-octanediol, neopentyl glycol, 1 ,4-cyclohexanedimethanol, 2-ethyl-1,6-hexanediol, 1-methyl-1,3-propanediol, 2-methyl-1,3-propanediol, dihydroxyalkylated aromatic compounds (*e.g.*, bis(2-hydroxyethyl) ethers of hydroquinone and resorcinol, xylene-a,a-diols, bis(2-hydroxyethyl) ethers of xylene-a,a-diols, and combinations thereof.

The $R_2$ group in Formula 1 and 2 can include a polyether group, a polyester group, a polycarbonate group, an aliphatic group, or an aromatic group. Each $R_2$ group can be present in an amount of about 5 percent to about 85 percent by weight, from about 5 percent to about 70 percent by weight, or from about 10 percent to about 50 percent by weight, based on the total weight of the reactant monomers.

At least one $R_2$ group of the polyurethane includes a polyether segment (i.e., a segment having one or more ether groups). Suitable polyether groups include, but are not limited to, polyethylene oxide (PEO), polypropylene oxide (PPO), polytetrahydrofuran (PTHF), polytetramethylene oxide (PTMO), and combinations thereof. The term "alkyl" as used herein refers to straight chained and branched saturated hydrocarbon groups containing one to thirty carbon atoms, for example, one to twenty carbon atoms, or one to ten carbon atoms. When used in association with the term $C_n$ it means the alkyl group has "n" carbon atoms. For example, $C_4$ alkyl refers to an alkyl group that has 4 carbon atoms. $C_{1-7}$alkyl refers to an alkyl group having a number of carbon atoms encompassing the entire range (i.e., 1 to 7 carbon atoms), as well as all subgroups (e.g., 1-6, 2-7, 1-5, 3-6, 1, 2, 3, 4, 5, 6, and 7 carbon atoms). Non-limiting examples of alkyl groups include, methyl, ethyl, n-propyl, isopropyl, n-butyl, sec-butyl (2-methylpropyl), t-butyl (1,1- dimethylethyl), 3,3-dimethylpentyl, and 2-ethylhexyl. Unless otherwise indicated, an alkyl group can be an unsubstituted alkyl group or a substituted alkyl group.

In some examples of the polyurethane, the at least one $R_2$ group includes a polyester group. The polyester group can be derived from the polyesterification of one or more dihydric alcohols (*e.g.*, ethylene glycol, 1,3-propylene glycol, 1,2-propylene glycol, 1,4-butanediol, 1,3-butanediol, 2-methylpentanediol-1,5,diethylene glycol, 1,5-pentanediol, 1,5-hexanediol, 1,2-dodecanediol, cyclohexanedimethanol, and combinations thereof) with one or more dicarboxylic acids (*e.g.*, adipic acid, succinic acid, sebacic acid, suberic acid, methyladipic acid, glutaric acid, pimelic acid, azelaic acid, thiodipropionic acid and citraconic acid and combinations thereof). The polyester group also can be derived from polycarbonate prepolymers, such as poly(hexamethylene carbonate) glycol, polypropylene carbonate) glycol, poly(tetramethylene carbonate)glycol, and poly(nonanemethylene carbonate) glycol. Suitable polyesters can include, for example, polyethylene adipate (PEA), poly(1,4-butylene adipate), poly(tetramethylene adipate), poly(hexamethylene adipate), polycaprolactone, polyhexamethylene carbonate, polypropylene carbonate), poly(tetramethylene carbonate), poly(nonanemethylene carbonate), and combinations thereof.

At least one $R_2$ group can include a polycarbonate group. The polycarbonate group can be derived from the reaction of one or more dihydric alcohols (*e.g.*, ethylene glycol, 1,3-propylene glycol, 1,2-propylene glycol, 1,4-butanediol, 1,3-butanediol, 2-methylpentanedio1-1,5, diethylene glycol, 1,5-pentanediol, 1,5-hexanediol, 1,2-dodecanediol, cyclohexanedimethanol, and combinations thereof) with ethylene carbonate.

The aliphatic group can be linear and can include, for example, an alkylene chain having from 1 to 20 carbon atoms or an alkenylene chain having from 1 to 20 carbon atoms (*e.g.*, methylene, ethylene, propylene, butylene, pentylene, hexylene, heptylene, octylene, nonylene, decylene, undecylene, dodecylene, tridecylene, ethenylene, propenylene, butenylene, pentenylene, hexenylene, heptenylene, octenylene, nonenylene, decenylene, undecenylene, dodecenylene, tridecenylene). The term "alkene" or "alkylene" refers to a bivalent hydrocarbon. The term "alkenylene" refers to a bivalent hydrocarbon molecule or portion of a molecule having at least one double bond.

The aliphatic and aromatic groups can be substituted with one or more pendant relatively hydrophilic and/or charged groups. The pendant hydrophilic group can include one or more (*e.g.*, 2, 3, 4, 5, 6, 7, 8, 9, 10 or more) hydroxyl groups. The pendant hydrophilic group includes one or more (*e.g.*, 2, 3, 4, 5, 6, 7, 8, 9, 10 or more) amino groups. In some cases, the pendant hydrophilic group includes one or more (*e.g.*, 2, 3, 4, 5, 6, 7, 8, 9, 10 or more) carboxylate

groups. For example, the aliphatic group can include one or more polyacrylic acid group. In some cases, the pendant hydrophilic group includes one or more (*e.g.*, 2, 3, 4, 5, 6, 7, 8, 9, 10 or more) sulfonate groups. In some cases, the pendant hydrophilic group includes one or more (*e.g.*, 2, 3, 4, 5, 6, 7, 8, 9, 10 or more) phosphate groups. In some examples, the pendant hydrophilic group includes one or more ammonium groups (e.g., tertiary and/or quaternary ammonium). In other examples, the pendant hydrophilic group includes one or more zwitterionic groups (*e.g.*, a betaine, such as poly(carboxybetaine (pCB) and ammonium phosphonate groups such as a phosphatidylcholine group).

The $R_2$ group can include charged groups that are capable of binding to a counterion to ionically crosslink the polymer and form ionomers. For example, $R_2$ is an aliphatic or aromatic group having pendant amino, carboxylate, sulfonate, phosphate, ammonium, or zwitterionic groups, or combinations thereof.

When a pendant hydrophilic group is present, the pendant hydrophilic group can be at least one polyether group, such as two polyether groups. In other cases, the pendant hydrophilic group is at least one polyester. The pendant hydrophilic group can be a polylactone group (*e.g.*, polyvinylpyrrolidone). Each carbon atom of the pendant hydrophilic group can optionally be substituted with, *e.g.*, an alkyl group having from 1 to 6 carbon atoms. The aliphatic and aromatic groups can be graft polymeric groups, wherein the pendant groups are homopolymeric groups (*e.g.*, polyether groups, polyester groups, polyvinylpyrrolidone groups).

The pendant hydrophilic group can be a polyether group (*e.g.*, a polyethylene oxide (PEO) group, a polyethylene glycol (PEG) group), a polyvinylpyrrolidone group, a polyacrylic acid group, or combinations thereof.

The pendant hydrophilic group can be bonded to the aliphatic group or aromatic group through a linker. The linker can be any bifunctional small molecule (*e.g.*, one having from 1 to 20 carbon atoms) capable of linking the pendant hydrophilic group to the aliphatic or aromatic group. For example, the linker can include a diisocyanate group, as previously described herein, which when linked to the pendant hydrophilic group and to the aliphatic or aromatic group forms a carbamate bond. The linker can be 4,4'-diphenylmethane diisocyanate (MDI), as shown below.

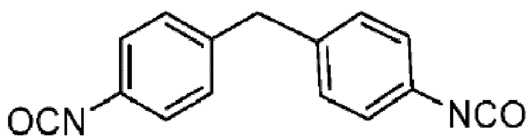

(Formula 3)

The pendant hydrophilic group can be a polyethylene oxide group and the linking group can be MDI, as shown below.

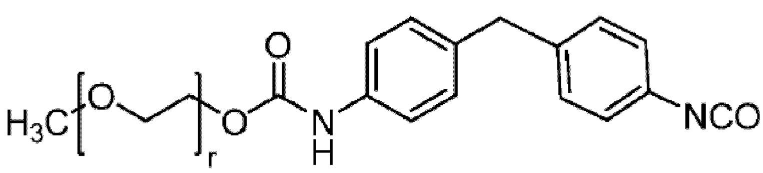

(Formula 4)

The pendant hydrophilic group can be functionalized to enable it to bond to the aliphatic or aromatic group, optionally through the linker. For example, when the pendant hydrophilic group includes an alkene group, which can undergo a Michael addition with a sulfhydryl-containing bifunctional molecule (i.e., a molecule having a second reactive group, such as a hydroxyl group or amino group), resulting in a hydrophilic group that can react with the polymer backbone, optionally through the linker, using the second reactive group. For example, when the pendant hydrophilic group is a polyvinylpyrrolidone group, it can react with the sulfhydryl group on mercaptoethanol to result in hydroxyl-functionalized polyvinylpyrrolidone, as shown below.

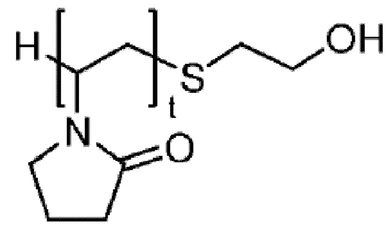

(Formula 5)

At least one $R_2$ group in the polyurethane can include a polytetramethylene oxide group. At least one $R_2$ group of the polyurethane can include an aliphatic polyol group functionalized with a polyethylene oxide group or polyvinylpyrrolidone group, such as the polyols described in E.P. Patent No. 2 462 908, which is hereby incorporated by reference. For example, the $R_2$ group can be derived from the reaction product of a polyol (e.g., pentaerythritol or 2,2,3-trihydroxypropanol) and either MDI-derivatized methoxypolyethylene glycol (to obtain compounds as shown in Formulas 6 or 7) or with MDI-derivatized polyvinylpyrrolidone (to obtain compounds as shown in Formulas 8 or 9) that had been previously been reacted with mercaptoethanol, as shown below.

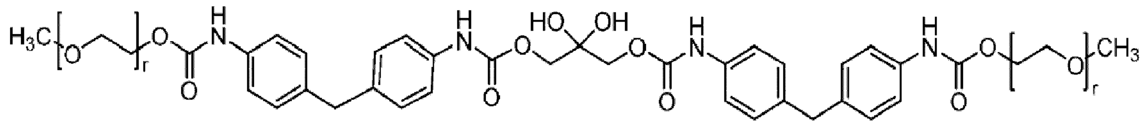

(Formula 6)

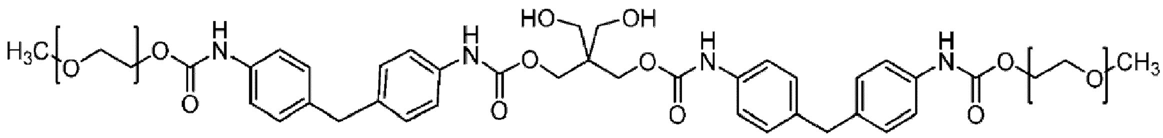

(Formula 7)

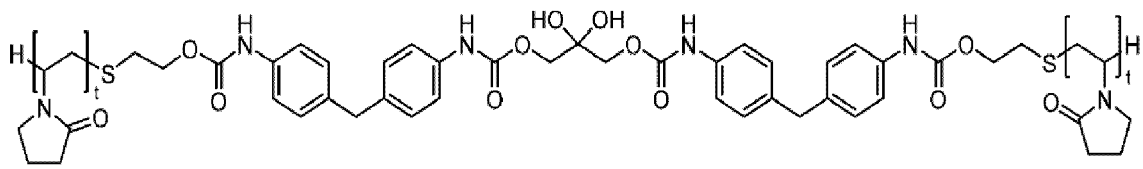

(Formula 8)

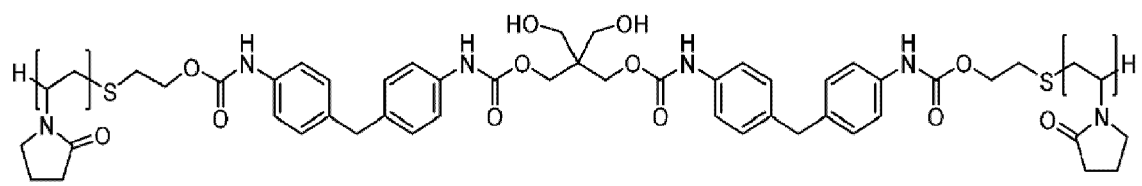

(Formula 9)

At least one $R_2$ of the polyurethane can be a polysiloxane. In these cases, the $R_2$ group can be derived from a silicone monomer of Formula 10, such as a silicone monomer disclosed in U.S. Pat. No. 5,969,076, which is hereby incorporated by reference:

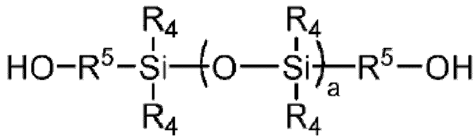

(Formula 10)

wherein: a is 1 to 10 or larger (e.g., 1, 2, 3, 4, 5, 6, 7, 8, 9, or 10); each $R_4$ independently is hydrogen, an alkyl group having from 1 to 18 carbon atoms, an alkenyl group having from 2 to 18 carbon atoms, aryl, or polyether; and each $R_5$ independently is an alkylene group having from 1 to 10 carbon atoms, polyether, or polyurethane.

Each $R_4$ group can independently be a H, an alkyl group having from 1 to 10 carbon atoms, an alkenyl group having from 2 to 10 carbon atoms, an aryl group having from 1 to 6 carbon atoms, polyethylene, polypropylene, or polybutylene group. Each $R_4$ group can independently be selected from the group consisting of methyl, ethyl, n-propyl, isopropyl, n-butyl, isobutyl, s-butyl, t-butyl, ethenyl, propenyl, phenyl, and polyethylene groups.

Each $R_5$ group can independently include an alkylene group having from 1 to 10 carbon atoms (*e.g.*, a methylene, ethylene, propylene, butylene, pentylene, hexylene, heptylene, octylene, nonylene, or decylene group). Each $R_5$ group can be a polyether group (*e.g.*, a polyethylene, polypropylene, or polybutylene group). Each $R_5$ group can be a polyurethane group.

Optionally, the polyurethane can include an at least partially crosslinked polymeric network that includes polymer chains that are derivatives of polyurethane. The level of crosslinking can be such that the polyurethane retains thermoplastic properties (i.e., the crosslinked thermoplastic polyurethane can be melted and re-solidified under the processing conditions described herein). The crosslinked polyurethane can be a thermoset polymer. This crosslinked polymeric network can be produced by polymerizing one or more isocyanates with one or more polyamino compounds, polysulfhydryl compounds, or combinations thereof, as shown in Formulas 11 and 12, below:

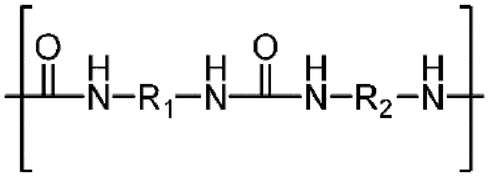

(Formula 11)

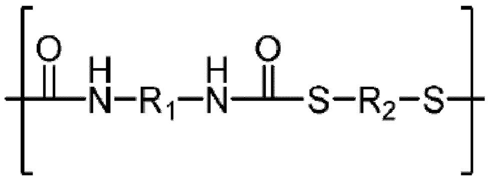

(Formula 12)

wherein the variables are as described above. Additionally, the isocyanates can also be chain extended with one or more polyamino or polythiol chain extenders to bridge two or more isocyanates, such as previously described for the polyurethanes of Formula 2.

The polyurethane chain can be physically crosslinked to another polyurethane chain through *e.g.*, nonpolar or polar interactions between the urethane or carbamate groups of the polymers (the hard segments). The $R_1$ group in Formula 1, and the $R_1$ and $R_3$ groups in Formula 2, form the portion of the polymer often referred to as the "hard segment", and the $R_2$ group forms the portion of the polymer often referred to as the "soft segment". The soft segment is covalently bonded to the hard segment. The polyurethane having physically crosslinked hard and soft segments can be a hydrophilic polyurethane (i.e., a polyurethane, including a thermoplastic polyurethane, including hydrophilic groups as disclosed herein).

The polyurethane can be a thermoplastic polyurethane is composed of MDI, PTMO, and 1,4-butylene glycol, as described in U.S. Patent No. 4,523,005. Commercially available polyurethanes suitable for the present use include, but are not limited to those under the tradename "SANCURE" (*e.g.*, the "SANCURE" series of polymer such as "SANCURE" 20025F) or "TECOPHILIC" (*e.g.*, TG-500, TG-2000, SP-80A-150, SP-93A-100, SP-60D-60) (Lubrizol, Countryside, IL, USA), "PELLETHANE" 2355-85ATP and 2355-95AE (Dow Chemical Company of Midland, MI, USA.), "ESTANE" (*e.g.*, ALR G 500, or 58213; Lubrizol, Countryside, IL, USA).

One or more of the polyurethanes (*e.g.*, those used in the primer as the coating (*e.g.*, water-dispersible polyurethane)) can be produced by polymerizing one or more isocyanates with one or more polyols to produce copolymer chains having carbamate linkages (-N(C=O)O-) and one or more water-dispersible enhancing moieties, where the polymer chain includes one or more water-dispersible enhancing moieties (*e.g.*, a monomer in polymer chain). The water-dispersible polyurethane can also be referred to as "a water-borne polyurethane polymer dispersion." The water-dispersible enhancing moiety can be added to the chain of Formula 1 or 2 (*e.g.*, within the chain and/or onto the chain as a side chain). Inclusion of the water-dispersible enhancing moiety enables the formation of a water-borne polyurethane dispersion. The term "water-borne" herein means the continuous phase of the dispersion or formulation of about 50 weight percent to 100 weight percent water, about 60 weight percent to 100 weight percent water, about 70 weight percent to 100 weight percent water, or about 100 weight percent water. The term "water-borne dispersion" refers to a dispersion of a component (*e.g.*, polymer, cross-linker, and the like) in water without co-solvents. The co-solvent can be used in the water-borne dispersion and the co-solvent can be an organic solvent. Additional detail regarding the polymers, polyurethanes, isocyantes and the polyols are provided below.

The polyurethane (*e.g.*, a water-borne polyurethane polymer dispersion) can include one or more water-dispersible enhancing moieties. The water-dispersible enhancing moiety can have at least one hydrophilic (*e.g.*, poly(ethylene oxide)), ionic or potentially ionic group to assist dispersion of the polyurethane, thereby enhancing the stability of the dispersions. A water-dispersible polyurethane can be formed by incorporating a moiety bearing at least one hydrophilic group or a group that can be made hydrophilic (*e.g.*, by chemical modifications such as neutralization) into the polymer chain. For example, these compounds can be nonionic, anionic, cationic or zwitterionic or the combination thereof. In one example, anionic groups such as carboxylic acid groups can be incorporated into the chain in an inactive form and subsequently activated by a salt-forming compound, such as a tertiary amine. Other water-dispersible enhancing moieties can also be reacted into the backbone through urethane linkages or urea linkages, including lateral or terminal hydrophilic ethylene oxide or ureido units.

The water-dispersible enhancing moiety can be a one that includes carboxyl groups. Water-dispersible enhancing moiety that include a carboxyl group can be formed from hydroxy-carboxylic acids having the general formula $(HO)_xQ(COOH)_y$, where Q can be a straight or branched bivalent hydrocarbon radical containing 1 to 12 carbon atoms, and x and y can each independently be 1 to 3. Illustrative examples include dimethylolpropanoic acid (DMPA), dimethylol butanoic acid (DMBA), citric acid, tartaric acid, glycolic acid, lactic acid, malic acid, dihydroxymalic acid, dihydroxytartaric acid, and the like, and mixtures thereof.

The water-dispersible enhancing moiety can include reactive polymeric polyol components that contain pendant anionic groups that can be polymerized into the backbone to impart water dispersible characteristics to the polyurethane. Anionic functional polymeric polyols can include anionic polyester polyols, anionic polyether polyols, and anionic polycarbonate polyols, where additional detail is provided in U.S. Pat. No. 5,334,690.

The water-dispersible enhancing moiety can include a side chain hydrophilic monomer. For example, the water-dispersible enhancing moiety including the side chain hydrophilic monomer can include alkylene oxide polymers and copolymers in which the alkylene oxide groups have from 2-10 carbon atoms as shown in U.S. Patent 6,897,281. Additional types of water-dispersible enhancing moieties can include thioglycolic acid, 2,6-dihydroxybenzoic acid, sulfoisophthalic acid, polyethylene glycol, and the like, and mixtures thereof. Additional details regarding water-dispersible enhancing moieties can be found in U.S. Patent 7,476,705.

Polyamides

The polymer can comprise a polyamide, such as a thermoplastic polyamide, or a thermoset polyamide. The polyamide can be an elastomeric polyamide, including an elastomeric thermoplastic polyamde or an elastomeric thermoset polyamide. The polyamide can be a polyamide homopolymer having repeating polyamide segments of the same chemical structure. Alternatively, the polyamide can comprise a number of polyamide segments having different polyamide chemical structures (*e.g.*, polyamide 6 segments, polyamide 11 segments, polyamide 12 segments, polyamide 66 segments, etc.). The polyamide segments having different chemical structure can be arranged randomly, or can be arranged as repeating blocks.

The polyamide can be a co-polyamide (i.e., a co-polymer including polyamide segments and non-polyamide segments). The polyamide segments of the co-polyamide can comprise or consist of polyamide 6 segments, polyamide 11 segments, polyamide 12 segments, polyamide 66 segments, or any combination thereof. The polyamide segments of the co-polyamide can be arranged randomly, or can be arranged as repeating segments. The polyamide segments can comprise or consist of polyamide 6 segments, or polyamide 12 segments, or both polyamide 6 segment and polyamide 12 segments. In the example where the polyamide segments of the co-polyamide include of polyamide 6 segments and

polyamide 12 segments, the segments can be arranged randomly. The non-polyamide segments of the co-polyamide can comprise or consist of polyether segments, polyester segments, or both polyether segments and polyester segments. The co-polyamide can be a co-polyamide, or can be a random co-polyamide. The copolyamide can be formed from the polycodensation of a polyamide oligomer or prepolymer with a second oligomer prepolymer to form a copolyamide (i.e., a co-polymer including polyamide segments. Optionally, the second prepolymer can be a hydrophilic prepolymer.

The polyamide can be a polyamide-containing block co-polymer. For example, the block co-polymer can have repeating hard segments, and repeating soft segments. The hard segments can comprise polyamide segments, and the soft segments can comprise non-polyamide segments. The polyamide-containing block co-polymer can be an elastomeric co-polyamide comprising or consisting of polyamide-containing block co-polymers having repeating hard segments and repeating soft segments. In block co-polymers, including block co-polymers having repeating hard segments and soft segments, physical crosslinks can be present within the segments or between the segments or both within and between the segments.

The polyamide itself, or the polyamide segment of the polyamide-containing block co-polymer can be derived from the condensation of polyamide prepolymers, such as lactams, amino acids, and/or diamino compounds with dicarboxylic acids, or activated forms thereof. The resulting polyamide segments include amide linkages (-(CO)NH-). The term "amino acid" refers to a molecule having at least one amino group and at least one carboxyl group. Each polyamide segment of the polyamide can be the same or different.

The polyamide or the polyamide segment of the polyamide-containing block co-polymer can be derived from the polycondensation of lactams and/or amino acids, and can include an amide segment having a structure shown in Formula 13, below, wherein $R_6$ group represents the portion of the polyamide derived from the lactam or amino acid.

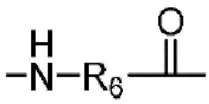

(Formula 13)

The $R_6$ group can be derived from a lactam. The $R_6$ group can be derived from a lactam group having from 3 to 20 carbon atoms, or a lactam group having from 4 to 15 carbon atoms, or a lactam group having from 6 to 12 carbon atoms. The $R_6$ group can be derived from caprolactam or laurolactam. The $R_6$ group can be derived from one or more amino acids. The $R_6$ group can be derived from an amino acid group having from 4 to 25 carbon atoms, or an amino acid group having from 5 to 20 carbon atoms, or an amino acid group having from 8 to 15 carbon atoms. The $R_6$ group can be derived from 12-aminolauric acid or 11-aminoundecanoic acid.

Optionally, in order to increase the relative degree of hydrophilicity of the polyamide-containing block co-polymer, Formula 13 can include a polyamide-polyether block copolymer segment, as shown below:

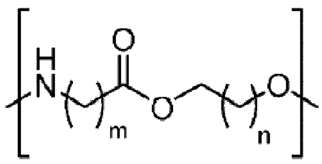

(Formula 14)

wherein m is 3-20, and n is 1-8. Optionally, m is 4-15, or 6-12 (*e.g.*, 6, 7, 8, 9, 10, 11, or 12), and n is 1, 2, or 3. For example, m can be 11 or 12, and n can be 1 or 3. The polyamide or the polyamide segment of the polyamide-containing block co-polymer can be derived from the condensation of diamino compounds with dicarboxylic acids, or activated forms thereof, and can include an amide segment having a structure shown in Formula 15, below, wherein the $R_7$ group represents the portion of the polyamide derived from the diamino compound, and the $R_8$ group represents the portion derived from the dicarboxylic acid compound:

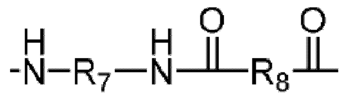

(Formula 15)

The $R_7$ group can be derived from a diamino compound that includes an aliphatic group having from 4 to 15 carbon atoms, or from 5 to 10 carbon atoms, or from 6 to 9 carbon atoms. The diamino compound can include an aromatic group, such as phenyl, naphthyl, xylyl, and tolyl. Suitable diamino compounds from which the $R_7$ group can be derived include, but are not limited to, hexamethylene diamine (HMD), tetramethylene diamine, trimethyl hexamethylene diamine (TMD),m-xylylene diamine (MXD), and 1,5-pentamine diamine. The $R_8$ group can be derived from a dicarboxylic acid or activated form thereof, including an aliphatic group having from 4 to 15 carbon atoms, or from 5 to 12 carbon atoms, or from 6 to 10 carbon atoms. The dicarboxylic acid or activated form thereof from which $R_8$ can be derived includes an aromatic group, such as phenyl, naphthyl, xylyl, and tolyl groups. Suitable carboxylic acids or activated forms thereof from which $R_8$ can be derived include adipic acid, sebacic acid, terephthalic acid, and isophthalic acid. The polyamide chain can be substantially free of aromatic groups.

Each polyamide segment of the polyamide (including the polyamide-containing block co-polymer) can be independently derived from a polyamide prepolymer selected from the group consisting of 12-aminolauric acid, caprolactam, hexamethylene diamine and adipic acid.

The polyamide can comprise or consist essentially of a poly(ether-block-amide). The poly(ether-block-amide) can be formed from the polycondensation of a carboxylic acid terminated polyamide prepolymer and a hydroxyl terminated polyether prepolymer to form a poly(ether-block-amide), as shown in Formula 16:

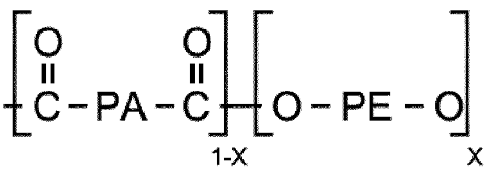

(Formula 16)

The poly(ether block amide) polymer can be prepared by polycondensation of polyamide blocks containing reactive ends with polyether blocks containing reactive ends. Examples include: 1) polyamide blocks containing diamine chain ends with polyoxyalkylene blocks containing carboxylic chain ends; 2) polyamide blocks containing dicarboxylic chain ends with polyoxyalkylene blocks containing diamine chain ends obtained by cyanoethylation and hydrogenation of aliphatic dihydroxylated alpha-omega polyoxyalkylenes known as polyether diols; 3) polyamide blocks containing dicarboxylic chain ends with polyether diols, the products obtained in this particular case being polyetheresteramides. The polyamide block of the poly(ether-block-amide) can be derived from lactams, amino acids, and/or diamino compounds with dicarboxylic acids as previously described. The polyether block can be derived from one or more polyethers selected from the group consisting of polyethylene oxide (PEO), polypropylene oxide (PPO), polytetrahydrofuran (PTHF), polytetramethylene oxide (PTMO), and combinations thereof.

The poly(ether block amide) polymers can include those comprising polyamide blocks comprising dicarboxylic chain ends derived from the condensation of $\alpha$, $\omega$-aminocarboxylic acids, of lactams or of dicarboxylic acids and diamines in the presence of a chain-limiting dicarboxylic acid. In poly(ether block amide) polymers of this type, a $\alpha$, $\omega$-aminocarboxylic acid such as aminoundecanoic acid can be used; a lactam such as caprolactam or lauryllactam can be used; a dicarboxylic acid such as adipic acid, decanedioic acid or dodecanedioic acid can be used; and a diamine such as hexamethylenediamine can be used; or various combinations of any of the foregoing. The copolymer can comprise polyamide blocks comprising polyamide 12 or of polyamide 6.

The poly(ether block amide) polymers can include those comprising polyamide blocks derived from the condensation of one or more $\alpha$, $\omega$-aminocarboxylic acids and/or of one or more lactams containing from 6 to 12 carbon atoms in the presence of a dicarboxylic acid containing from 4 to 12 carbon atoms, and are of low mass, i.e., they have a number-average molecular weight of from 400 to 1000. In poly(ether block amide) polymers of this type, an $\alpha$, $\omega$-aminocarboxylic acid such as aminoundecanoic acid or aminododecanoic acid can be used; a dicarboxylic acid such as adipic acid, sebacic acid, isophthalic acid, butanedioic acid, 1,4-cyclohexyldicarboxylic acid, terephthalic acid, the

sodium or lithium salt of sulphoisophthalic acid, dimerized fatty acids (these dimerized fatty acids have a dimer content of at least 98 weight percent and are preferably hydrogenated) and dodecanedioic acid HOOC-$(CH_2)_{10}$-COOH can be used; and a lactam such as caprolactam and lauryllactam can be used; or various combinations of any of the foregoing. The copolymer can comprise polyamide blocks obtained by condensation of lauryllactam in the presence of adipic acid or dodecanedioic acid and with a number average molecular weight of at least 750 have a melting temperature of from about 127 to about 130 degrees C. The various constituents of the polyamide block and their proportion can be chosen in order to obtain a melting point of less than 150 degrees C, or from about 90 degrees C to about 135 degrees C.

The poly(ether block amide) polymers can include those comprising polyamide blocks derived from the condensation of at least one α, ω-aminocarboxylic acid (or a lactam), at least one diamine and at least one dicarboxylic acid. In copolymers of this type, a α,ω-aminocarboxylic acid, the lactam and the dicarboxylic acid can be chosen from those described herein above and the diamine such as an aliphatic diamine containing from 6 to 12 atoms and can be arylic and/or saturated cyclic such as, but not limited to, hexamethylenediamine, piperazine, 1-aminoethylpiperazine, bisaminopropylpiperazine, tetramethylenediamine, octamethylene-diamine, decamethylenediamine, dodecamethylenediamine, 1,5-diaminohexane, 2,2,4-trimethyl-1,6-diaminohexane, diamine polyols, isophoronediamine (IPD), methylpentamethylenediamine (MPDM), bis(aminocyclohexyl)methane (BACM) and bis(3-methyl-4-aminocyclohexyl)methane (BMACM) can be used.

The polyamide can be a thermoplastic polyamide and the constituents of the polyamide block and their proportion can be chosen in order to obtain a melting temperature of less than 150 degrees C, such as a melting point of from about 90 degrees C to about 135 degrees C. The various constituents of the thermoplastic polyamide block and their proportion can be chosen in order to obtain a melting point of less than 150 degrees C, such as from about and 90 degrees C to about 135 degrees C.

The number average molar mass of the polyamide blocks can be from about 300 grams per mole to about 15,000 grams per mole, from about 500 grams per mole to about 10,000 grams per mole, from about 500 grams per mole to about 6,000 grams per mole, from about 500 grams per mole to about 5,000 grams per mole, or from about 600 grams per mole to about 5,000 grams per mole. The number average molecular weight of the polyether block can range from about 100 to about 6,000, from about 400 to about 3000, or from about 200 to about 3,000. The polyether (PE) content (x) of the poly(ether block amide) polymer can be from about 0.05 to about 0.8 (i.e., from about 5 mole percent to about 80 mole percent). The polyether blocks can be present in the polyamide in an amount of from about 10 weight percent to about 50 weight percent, from about 20 weight percent to about 40 weight percent, or from about 30 weight percent to about 40 weight percent. The polyamide blocks can be present in the polyamide in an amount of from about 50 weight percent to about 90 weight percent, from about 60 weight percent to about 80 weight percent, or from about 70 weight percent to about 90 weight percent.

The polyether blocks can contain units other than ethylene oxide units, such as, for example, propylene oxide or polytetrahydrofuran (which leads to polytetramethylene glycol sequences). It is also possible to use simultaneously PEG blocks, i.e., those consisting of ethylene oxide units, polypropylene glycol (PPG) blocks, i.e. those consisting of propylene oxide units, and poly(tetramethylene ether)glycol (PTMG) blocks, i.e. those consisting of tetramethylene glycol units, also known as polytetrahydrofuran. PPG or PTMG blocks are advantageously used. The amount of polyether blocks in these copolymers containing polyamide and polyether blocks can be from about 10 weight percent to about 50 weight percent of the copolymer, or from about 35 weight percent to about 50 weight percent.

The copolymers containing polyamide blocks and polyether blocks can be prepared by any means for attaching the polyamide blocks and the polyether blocks. In practice, two processes are essentially used, one being a 2-step process and the other a one-step process.

In the two-step process, the polyamide blocks having dicarboxylic chain ends are prepared first, and then, in a second step, these polyamide blocks are linked to the polyether blocks. The polyamide blocks having dicarboxylic chain ends are derived from the condensation of polyamide precursors in the presence of a chain-stopper dicarboxylic acid. If the polyamide precursors are only lactams or α,ω-aminocarboxylic acids, a dicarboxylic acid is added. If the precursors already comprise a dicarboxylic acid, this is used in excess with respect to the stoichiometry of the diamines. The reaction usually takes place from about 180 to about 300 degrees C, such as from about 200 degrees to about 290 degrees C, and the pressure in the reactor can be set from about 5 to about 30 bar and maintained for approximately 2 to 3 hours. The pressure in the reactor is slowly reduced to atmospheric pressure and then the excess water is distilled off, for example for one or two hours.

Once the polyamide having carboxylic acid end groups has been prepared, the polyether, the polyol and a catalyst are then added. The total amount of polyether can be divided and added in one or more portions, as can the catalyst. The polyether is added first and the reaction of the OH end groups of the polyether and of the polyol with the COOH end groups of the polyamide starts, with the formation of ester linkages and the elimination of water. Water is removed as much as possible from the reaction mixture by distillation and then the catalyst is introduced in order to complete the linking of the polyamide blocks to the polyether blocks. This second step takes place with stirring, preferably under a vacuum of at least 50 millibar (5000 Pascals) at a temperature such that the reactants and the copolymers

obtained are in the molten state. By way of example, this temperature can be from about 100 to about 400 degrees C, such as from about 200 to about 250 degrees C. The reaction is monitored by measuring the torque exerted by the polymer melt on the stirrer or by measuring the electric power consumed by the stirrer. The end of the reaction is determined by the value of the torque or of the target power. The catalyst is defined as being any product which promotes the linking of the polyamide blocks to the polyether blocks by esterification. The catalyst can be a derivative of a metal (M) chosen from the group formed by titanium, zirconium and hafnium. The derivative can be prepared from a tetraalkoxides consistent with the general formula $M(OR)_4$, in which M represents titanium, zirconium or hafnium and R, which can be identical or different, represents linear or branched alkyl radicals having from 1 to 24 carbon atoms.

The catalyst can comprise a salt of the metal (M), particularly the salt of (M) and of an organic acid and the complex salts of the oxide of (M) and/or the hydroxide of (M) and an organic acid. The organic acid can be formic acid, acetic acid, propionic acid, butyric acid, valeric acid, caproic acid, caprylic acid, lauric acid, myristic acid, palmitic acid, stearic acid, oleic acid, linoleic acid, linolenic acid, cyclohexanecarboxylic acid, phenylacetic acid, benzoic acid, salicylic acid, oxalic acid, malonic acid, succinic acid, glutaric acid, adipic acid, maleic acid, fumaric acid, phthalic acid or crotonic acid. The organic acid can be an acetic acid or a propionic acid. M can be zirconium and such salts are called zirconyl salts, e.g., the commercially available product sold under the name zirconyl acetate.

The weight proportion of catalyst can vary from about 0.01 to about 5 percent of the weight of the mixture of the dicarboxylic polyamide with the polyetherdiol and the polyol. The weight proportion of catalyst can vary from about 0.05 to about 2 percent of the weight of the mixture of the dicarboxylic polyamide with the polyetherdiol and the polyol.

In the one-step process, the polyamide precursors, the chain stopper and the polyether are blended together; what is then obtained is a polymer having essentially polyether blocks and polyamide blocks of highly variable length, but also the various reactants that have reacted randomly, which are distributed randomly along the polymer chain. They are the same reactants and the same catalyst as in the two-step process described above. If the polyamide precursors are only lactams, it is advantageous to add a little water. The copolymer has essentially the same polyether blocks and the same polyamide blocks, but also a small portion of the various reactants that have reacted randomly, which are distributed randomly along the polymer chain. As in the first step of the two-step process described above, the reactor is closed and heated, with stirring. The pressure established is from about 5 to about 30 bar. When the pressure no longer changes, the reactor is put under reduced pressure while still maintaining vigorous stirring of the molten reactants. The reaction is monitored as previously in the case of the two-step process.

The proper ratio of polyamide to polyether blocks can be found in a single poly(ether block amide), or a blend of two or more different composition poly(ether block amide)s can be used with the proper average composition. It can be useful to blend a block copolymer having a high level of polyamide groups with a block copolymer having a higher level of polyether blocks, to produce a blend having an average level of polyether blocks of about 20 to about 40 weight percent of the total blend of poly(amid-block-ether) copolymers, or about 30 to about 35 weight percent. The copolymer can comprise a blend of two different poly(ether-block-amide)s comprising at least one block copolymer having a level of polyether blocks below 35 weight percent, and a second poly(ether-block-amide) having at least 45 weight percent of polyether blocks.

Exemplary commercially available copolymers include, but are not limited to, those available under the tradenames of "VESTAMID" (Evonik Industries, Essen, Germany); "PLATAMID" (Arkema, Colombes, France), e.g., product code H2694; "PEBAX" (Arkema), e.g., product code "PEBAX MH1657" and "PEBAX MV1074"; "PEBAX RNEW" (Arkema); "GRILAMID" (EMS-Chemie AG, Domat-Ems, Switzerland), or also to other similar materials produced by various other suppliers.

The polyamide can be physically crosslinked through, e.g., nonpolar or polar interactions between the polyamide groups of the polymers. In examples where the polyamide is a copolyamide, the copolyamide can be physically crosslinked through interactions between the polyamide groups, and optionally by interactions between the copolymer groups. When the co-polyamide is physically crosslinked thorough interactions between the polyamide groups, the polyamide segments can form the portion of the polymer referred to as the hard segment, and copolymer segments can form the portion of the polymer referred to as the soft segment. For example, when the copolyamide is a poly(ether-block-amide), the polyamide segments form the hard segments of the polymer, and polyether segments form the soft segments of the polymer. Therefore, in some examples, the polymer can include a physically crosslinked polymeric network having one or more polymer chains with amide linkages.

The polyamide segment of the co-polyamide can include polyamide-11 or polyamide-12 and the polyether segment can be a segment selected from the group consisting of polyethylene oxide, polypropylene oxide, and polytetramethylene oxide segments, and combinations thereof.

The polyamide can be partially or fully covalently crosslinked, as previously described herein. In some cases, the degree of crosslinking present in the polyamide is such that, when it is thermally processed, e.g., in the form of a yarn or fiber to form the articles of the present disclosure, the partially covalently crosslinked thermoplastic polyamide retains sufficient thermoplastic character that the partially covalently crosslinked thermoplastic polyamide is melted during the processing and re-solidifies. In other cases, the crosslinked polyamide is a thermoset polymer.

Polyesters

The polymers can comprise a polyester. The polyester can comprise a thermoplastic polyester, or a thermoset polyester. Additionally, the polyester can be an elastomeric polyester, including a thermoplastic polyester or a thermoset elastomeric polyester. The polyester can be formed by reaction of one or more carboxylic acids, or its ester-forming derivatives, with one or more bivalent or multivalent aliphatic, alicyclic, aromatic or araliphatic alcohols or a bisphenol. The polyester can be a polyester homopolymer having repeating polyester segments of the same chemical structure. Alternatively, the polyester can comprise a number of polyester segments having different polyester chemical structures (e.g., polyglycolic acid segments, polylactic acid segments, polycaprolactone segments, polyhydroxyalkanoate segments, polyhydroxybutyrate segments, etc.). The polyester segments having different chemical structure can be arranged randomly, or can be arranged as repeating blocks.

Exemplary carboxylic acids that can be used to prepare a polyester include, but are not limited to, adipic acid, pimelic acid, suberic acid, azelaic acid, sebacic acid, nonane dicarboxylic acid, decane dicarboxylic acid, undecane dicarboxylic acid, terephthalic acid, isophthalic acid, alkyl-substituted or halogenated terephthalic acid, alkyl-substituted or halogenated isophthalic acid, nitro-terephthalic acid, 4,4'-diphenyl ether dicarboxylic acid, 4,4'-diphenyl thioether dicarboxylic acid, 4,4'-diphenyl sulfone-dicarboxylic acid, 4,4'-diphenyl alkylenedicarboxylic acid, naphthalene-2,6-dicarboxylic acid, cyclohexane-1,4-dicarboxylic acid and cyclohexane-1,3-dicarboxylic acid. Exemplary diols or phenols suitable for the preparation of the polyester include, but are not limited to, ethylene glycol, diethylene glycol, 1,3-propanediol, 1,4-butanediol, 1,6-hexanediol, 1,8-octanediol, 1,10-decanediol, 1,2-propanediol, 2,2-dimethyl-1,3-propanediol, 2,2,4-trimethylhexanediol, p-xylenediol, 1,4-cyclohexanediol, 1,4-cyclohexane dimethanol, and bis-phenol A.

The polyester can be a polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), a liquid crystal polyester, or a blend or mixture of two or more of the foregoing.

The polyester can be a co-polyester (i.e., a co-polymer including polyester segments and non-polyester segments). The co-polyester can be an aliphatic co-polyester (i.e., a copolyester in which both the polyester segments and the non-polyester segments are aliphatic). Alternatively, the co-polyester can include aromatic segments. The polyester segments of the co-polyester can comprise or consist essentially of polyglycolic acid segments, polylactic acid segments, polycaprolactone segments, polyhydroxyalkanoate segments, polyhydroxybutyrate segments, or any combination thereof. The polyester segments of the co-polyester can be arranged randomly, or can be arranged as repeating blocks.

For example, the polyester can be a block co-polyester having repeating blocks of polymeric units of the same chemical structure which are relatively harder (hard segments), and repeating blocks of the same chemical structure which are relatively softer (soft segments). In block co-polyesters, including block co-polyesters having repeating hard segments and soft segments, physical crosslinks can be present within the blocks or between the blocks or both within and between the blocks. The polymer can comprise or consist essentially of an elastomeric co-polyester having repeating blocks of hard segments and repeating blocks of soft segments.

The non-polyester segments of the co-polyester can comprise or consist essentially of polyether segments, polyamide segments, or both polyether segments and polyamide segments. The co-polyester can be a block co-polyester, or can be a random co-polyester. The co-polyester can be formed from the polycodensation of a polyester oligomer or prepolymer with a second oligomer prepolymer to form a block copolyester. Optionally, the second prepolymer can be a hydrophilic prepolymer. For example, the co-polyester can be formed from the polycondensation of terephthalic acid or naphthalene dicarboxylic acid with ethylene glycol, 1,4-butanediol, or 1-3 propanediol. Examples of co-polyesters include polyethelene adipate, polybutylene succinate, poly(3-hydroxbutyrate-co-3-hydroxyvalerate), polyethylene terephthalate, polybutylene terephthalate, polytrimethylene terephthalate, polyethylene napthalate, and combinations thereof. The co-polyamide can comprise or consist of polyethylene terephthalate.

The polyester can be a block copolymer comprising segments of one or more of polybutylene terephthalate (PBT), a polytrimethylene terephthalate, a polyhexamethylene terephthalate, a poly-1,4-dimethylcyclohexane terephthalate, a polyethylene terephthalate (PET), a polyethylene isophthalate (PEI), a polyarylate (PAR), a polybutylene naphthalate (PBN), and a liquid crystal polyester. For example, a suitable polyester that is a block copolymer can be a PET/PEI copolymer, a polybutylene terephthalate/tetraethylene glycol copolymer, a polyoxyalkylenediimide diacid/polybutylene terephthalate copolymer, or a blend or mixture of any of the foregoing.

The polyester can be a biodegradable resin, for example, a copolymerized polyester in which poly($\alpha$-hydroxy acid) such as polyglycolic acid or polylactic acid is contained as principal repeating units.

The disclosed polyesters can be prepared by a variety of polycondensation methods known to the skilled artisan, such as a solvent polymerization or a melt polymerization process.

Polyolefins

The polymers can comprise or consist essentially of a polyolefin. The polyolefin can be a thermoplastic polyolefin or a thermoset polyolefin. Additionally, the polyolefin can be an elastomeric polyolefin, including a thermoplastic elastomeric polyolefin or a thermoset elastomeric polyolefin. Exemplary polyolefins can include polyethylene, polypropylene, and olefin elastomers (e.g.,metallocene-catalyzed block copolymers of ethylene and $\alpha$-olefins having 4 to about 8 carbon atoms). The polyolefin can be a polymer comprising a polyethylene, an ethylene-$\alpha$-olefin copolymer, an ethylene-propylene rubber (EPDM), a polybutene, a polyisobutylene, a poly-4-methylpent-1-ene, a polyisoprene, a polybutadiene, a ethylene-methacrylic acid copolymer, and an olefin elastomer such as a dynamically cross-linked polymer obtained from polypropylene (PP) and an ethylene-propylene rubber (EPDM), and blends or mixtures of the foregoing. Further exemplary polyolefins include polymers of cycloolefins such as cyclopentene or norbornene.

It is to be understood that polyethylene, which optionally can be crosslinked, is inclusive a variety of polyethylenes, including low density polyethylene (LDPE), linear low density polyethylene (LLDPE), (VLDPE) and (ULDPE), medium density polyethylene (MDPE), high density polyethylene (HDPE), high density and high molecular weight polyethylene (HDPE-HMW), high density and ultrahigh molecular weight polyethylene (HDPE-UHMW), and blends or mixtures of any the foregoing polyethylenes. A polyethylene can also be a polyethylene copolymer derived from monomers of monolefins and diolefins copolymerized with a vinyl, acrylic acid, methacrylic acid, ethyl acrylate, vinyl alcohol, and/or vinyl acetate. Polyolefin copolymers comprising vinyl acetate-derived units can be a high vinyl acetate content copolymer, e.g., greater than about 50 weight percent vinyl acetate-derived composition.

The polyolefin can be formed through free radical, cationic, and/or anionic polymerization by methods well known to those skilled in the art (e.g., using a peroxide initiator, heat, and/or light). The disclosed polyolefin can be prepared by radical polymerization under high pressure and at elevated temperature. Alternatively, the polyolefin can be prepared by catalytic polymerization using a catalyst that normally contains one or more metals from group IVb, Vb, Vlb or VIII metals. The catalyst usually has one or more than one ligand, typically oxides, halides, alcoholates, esters, ethers, amines, alkyls, alkenyls and/or aryls that can be either p- or s-coordinated complexed with the group IVb, Vb, Vlb or VIII metal. The metal complexes can be in the free form or fixed on substrates, typically on activated magnesium chloride, titanium(III) chloride, alumina or silicon oxide. The metal catalysts can be soluble or insoluble in the polymerization medium. The catalysts can be used by themselves in the polymerization or further activators can be used, typically a group Ia, IIa and/or IIIa metal alkyls, metal hydrides, metal alkyl halides, metal alkyl oxides or metal alkyloxanes. The activators can be modified conveniently with further ester, ether, amine or silyl ether groups.

Suitable polyolefins can be prepared by polymerization of monomers of monolefins and diolefins as described herein. Exemplary monomers that can be used to prepare the polyolefin include, but are not limited to, ethylene, propylene, 1-butene, 1-pentene, 1-hexene, 2-methyl-1-propene, 3-methyl-1-pentene, 4-methyl-1-pentene, 5-methyl-1-hexene and mixtures thereof.

Suitable ethylene-$\alpha$-olefin copolymers can be obtained by copolymerization of ethylene with an $\alpha$-olefin such as propylene, butene-1, hexene-1, octene-1,4-methyl-1-pentene or the like having carbon numbers of 3 to 12.

Suitable dynamically cross-linked polymers can be obtained by cross-linking a rubber component as a soft segment while at the same time physically dispersing a hard segment such as PP and a soft segment such as EPDM by using a kneading machine such as a Banbury mixer and a biaxial extruder.

The polyolefin can be a mixture of polyolefins, such as a mixture of two or more polyolefins disclosed herein above. For example, a suitable mixture of polyolefins can be a mixture of polypropylene with polyisobutylene, polypropylene with polyethylene (for example PP/HDPE, PP/LDPE) or mixtures of different types of polyethylene (for example LDPE/HDPE).

The polyolefin can be a copolymer of suitable monolefin monomers or a copolymer of a suitable monolefin monomer and a vinyl monomer. Exemplary polyolefin copolymers include ethylene/propylene copolymers, linear low density polyethylene (LLDPE) and mixtures thereof with low density polyethylene (LDPE), propylene/but-1-ene copolymers, propylene/isobutylene copolymers, ethylene/but-1-ene copolymers, ethylene/hexene copolymers, ethylene/methylpentene copolymers, ethylene/heptene copolymers, ethylene/octene copolymers, propylene/butadiene copolymers, isobutylene/isoprene copolymers, ethylene/alkyl acrylate copolymers, ethylene/alkyl methacrylate copolymers, ethylene/vinyl acetate copolymers and their copolymers with carbon monoxide or ethylene/acrylic acid copolymers and their salts (ionomers) as well as terpolymers of ethylene with propylene and a diene such as hexadiene, dicyclopentadiene or ethylidene-norbornene; and mixtures of such copolymers with one another and with polymers mentioned in 1) above, for example polypropylene/ethylene-propylene copolymers, LDPE/ethylene-vinyl acetate copolymers (EVA), LDPE/ethylene-acrylic acid copolymers (EAA), LLDPE/EVA, LLDPE/EAA and alternating or random polyalkylene/carbon monoxide copolymers and mixtures thereof with other polymers, for example polyamides.

The polyolefin can be a polypropylene homopolymer, a polypropylene copolymers, a polypropylene random copolymer, a polypropylene block copolymer, a polyethylene homopolymer, a polyethylene random copolymer, a polyethylene block copolymer, a low density polyethylene (LDPE), a linear low density polyethylene (LLDPE), a medium

density polyethylene, a high density polyethylene (HDPE), or blends or mixtures of one or more of the preceding polymers.

The polyolefin can be a polypropylene. The term "polypropylene," as used herein, is intended to encompass any polymeric composition comprising propylene monomers, either alone or in mixture or copolymer with other randomly selected and oriented polyolefins, dienes, or other monomers (such as ethylene, butylene, and the like). Such a term also encompasses any different configuration and arrangement of the constituent monomers (such as atactic, syndiotactic, isotactic, and the like). Thus, the term as applied to fibers is intended to encompass actual long strands, tapes, threads, and the like, of drawn polymer. The polypropylene can be of any standard melt flow (by testing); however, standard fiber grade polypropylene resins possess ranges of Melt Flow Indices between about 1 and 1000.

The polyolefin can be a polyethylene. The term "polyethylene," as used herein, is intended to encompass any polymeric composition comprising ethylene monomers, either alone or in mixture or copolymer with other randomly selected and oriented polyolefins, dienes, or other monomers (such as propylene, butylene, and the like). Such a term also encompasses any different configuration and arrangement of the constituent monomers (such as atactic, syndiotactic, isotactic, and the like). Thus, the term as applied to fibers is intended to encompass actual long strands, tapes, threads, and the like, of drawn polymer. The polyethylene can be of any standard melt flow (by testing); however, standard fiber grade polyethylene resins possess ranges of Melt Flow Indices between about 1 and 1000.

The thermoplastic and/or thermosetting material can further comprise one or more processing aids. The processing aid can be a non-polymeric material. These processing aids can be independently selected from the group including, but not limited to, curing agents, initiators, plasticizers, mold release agents, lubricants, antioxidants, flame retardants, dyes, pigments, reinforcing and non-reinforcing fillers, fiber reinforcements, and light stabilizers.

In a particular embodiments, the structurally-colored component can be used in conjunction with a bladder, as described further herein. The bladder can be unfilled, partially inflated, or fully inflated when the structural design (e.g., optical element) is disposed onto the bladder. The bladder is a bladder capable of including a volume of a fluid. An unfilled bladder is a fluid-fillable bladder and a filled bladder that has been at least partially inflated with a fluid at a pressure equal to or greater than atmospheric pressure. When disposed onto or incorporated into an article of footwear, apparel, or sports equipment, the bladder is generally, at that point, a fluid-filled bladder. The fluid be a gas or a liquid. The gas can include air, nitrogen gas ($N_2$), or other appropriate gas.

The bladder can have a gas transmission rate for nitrogen gas, for example, where a bladder wall of a given thickness has a gas transmission rate for nitrogen that is at least about ten times lower than the gas transmission rate for nitrogen of a butyl rubber layer of substantially the same thickness as the thickness of the bladder described herein. The bladder can have a first bladder wall having a first bladder wall thickness (e.g., about 0.1 to 40 mils). The bladder can have a first bladder wall that can have a gas transmission rate (GTR) for nitrogen gas of less than about 15 $cm^3/m^2$•atm•day, less than about 10 $m^3/m^2$•atm•day, less than about 5 $cm^3/m^2$•atm•day, less than about 1 $cm^3/m^2$•atm•day (e.g., from about 0.001 $cm^3/m^2$•atm•day to about 1 $cm^3/m^2$•atm•day, about 0.01 $cm^3/m^2$•atm•day to about 1 $cm^3/m^2$•atm•day or about 0.1 $cm^3/m^2$•atm•day to about 1 $cm^3/m^2$•atm•day) for an average wall thickness of 20 mils. The bladder can have a first bladder wall having a first bladder wall thickness, where the first bladder wall has a gas transmission rate of 15 $cm^3/m^2$•atm•day or less for nitrogen for an average wall thickness of 20 mils.

In an aspect, the bladder has a bladder wall having an interior-facing side and an exterior(or externally)-facing side, where the interior (or internally)-facing side defines at least a portion of an interior region of the bladder. The multilayer optical film (or optical element) having a first side and a second opposing side can be disposed on the exterior-facing side of the bladder, the interior-facing side of the bladder, or both. The exterior-facing side of the bladder, the interior-facing side of the bladder, or both can include a plurality of topographical structures (or profile features) extending from the exterior-facing side of the bladder wall, the interior-facing side of the bladder, or both, where the first side or the second side of the multilayer optical film is disposed on the exterior-facing side of the bladder wall and covering the plurality of topographical structures, the interior-facing side of the bladder wall and covering the plurality of topographical structures, or both, and wherein the multi-layer optical film imparts a structural color to the bladder wall.

In a particular aspect, the bladder can include a top wall operably secured to the footwear upper, a bottom wall opposite the top wall, and one or more sidewalls extending between the top wall and the bottom wall of the inflated bladder. The top wall, the bottom wall, and the one or more sidewalls collectively define an interior region of the inflated bladder, and wherein the one or more sidewalls each comprise an exterior-facing side. The multi-layer optical film having a first side and a second opposing side can be disposed on the exterior-facing side of the bladder, the interior-facing side of the bladder, or both. The exterior-facing side of the bladder, the interior-facing side of the bladder, or both can include a plurality of topographical structures extending from the exterior-facing side of the bladder wall, the interior-facing side of the bladder, or both, where the first side or the second side of the multilayer optical film is disposed on the exterior-facing side of the bladder wall and covering the plurality of topographical structures, the interior-facing side of the bladder wall and covering the plurality of topographical structures, or both, and wherein the multi-layer optical film imparts a structural color to the bladder wall.

An accepted method for measuring the relative permeance, permeability, and diffusion of inflated bladders is ASTM D-1434-82-V. See, e.g., U.S. Patent No. 6,127,026, which is incorporated by reference as if fully set forth herein.

According to ASTM D-1434-82-V, permeance, permeability and diffusion are measured by the following formulae:

Permeance

(quantity of gas)/[(area )x(time )x(pressure difference)] = permeance (GTR)/(pressure difference) = $cm^3/m^2$•atm•day (i.e., 24 hours)

Permeability

[(quantity of gas)x(film thickness)][(area )x(time )x(pressure difference)] = permeability [(GTR)x(film thickness)]/(pressure difference) = [($cm^3$)(mil)]/$m^2$•atm•day (i.e., 24 hours)

Diffusion at one atmosphere

(quantity of gas)/[(area )x(time )] = GTR = $cm^3/m^2$•day (i.e., 24 hours)

The bladder can include a bladder wall that includes a film including at least one polymeric layer or at least two or more polymeric layers. Each of the polymeric layers can be about 0.1 to 40 mils in thickness.

The polymeric layer can be formed of polymer material such as a thermoplastic material as described above and herein and can be the thermoplastic layer upon which the primer layer, the optical element can be disposed, upon which the textured layer can be disposed, can be used to form the textured layer, and the like. The thermoplastic material can include an elastomeric material, such as a thermoplastic elastomeric material. The thermoplastic materials can include thermoplastic polyurethane (TPU), such as those described above and herein. The thermoplastic materials can include polyester-based TPU, polyether-based TPU, polycaprolactone-based TPU, polycarbonate-based TPU, polysiloxane-based TPU, or combinations thereof. Non-limiting examples of thermoplastic material that can be used include: "PELLETHANE" 2355-85ATP and 2355-95AE (Dow Chemical Company of Midland, MI., USA), "ELASTOLLAN" (BASF Corporation, Wyandotte, MI, USA) and "ESTANE" (Lubrizol, Brecksville, OH, USA), all of which are either ester or ether based. Additional thermoplastic material can include those described in U.S. Pat. Nos. 5,713,141; 5,952,065; 6,082,025; 6,127,026; 6,013,340; 6,203,868; and 6,321,465, which are incorporated herein by reference.

The polymeric layer can be formed of one or more of the following: ethylene-vinyl alcohol copolymers (EVOH), poly(vinyl chloride), polyvinylidene polymers and copolymers (e.g., polyvinylidene chloride), polyamides (e.g., amorphous polyamides), acrylonitrile polymers (*e.g.*, acrylonitrile-methyl acrylate copolymers), polyurethane engineering plastics, polymethylpentene resins, ethylene-carbon monoxide copolymers, liquid crystal polymers, polyethylene terephthalate, polyether imides, polyacrylic imides, and other polymeric materials known to have relatively low gas transmission rates. Blends and alloys of these materials as well as with the TPUs described herein and optionally including combinations of polyimides and crystalline polymers, are also suitable. For instance, blends of polyimides and liquid crystal polymers, blends of polyamides and polyethylene terephthalate, and blends of polyamides with styrenics are suitable.

Specific examples of polymeric materials of the polymeric layer can include acrylonitrile copolymers such as "BAREX" resins, available from Ineos (Rolle, Switzerland); polyurethane engineering plastics such as "ISPLAST" ETPU available from Lubrizol (Brecksville, OH, USA); ethylene-vinyl alcohol copolymers marketed under the tradenames "EVAL" by Kuraray (Houston, TX, USA), "SOARNOL" by Nippon Gohsei (Hull, England), and "SELAR OH" by DuPont (Wilmington, DE, USA); polyvinylidiene chloride available from S.C. Johnson (Racine, WI, USA ) under the tradename "SARAN", and from Solvay (Brussels, Belgium) under the tradename "IXAN"; liquid crystal polymers such as "VECTRA" from Celanese (Irving, TX, USA) and "XYDAR" from Solvay; "MDX6" nylon, and amorphous nylons such as "NOVAMID" X21 from Koninklijke DSM N.V (Heerlen, Netherlands), "SELAR PA" from DuPont; polyetherimides sold under the tradename "ULTEM" by SABIC (Riyadh, Saudi Arabia); poly(vinyl alcohol)s; and polymethylpentene resins available from Mitsui Chemicals (Tokyo, Japan) under the tradename "TPX."

Each polymeric layer of the film can be formed of a thermoplastic material which can include a combination of thermoplastic polymers. In addition to one or more thermoplastic polymers, the thermoplastic material can optionally include a colorant, a filler, a processing aid, a free radical scavenger, an ultraviolet light absorber, and the like. Each polymeric layer of the film can be made of a different of thermoplastic material including a different type of thermoplastic polymer.

The bladder can be made by applying heat, pressure and/or vacuum to a film. In this regard, the primer layer,

the optical element, the textured layer, and the like can be disposed, formed from, or the like prior to, during, and/or after these steps. The bladder (e.g., one or more polymeric layers) can be formed using one or more polymeric materials, and forming the bladder using one or more processing techniques including, for example, extrusion, blow molding, injection molding, vacuum molding, rotary molding, transfer molding, pressure forming, heat sealing, casting, low-pressure casting, spin casting, reaction injection molding, radio frequency (RF) welding, and the like. The bladder can be made by co-extrusion followed by heat sealing or welding to give an inflatable bladder, which can optionally include one or more valves (e.g., one way valves) that allows the bladder to be filled with the fluid (e.g., gas).

Before proceeding to the Examples, it is to be understood that this disclosure is not limited to particular aspects described, and as such may, of course, vary. Other systems, methods, features, and advantages of foam compositions and components thereof will be or become apparent to one with skill in the art upon examination of the following drawings and detailed description. It is intended that all such additional systems, methods, features, and advantages be included within this description, be within the scope of the present disclosure, and be protected by the accompanying claims. It is also to be understood that the terminology used herein is for the purpose of describing particular aspects only, and is not intended to be limiting. The skilled artisan will recognize many variants and adaptations of the aspects described herein. These variants and adaptations are intended to be included in the teachings of this disclosure and to be encompassed by the claims herein.

## TEST METHODS

### 1. SAMPLING PROCEDURES

The predetermined sampling procedure may be: a Component Sampling Procedure, when the component is present as part of an article; a Film Sampling Procedure, when the component is part of a film or layered film; a Neat Material Sampling Procedure, when the component is a material available in a form other than a film. Each of these sampling procedures are described in more detail below.

(A) - Component Sampling Procedure

This procedure may be used to obtain a sample of a structure or component as incorporated in an article of manufacture, such as for example, a bag or a bottle or an article of footwear or the like so that an optical property may be determined for a target surface of the structure or component (e.g., a surface of the article that has one or more optical effects to be characterized). A sample, which includes the structure is obtained as formed into the structure or component or cut from the component, such as by using a blade. This process is performed by identifying the target surface of the structure or component, separating the portion of the structure or component that includes the target surface from the article and, if necessary, removing any materials from the target surface that may interfere with the optical property determination. For example, the target surface may be skinned, abraded, scraped, or otherwise cleaned to remove any upper adhesives, yarns, fibers, foams, and the like that could potentially interfere with the optical property determination.

The resulting component sample includes the target surface of the structure or component as it would be visible in the article. As such, any test using a Component Sampling Procedure may simulate how the structure or component will be visible as part of the article.

In this procedure, the sample is taken at a location along the structure or component that ideally provides a substantially uniform composition and has a necessary or desired surface area (e.g., a surface area large enough to determine an optical property for the target surface). For example, if the target surface is intended to include a multilayer film with an optical element coating, then the sample is taken along a portion of the structure or component that has both the multilayer film and the optical element coating throughout the sample.

(B) -Film Sampling Procedure

This procedure may be used to obtain a sample of the optical element when it is extruded or co-extruded or laminated onto a surface of a film or sheet. In this case, the thermoplastic composition, and optionally an optical element is extruded or co-extruded or laminated as a web or sheet having a substantially constant thickness for the material (within +/-10% of the average material thickness), and cooled to solidify the resulting web or sheet. A sample of the structure or component including the desired layers and coatings is then cut from the resulting web or sheet, having a necessary or desired surface area (e.g., a surface area large enough to determine an optical property for the target surface).

(C) - Neat Material Sampling Procedure

This procedure may be used to obtain a sample of a material of the present disclosure. In this case, the material is provided in neat form, such as flakes, granules, powders, pellets, and the like. If a source of the material is not available in a neat form, the material may be cut, scraped, or ground from an article or from a sheet or web, thereby isolating the material.

## 2. VISIBLE LIGHT TRANSMITTANCE AND REFLECTANCE

Measurements for visible light transmittance and visible light reflectance were performed using a Shimadzu UV-2600 Spectrometer (Shimadzu Corporation, Japan). The spectrometer was calibrated using a standard prior to the measurements. The incident angle for all measurements was zero.

The visible light transmittance was the measurement of visible light (or light energy) that was transmitted through a sample material when visible light within the spectral range of 400 nanometers to 700 nanometers was directed through the material. The results of all transmittance over the range of 400 nanometers to 700 nanometers was collected and recorded. For each sample, a minimum value for the visible light transmittance was determined for this range.

The visible light reflectance was a measurement of the visible light (or light energy) that was reflected by a sample material when visible light within the spectral range of 400 nanometers to 700 nanometers was directed through the material. The results of all reflectance over the range of 400 nanometers to 700 nanometers was collected and recorded. For each sample, a minimum value for the visible light reflectance was determined for this range.

## 3. RECYCLE OPTICAL PROPERTY DIFFERENTIAL

The Recycle Optical Property Differential is a measure of the change in an optical property of a structure before and after recycling. According to this method, a target surface of the structure or component was identified and isolated. The target surface is one that is representative of a visible portion of the component or structure, including the color or optical effects exhibited by the structure or component. For example, if the structure or component is colored using a pigment or dye in the thermoplastic material, the target surface would be identified on a side of the component or structure having a representative amount of pigment or dye in its thermoplastic material; if the structure or component is colored using a coating, then the target surface would have a representative coating across the target surface.

A sample having a target surface measuring one centimeter by one centimeter is then extracted from the structure or component, using one of the Sampling Procedures described in more detail herein. If the Recycle Optical Property Differential is being measured for a composition, such as a thermoplastic composition or a recycled thermoplastic composition, then the composition is extracted using the Neat Material Sampling Procedure, and is melted and solidified to form a plaque having a substantially uniform side having a target surface area measuring one centimeter by one centimeter.

A first optical property is determined for the target surface of the sample. The optical property may be a visible light reflectance, a visible light transmittance, or a color measurement. For example, the optical property may be a minimum or average visible light reflectance as measured over a range of visible light having wavelengths from 400 nanometers to 700 nanometers. In another example, the optical property may be a minimum or average visible light transmittance as measured over a range of visible light having wavelengths from 400 nanometers to 700 nanometers. The measured value is recorded as the First Optical Property Value.

After the first optical property is determined for the target surface of the sample, the sample is then recycled, to form a recycled thermoplastic composition. The method for recycling the sample can include any means of process the sample (grinding, cutting, shredding, etc. as described herein) into a plurality of fragments. The method for recycling the sample does not include any means of chemically modifying or otherwise reducing, separating, or removing any colorant from the sample or the recycled thermoplastic composition. The method for recycling the sample may also include increasing the temperature of the recycled thermoplastic composition to soften or melt the recycled thermoplastic composition. The resulting recycled thermoplastic composition comprises a solid or molten composition compositionally comprising the same materials as the sample.

A second sample is formed from the recycled thermoplastic composition. The recycled thermoplastic composition is softened or melted and solidified to form a plaque having a substantially uniform side having a surface area measuring one centimeter by one centimeter. A second optical property is determined for the target surface of the second sample. The optical property measurement is performed using the same test method as for the respective first optical property. The measured value is recorded as the Second Optical Property Value.

The Recycle Optical Property Differential for the sample is calculated using the following formula:

$$\frac{|(First\ Optical\ Property\ Value\ -\ Second\ Optical\ Property\ Value)|}{First\ Optical\ Property\ Value} \times 100\%$$

## EXAMPLES

### 1. TRANSMITTANCE OF RECYCLED STRUCTURALLY-COLORED FILM

In this Example, a film was made from a thermoplastic polyurethane base material, onto which an optical element was deposited that imparted a blue structural color to the film. The film was ground to form a recycled thermoplastic composition. The recycled thermoplastic composition was combined with virgin thermoplastic polyurethane (colorless) to provide three sample compositions comprising 5 percent, 10 percent, and 15 percent by weight of the recycled thermoplastic composition. A control sample composition was made for comparison, comprising thermoplastic polyurethane (colorless) without any of the recycled thermoplastic composition. The three sample compositions and the control composition were extruded to provide extruded film samples. Figure 3 shows the four sample films. The transmittance of each film sample was evaluated qualitatively, and it was observed that the transmittance of the films having recycled thermoplastic composition was similar to the transmittance of the control.

It should be emphasized that the above-described aspects of the present disclosure are merely possible examples of implementations, and are set forth only for a clear understanding of the principles of the disclosure. Many variations and modifications may be made to the above-described aspects of the disclosure without departing substantially from the spirit and principles of the disclosure. All such modifications and variations are intended to be included herein within the scope of this disclosure.

It should be noted that ratios, concentrations, amounts, and other numerical data may be expressed herein in a range format. It is to be understood that such a range format is used for convenience and brevity, and thus, should be interpreted in a flexible manner to include not only the numerical values explicitly recited as the limits of the range, but also to include all the individual numerical values or sub-ranges encompassed within that range as if each numerical value and sub-range is explicitly recited. To illustrate, a concentration range of "about 0.1% to about 5%" should be interpreted to include not only the explicitly recited concentration of about 0.1 wt% to about 5 wt%, but also include individual concentrations (e.g., 1%, 2%, 3%, and 4%) and the sub-ranges (e.g., 0.5%, 1.1%, 2.2%, 3.3%, and 4.4%) within the indicated range. In an aspect, the term "about" can include traditional rounding according to significant figures of the numerical value. In addition, the phrase "about 'x' to 'y'" includes "about 'x' to about 'y'".

The term "providing", such as for "providing an article" and the like, when recited in the claims, is not intended to require any particular delivery or receipt of the provided item. Rather, the term "providing" is merely used to recite items that will be referred to in subsequent elements of the claim(s), for purposes of clarity and ease of readability.

Many variations and modifications may be made to the above-described aspects. All such modifications and variations are intended to be included herein within the scope of this disclosure and protected by the following claims.

The present disclosure is continued in the following numbered Clauses.

1. A method of forming an article, the method comprising:
forming a first article comprising a first composition, wherein the first composition comprises from about 1 weight percent to about 100 weight percent of a recycled thermoplastic composition, wherein said recycled thermoplastic composition comprises a first thermoplastic material and a plurality of first optical elements or fragments thereof that are dispersed therein.

2. The method of clause 1, further comprising applying a second optical element to a side of said first article to impart a structural color to said side.

3. The method of clause 1, further comprising:
transforming a structurally-colored second article into the recycled thermoplastic composition, wherein the structurally-colored second article comprises the first thermoplastic material and a side of the structurally-colored second article has an optical element disposed thereon that imparts a structural color to said side.

4. The method of clause 1, wherein the first optical elements and the fragments in the first composition do not impart an optical effect to the first article visible to a viewer having 20/20 visual acuity and normal color vision from a distance of about 1 meter from the first article.

5. The method of clause 3, wherein:

the side of the second article with the optical element has a second minimum visible light transmittance or second minimum visible light reflectance or both, as measured over the range of visible light having wavelengths from 400 nanometers to 700 nanometers; and

the first article has a first minimum visible light transmittance or first minimum visible light reflectance or both

that is less than 40 percent of the second minimum visible light transmittance or the second minimum visible light reflectance, or both, respectively.

6. The method of clause 3, wherein:

the side of the second article without the optical element has a third minimum visible light transmittance or third minimum visible light reflectance or both, as measured over the range of visible light having wavelengths from 400 nanometers to 700 nanometers; and
the first article has a first minimum visible light transmittance or first minimum visible light reflectance or both that is within about 10 percent of the third minimum visible light transmittance or the third minimum visible light reflectance, or both, respectively.

7. The method of clause 3, wherein the transforming step comprises: grinding the second article or portion thereof; cutting the second article or portion thereof; melting the second article or portion thereof; or a combination of the foregoing.
8. The method of clause 3, wherein the recycled thermoplastic composition is in solid or molten form.
9. The method of clause 3, wherein the recycled thermoplastic composition is in the form of a pellet.
10. The method of clause 3, wherein the recycled thermoplastic composition comprises a plurality of fragments of the second article.
11. The method of clause 1 or clause 3, further comprising mixing the recycled thermoplastic composition with an additional quantity of the first thermoplastic material.
12. The method of clause 1 or clause 3, further comprising increasing the temperature of the recycled thermoplastic composition to a temperature that is above the softening point of the first thermoplastic material to provide a molten recycled thermoplastic composition.
13. The method of clause 1 or clause 3, wherein the first thermoplastic material comprises essentially no colorants.
14. The method of clause 1 or clause 3, wherein the first thermoplastic material comprises a colorant.
15. The method of clause 14, wherein the colorant imparts a second color to the second article in the absence of the optical element and imparts a first color to the first article wherein the second color and the first color have one or more of the same hue, value, or chroma.
16. The method of clause 1 or clause 3, wherein the method does not include altering, modifying, reducing, or removing a colorant.
17. The method of clause 1 or clause 3, wherein the recycled thermoplastic composition, the first composition, or both comprises from about 0.01 percent to about 20 percent of the first optical elements or fragments, based on the total weight of the recycled composition or the first composition, respectively.
18. The method of clause 1 or clause 3, wherein the plurality of first optical elements or fragments comprise from about 1 percent to about 80 percent fragments, based on the total weight of the plurality of optical elements or fragments.
19. The method of clause 1 or clause 3, wherein the plurality of first optical elements or fragments have an average size of less than 400 nanometers as measured along the largest dimension.
20. The method according to any one of clauses 1 to 19, wherein the second article, the first article, or both, is a film or sheet.

## Claims

**1.** A recycled thermoplastic composition, comprising:

a plurality of optical elements or fragments of optical elements dispersed in a first thermoplastic material, wherein the optical elements or fragments of optical elements do not impart an optical effect to the recycled thermoplastic composition.

**2.** The recycled thermoplastic composition of claim 1, wherein the fragments of optical elements are ground, crushed or shredded from optical elements.

**3.** The recycled thermoplastic composition of claim 1 or claim 2, wherein the optical elements and the fragments of optical elements are present as layered structures having two or more layers stacked in a z-dimension, orthogonal to the plane of the layered stack.

4. The recycled thermoplastic composition of claim 3, wherein each layer independently comprises a material selected from: the transition metals, the metalloids, the lanthanides, and the actinides, as well as nitrides, oxynitrides, sulfides, sulfates, selenides, and tellurides of these.

5. The recycled thermoplastic composition of claim 3 or claim 4, wherein one or more layers are made of silicon dioxide, titanium dioxide, zinc sulfide, magnesium fluoride, tantalum pentoxide, aluminum oxide, or a combination thereof.

6. The recycled thermoplastic composition of any preceding claim, wherein the first thermoplastic material includes a thermoplastic elastomer.

7. The recycled thermoplastic composition of claim 6, wherein the first thermoplastic material includes one or more of thermoplastic polyurethanes, thermoplastic polyethers, thermoplastic polyesters, thermoplastic polyamides, thermoplastic polyolefins, and thermoplastic co-polymers thereof.

8. The recycled thermoplastic composition of any preceding claim, having one or more of a visible light reflectance or transmittance or color measurement, that is within 10 percent of the visible light reflectance or transmittance or color measurement, respectively, of the composition except without the optical element or fragments of optical elements.

9. A composition, comprising the recycled thermoplastic composition of any preceding claim and a second thermoplastic material.

10. The composition of claim 9, wherein the second thermoplastic material is the same material as the first thermoplastic material.

11. The composition of claim 9, wherein the second thermoplastic material is a different material from the first thermoplastic material.

12. The composition of any one of claims 8 to 11, comprising at least 25 percent by weight of the second thermoplastic material.

13. An article or a component thereof, comprising the recycled thermoplastic composition of any one of the preceding claims.

14. The article or component of claim 13, which is colored with one or more dyes or pigments, or which is printed with a pattern.

15. The article or component of any one of claims 11 to 14, which is an article formed from the recycled thermoplastic composition, wherein a further optical element is disposed on the article to impart structural color to the article.

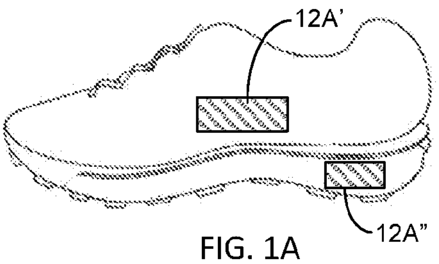

FIG. 1A

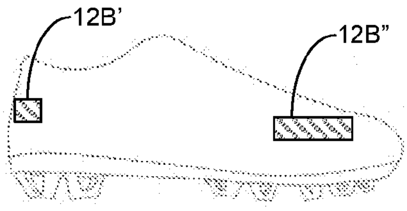

FIG. 1B

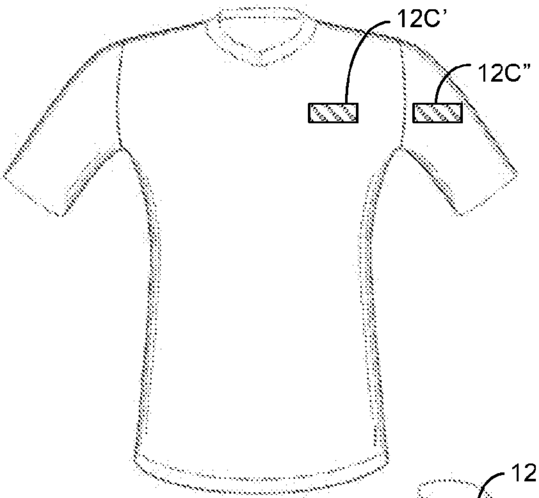

FIG. 1C

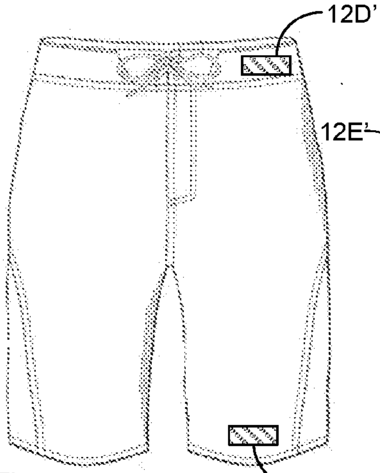

FIG. 1D

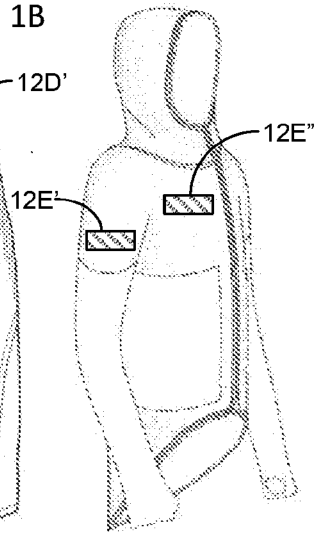

FIG. 1E

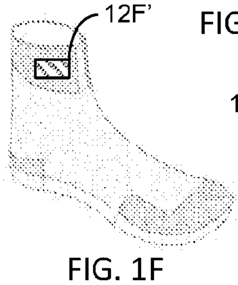

FIG. 1F

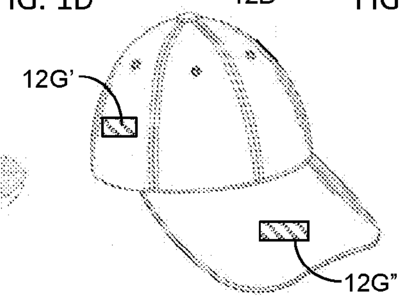

FIG. 1G

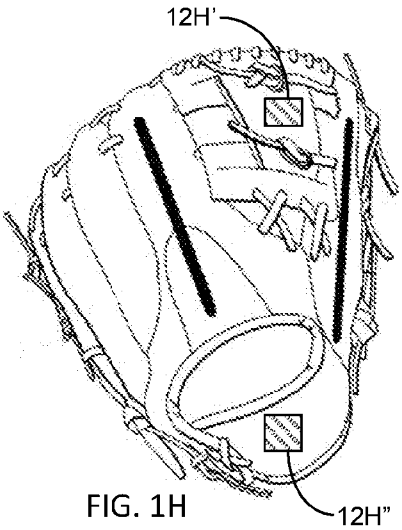

FIG. 1H

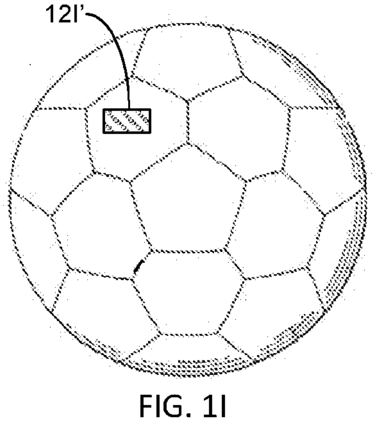

FIG. 1I

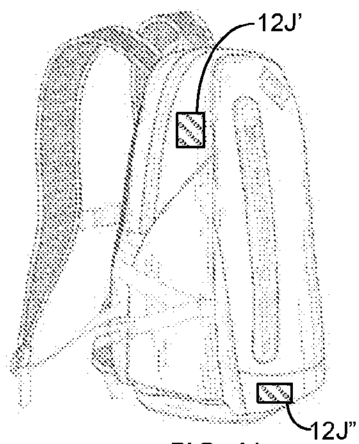

FIG. 1J

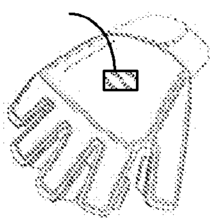
FIG. 1K

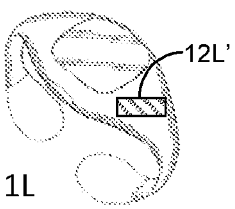

FIG. 1L

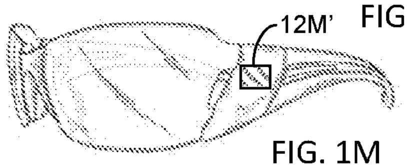

FIG. 1M

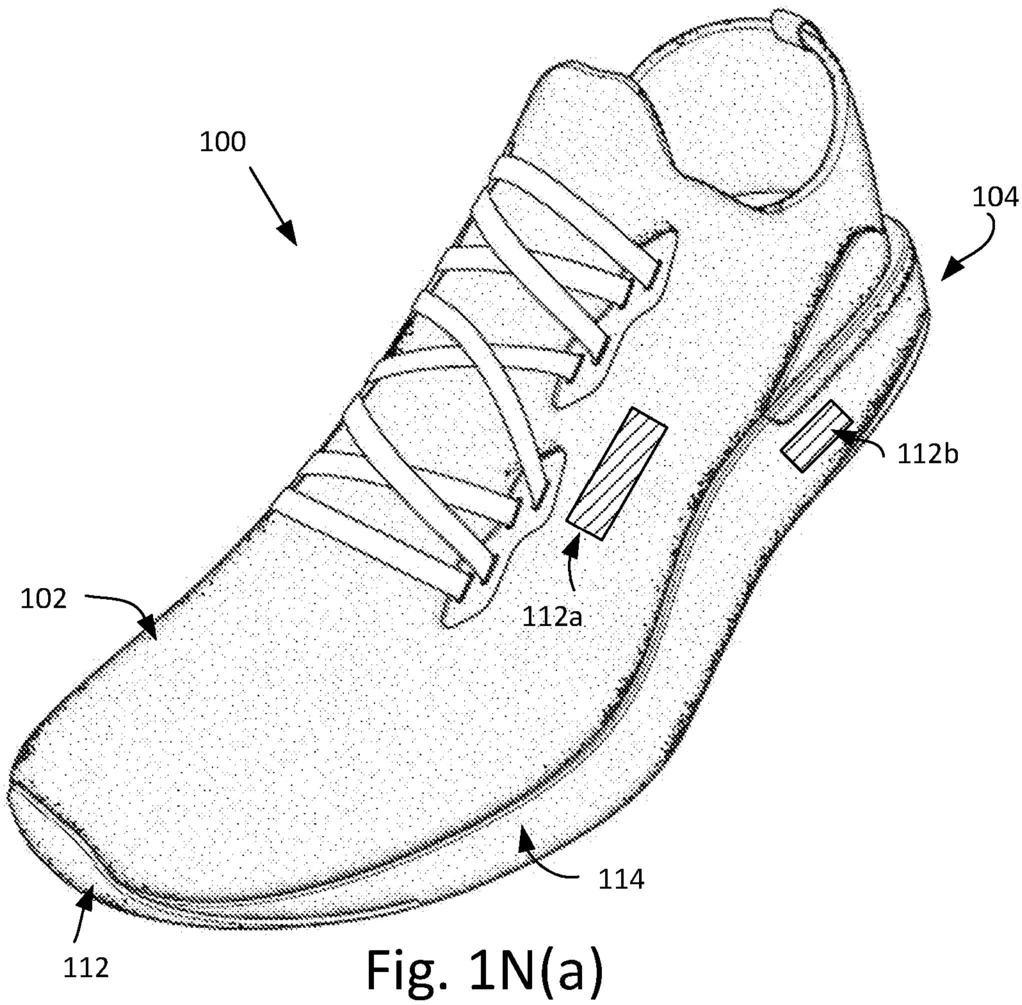


Fig. 1N(a)

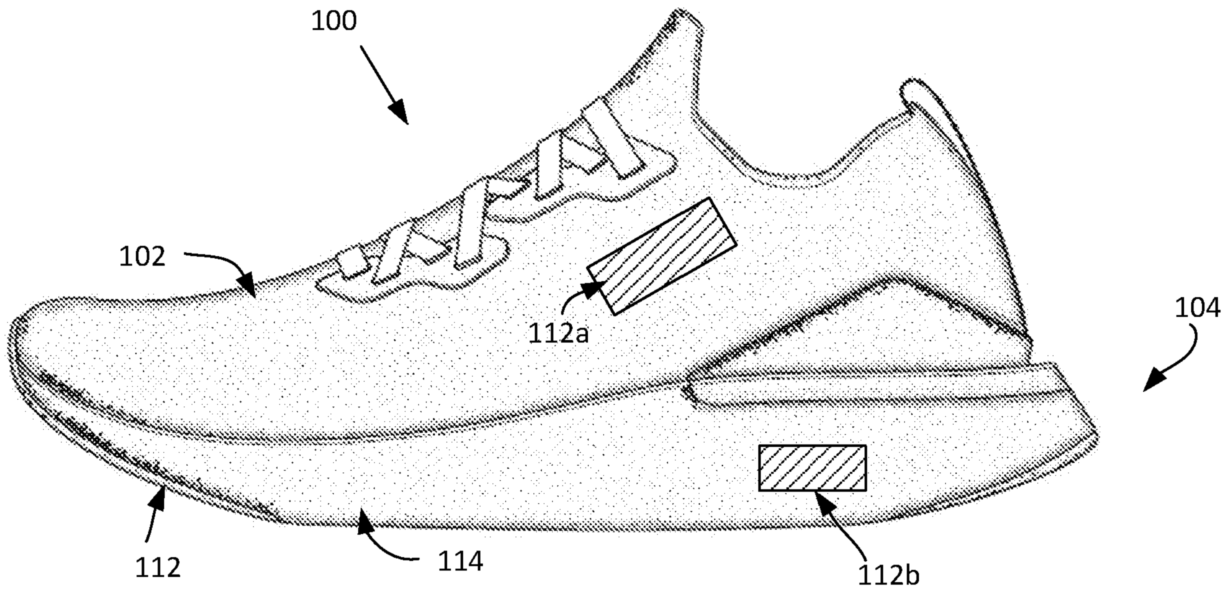


Fig. 1N(b)

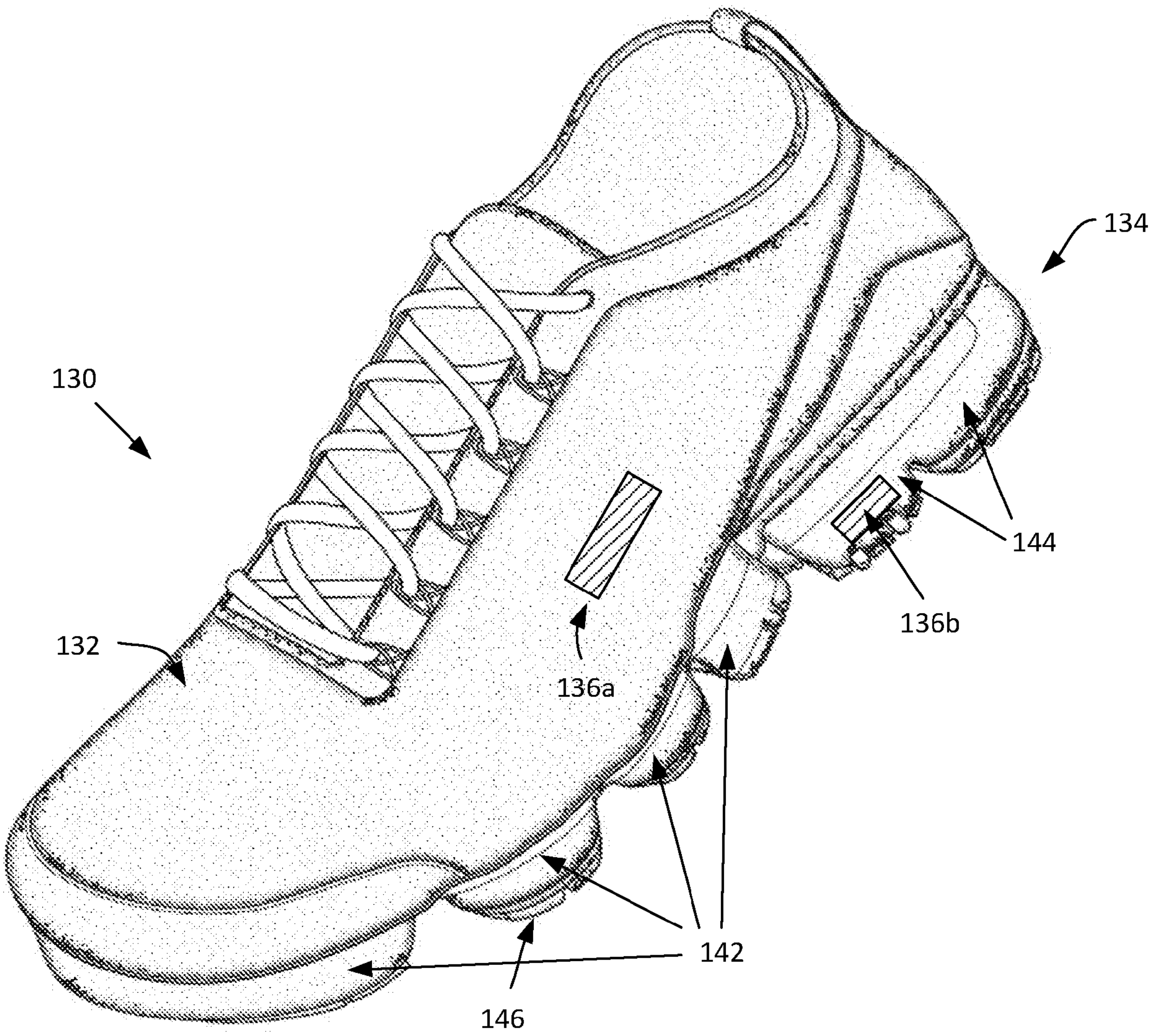


Fig. 1O(a)

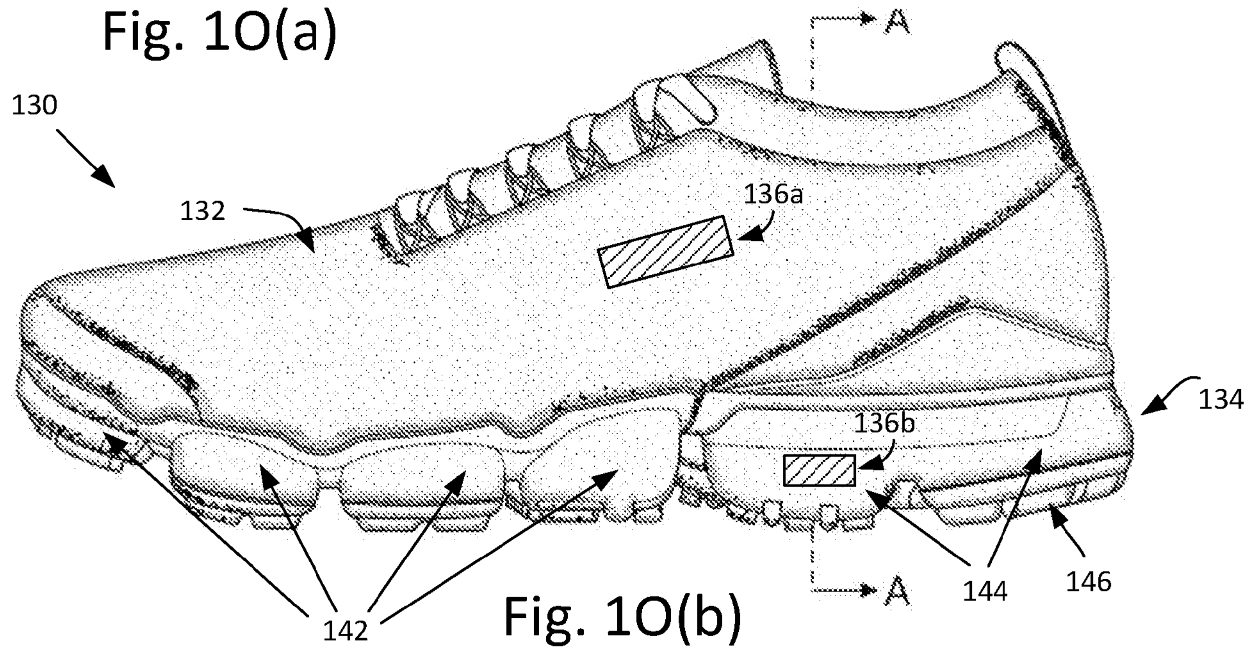


Fig. 1O(b)

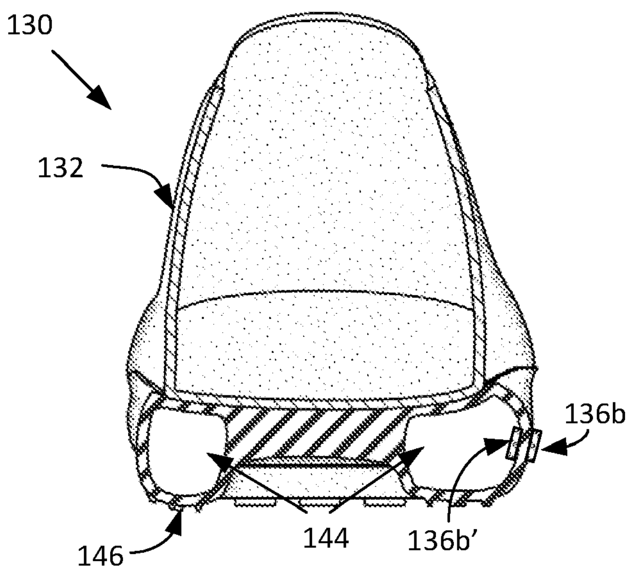


Fig. 1O(c)

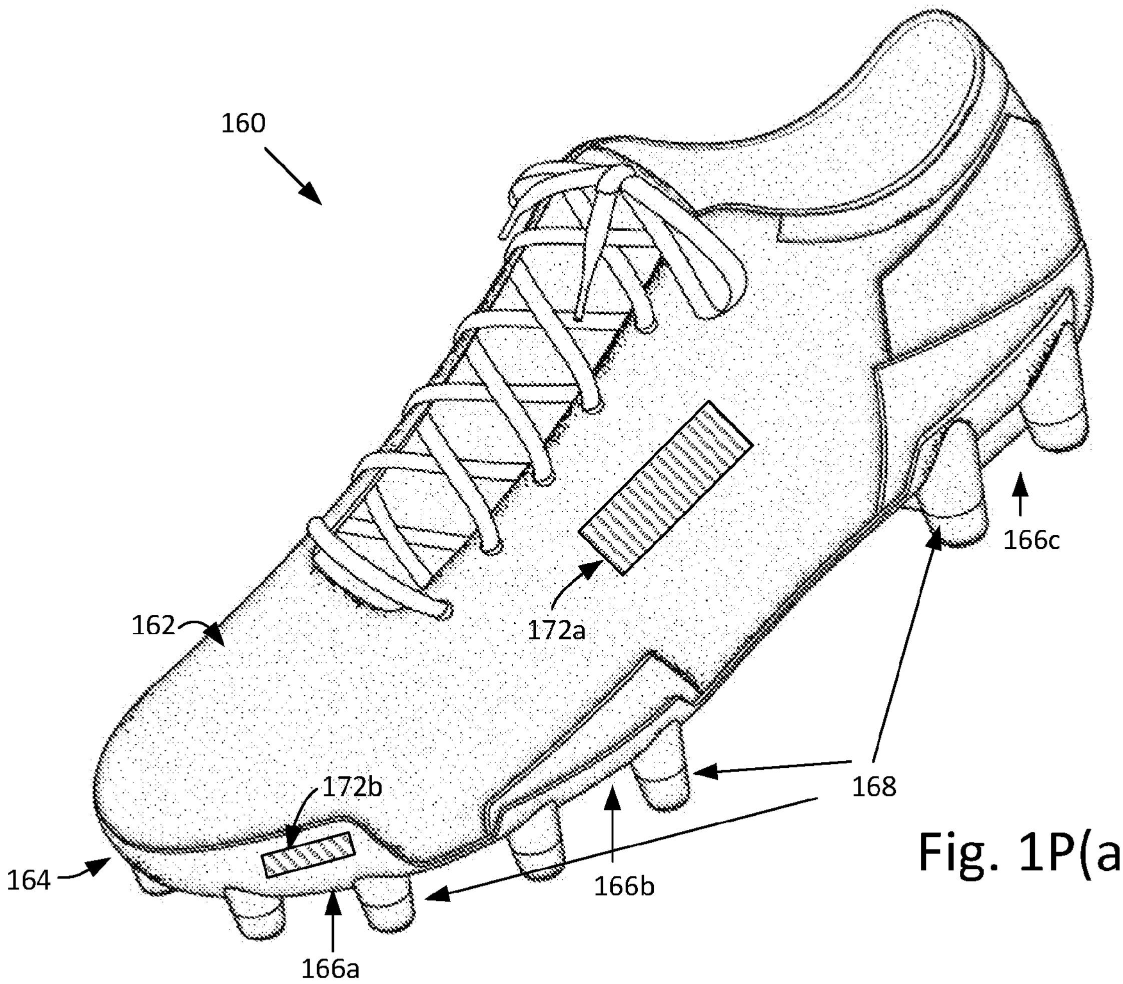


Fig. 1P(a)

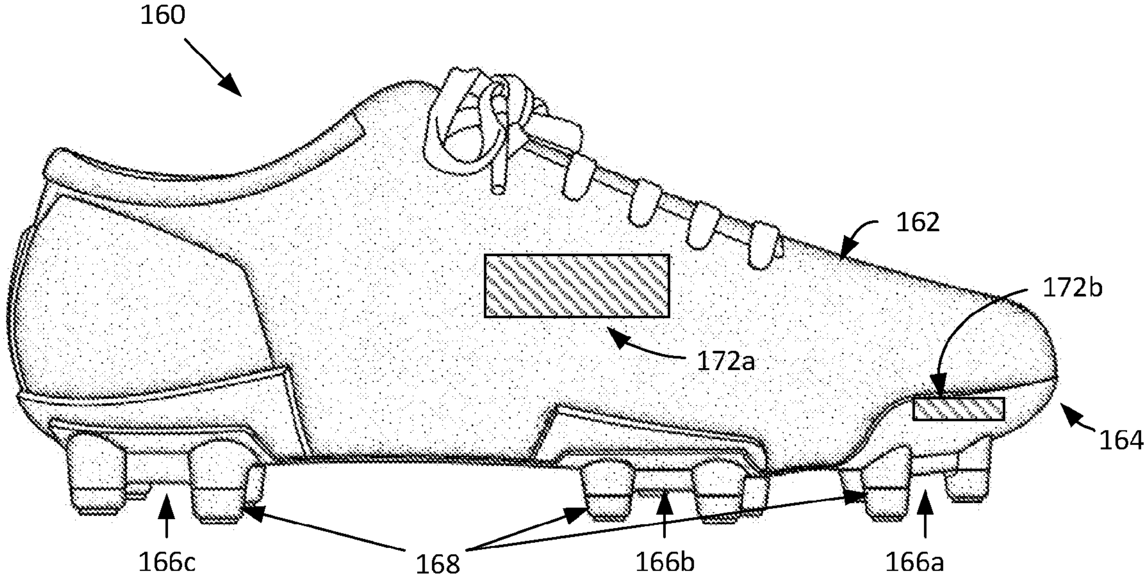


Fig. 1P(b)

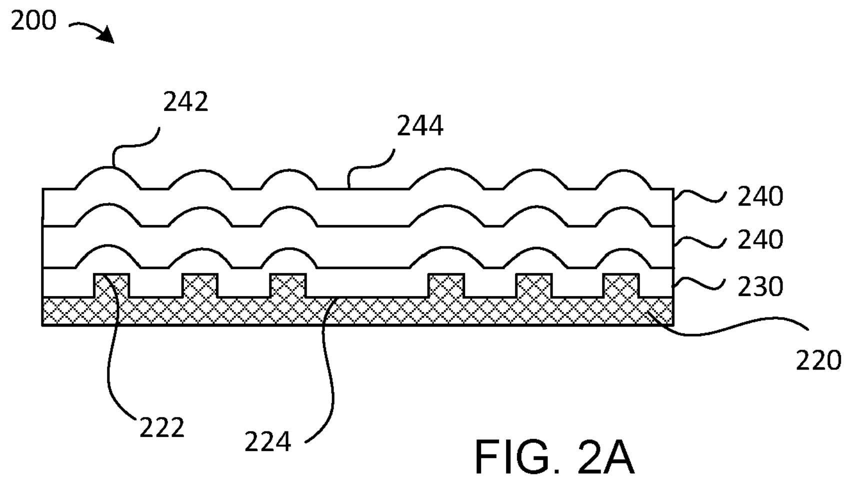
200
242
244
240
240
230
220
222
224

FIG. 2A

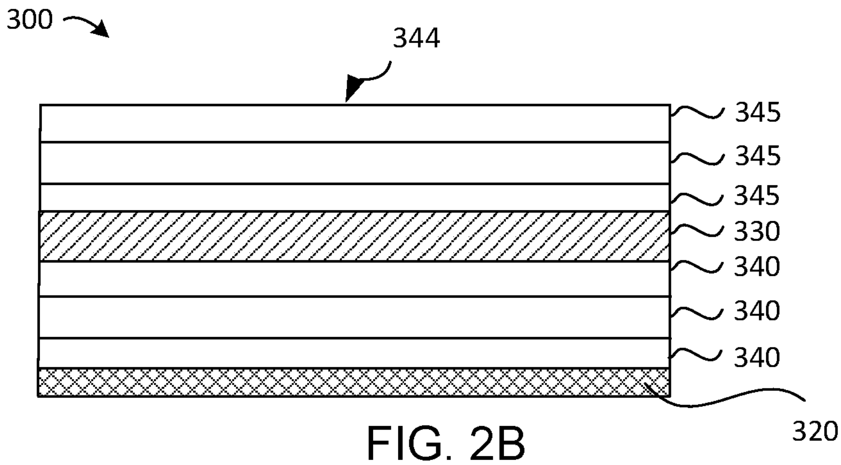
300
344
345
345
345
330
340
340
340
320

FIG. 2B

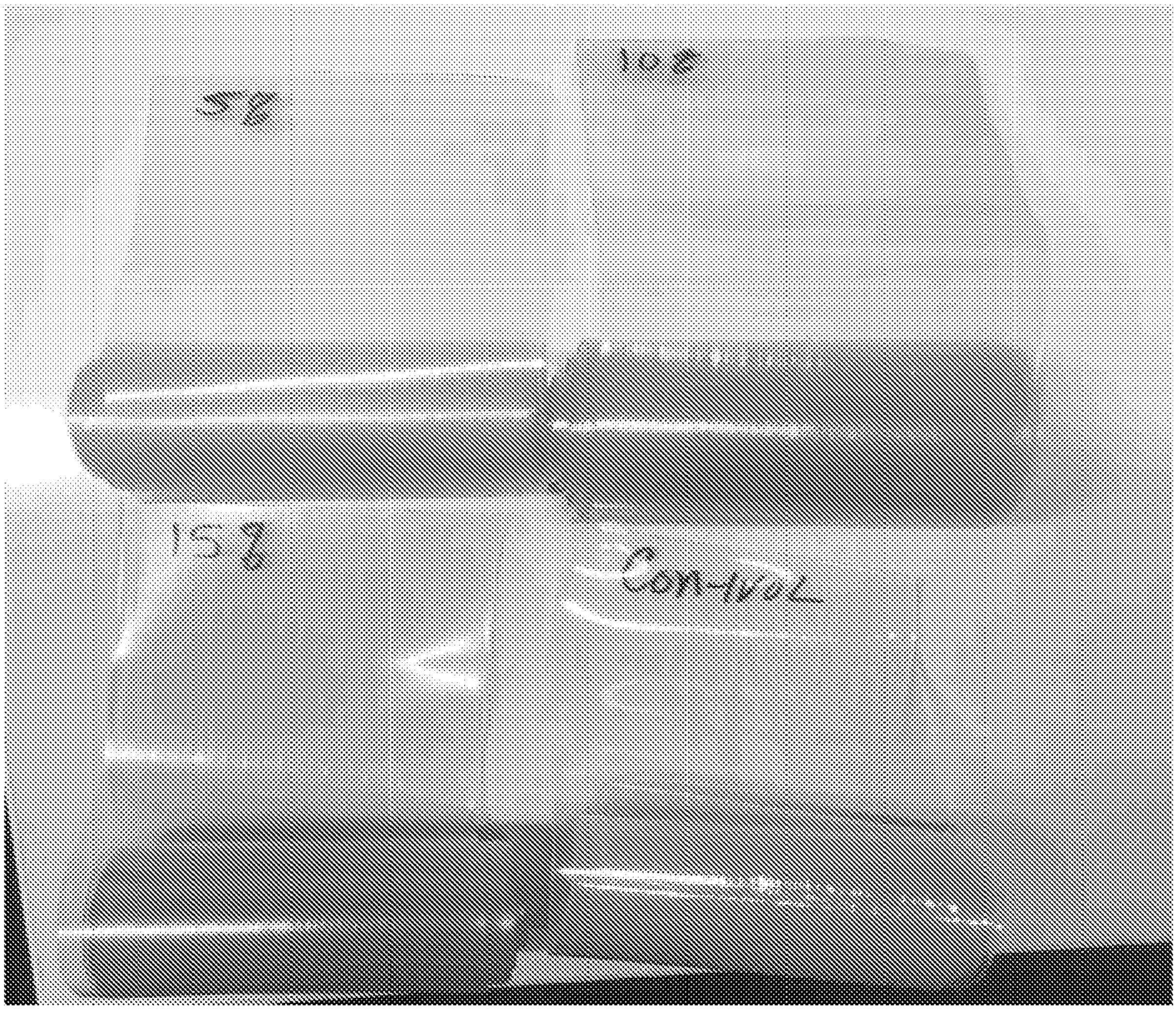


FIG. 3

Europäisches Patentamt
European Patent Office
Office européen des brevets

# EUROPEAN SEARCH REPORT

Application Number
EP 23 18 5522

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 624 026 A1 (TOYO SEIKAN KAISHA LTD [JP]) 8 February 2006 (2006-02-08)<br>* claims 1,4,17,19 *<br>* paragraph [0114] *<br>* paragraph [0339] *<br>----- | 1-15 | INV.<br>C08J11/06<br>B29B17/00 |
| A | EP 2 012 148 A1 (TOYO SEIKAN KAISHA LTD [JP]) 7 January 2009 (2009-01-07)<br>* figure 1 *<br>* paragraph [[0014]] - paragraph [[0016]] *<br>* paragraph [0037] *<br>* paragraph [0118] *<br>----- | 1-15 | |
| | | | TECHNICAL FIELDS SEARCHED (IPC) |
| | | | C08J<br>B29B |

The present search report has been drawn up for all claims

1

| Place of search | Date of completion of the search | Examiner |
|---|---|---|
| The Hague | 18 July 2023 | Queste, Sébastien |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
..........................................................................................................
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 23 18 5522

This annex lists the patent family members relating to the patent documents cited in the above-mentioned European search report. The members are as contained in the European Patent Office EDP file on
The European Patent Office is in no way liable for these particulars which are merely given for the purpose of information.

18-07-2023

| Patent document cited in search report | Publication date | Patent family member(s) | Publication date |
|---|---|---|---|
| EP 1624026 A1 | 08-02-2006 | EP 1624026 A1 | 08-02-2006 |
| | | KR 20060012611 A | 08-02-2006 |
| | | US 2006263553 A1 | 23-11-2006 |
| | | WO 2004101686 A1 | 25-11-2004 |
| EP 2012148 A1 | 07-01-2009 | CN 102681065 A | 19-09-2012 |
| | | EP 2012148 A1 | 07-01-2009 |
| | | KR 20080109837 A | 17-12-2008 |
| | | KR 20130079659 A | 10-07-2013 |
| | | MY 149941 A | 15-11-2013 |
| | | US 2009174944 A1 | 09-07-2009 |
| | | US 2012113517 A1 | 10-05-2012 |
| | | US 2013300008 A1 | 14-11-2013 |
| | | WO 2007119773 A1 | 25-10-2007 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- US 62824487
- US 62916282
- EP 2462908 A
- US 5969076 A
- US 4523005 A
- US 5334690 A
- US 6897281 B
- US 7476705 B
- US 6127026 A
- US 5713141 A
- US 5952065 A
- US 6082025 A
- US 6013340 A
- US 6203868 B
- US 6321465 B